# EUROPÄISCHE PATENTSCHRIFT

(11) **EP 1 668 839 B1**
(45) Veröffentlichungstag und Bekanntmachung des Hinweises auf die Patenterteilung: **19.12.2018**
(21) Anmeldenummer: 04816350.5
(22) Anmeldetag: 22.12.2004
(51) Int. Cl.: H04L 12/28, H04W 88/02, H04W 88/08

(54) **VERFAHREN, TELEKOMMUNIKATIONSSYSTEM UND TELEKOMMUNIKATIONSHANDAPPARAT FÜR DIE DRAHTLOSE KOMMUNIKATION UND TELEKOMMUNIKATION IN EINER "SMART HOME"-UMGEBUNG**
METHOD, TELECOMMUNCATIONS SYSTEM AND TELECOMMUNICATIONS HANDSET FOR WIRELESS COMMUNICATION AND TELECOMMUNICATION IN A "SMART HOME" ENVIRONMENT
PROCEDE, SYSTEME DE TELECOMMUNICATION ET COMBINE DE TELECOMMUNICATION POUR LA COMMUNICATION SANS FIL ET TELECOMMUNICATION DANS UN ENVIRONMENT "SMART HOME"

(30) Priorität: 22.12.2003 DE 10360532
(43) Veröffentlichungstag der Anmeldung: 14.06.2006
(73) Patentinhaber: Gigaset Communications GmbH, 40549 Düsseldorf (DE)
(72) Erfinder: ARETZ, Kurt, 46419 Isselburg (DE); BIEDERMANN, Rolf, 48683 Ahaus (DE); KRUK, Anton, 46499 Hamminkeln (DE); MÖSKER, Volker, 46419 Isselburg (DE); NIEDER, Stefan, 46419 Isselburg (DE); SCHLIWA, Peter, 46499 Hamminkeln (DE); WEDI, Christoph, 46395 Bocholt (DE); VAN DE LOGT, Marco, 47574 Goch (DE)
(74) Vertreter: Michalski Hüttermann & Partner Patentanwälte mbB
(86) Internationale Anmeldenummer: PCT/EP2004/053674
(87) Internationale Veröffentlichungsnummer: WO 2005/062535

(56) Entgegenhaltungen:
- US-A1- 2001 012 338
- US-A1- 2001 012 338
- US-A1- 2003 035 523
- US-A1- 2003 035 523
- US-A1- 2003 192 053
- US-A1- 2003 192 053

## Beschreibung

Unter dem Begriff "Smart Home" zu deutsch "Intelligentes Haus/Gebäude" oder "Service-Haus/Gebäude" wird die totale Vernetzung von Unterhaltungselektronik, Kommunikationstechnik und Haustechnik bis hin zur teilweisen Automation in einem (Einfamilien-)Haus bzw. einem Gebäude (Mehrfamilienhaus, Hochhaus, Fabrikgebäude, Bürogebäude, Wohnblock etc.) verstanden, bei der alle Geräte und Einrichtungen in dem Haus/Gebäude über ein lokales (inneres) Netzwerk miteinander verbunden und zugleich an ein globales (äußeres) Netzwerk angeschlossen sind und bei der es im Zuge der allgemeinen technischen Konvergenz mehr und mehr zu einer Verschmelzung der genannten Vernetzungstechniken kommt.

Eine Schlüsselrolle bei diesem Vernetzungsprinzip im Heimbereich kommt dabei sicherlich der drahtlosen Kommunikationstechnik zu und insbesondere solchen Technologien, die für das Vernetzungsprinzip einfache, schnelle, anwenderfreundliche und nicht zuletzt vor allem kostengünstige Lösungen bieten. Zu nennen sind diesbezüglich insbesondere alle Schnurlos-Technologien mit denen sich der "Smart Home"-Besitzer ein eigenes lokales Netzwerk aufbauen kann, um in einem kleinen Umkreis von bis zu 300 Meter, so genannte "Hot-Spots", von jedem aktuellen Aufenthaltsort innerhalb dieses "Hot-Spots" Zugriff auf das globale Netzwerk, z.B. das Internet, zu haben. Als potentielle, den angegebenen Kurzstreckenfunkbereich abdeckende Schnurlos-Technologien kommen dabei vorzugsweise die WLAN-Technologie (**W**ireless **L**ocal **A**rea **N**etwork) gemäß dem IEEE-Standard 802.11 (a...), die DECT-Technologie (**D**igital **E**nhanced **C**ordless **T**elecommunication) gemäß dem ETSI-Standard ETS 300 175-1...7, die Bluetooth-Technologie gemäß dem Bluetooth-Standard (BT Spec. v1.2), die WiMax-Technologie gemäß dem IEEE-Standard 802.16, die ZigBee-Technologie gemäß dem IEEE-Standard 802.15.4 und/oder derzeit im Einsatz befindliche Mobilfunk-Technologien, wie das GSM- oder 3GPP-Funksystem, in Verbindung mit einem der genannten Kurzstreckenfunkstandards in Betracht.

Die mit der drahtlosen Kommunikationstechnik vernetzten Geräte und Einrichtungen bilden ein Telekommunikationssystem in dem "Intelligenten Haus /Gebäude", das in der Lage ist, eine Vielzahl von Funktionen wie zum Beispiel Betriebs- und Kontrollfunktionen, Sicherheits- und Überwachungsfunktionen, Gesundheits- und Pflegefunktionen, Steuerungsfunktionen, Logistikfunktionen sowie Kommunikations- und Unterhaltungsfunktionen zu übernehmen.

In einem derartig mittels drahtloser Kommunikationstechnik intelligent vernetzten Haus/Gebäude werden zu diesem Zweck zwischen den am "Smart Home"-Szenario beteiligten Geräten und Einrichtungen innerhalb (Kommunikation) oder außerhalb (Telekommunikation) des vernetzten Hauses/Gebäudes in der Regel Text-, Audio-, Video- und/oder Steuerungsdaten übertragen, die dadurch als Datenquelle und/oder Datensenke fungieren.

Die der Erfindung zugrunde liegende Aufgabe besteht darin, ein Verfahren, ein Telekommunikationssystem und einen Telekommunikationshandapparat für die drahtlose Kommunikation und Telekommunikation in einer "Smart Home"-Umgebung anzugeben, bei dem die zum Thema "Smart Home" diskutierten Szenarien, in denen in der Regel Text-, Audio-, Video- und/oder Steuerungsdaten zwischen einer Datenquelle und einer Datensenke übertragen werden, einfach und schnell sowie bediener- und bedienungsfreundlich durchgeführt werden können.

Diese Aufgabe wird durch die im Anspruch 1 angegebenen Merkmale bezüglich eines Verfahrens für die drahtlose Kommunikation und Telekommunikation in einer "Smart Home"-Umgebung gelöst.

Außerdem wird diese Aufgabe durch die im Anspruch 21 angegebenen Merkmale bezüglich eines Telekommunikationssystems für die drahtlose Kommunikation und Telekommunikation in einer "Smart Home"-Umgebung gelöst.

Weiterhin wird diese Aufgabe durch die im Anspruch 41 angegebenen Merkmale bezüglich eines Telekommunikationshandapparates für die drahtlose Kommunikation und Telekommunikation in einer "Smart Home"-Umgebung gelöst.

Die der Erfindung zugrunde liegende Idee besteht darin, dass ein vorzugsweise als Schnurlos-Telefonhandapparat oder als Mobiltelefon ausgebildetes Mobilteil eines Telekommunikationssystems für die drahtlose Kommunikation und Telekommunikation in einer "Smart Home"-Umgebung - bestehend aus einer an ein leitungs- und/oder paketvermitteltes Netz angeschlossenen Basisstation zum Führen von Telefongesprächen und Senden/Empfangen von Text-, Audio-, Video- und/oder Steuerungsdaten und mindestens einem Mobilteil zum Führen von Telefongesprächen und/oder Senden/Empfangen von Text-, Audio-, Video- und/oder Steuerungsdaten, die über eine Luftschnittstelle miteinander verbunden sind, - Steuerkommandos erzeugt und diese im Zuge eines Meldungsverkehrs zwischen den an der drahtlosen Kommunikation bzw. Telekommunikation beteiligten Einrichtungen, z.B. eingebettet in HF- bzw. Funksignale, über die Luftschnittstelle zielgerichtet aussendet, wobei mit Hilfe dieser Steuerungskommandos in einer Datenquelle gespeicherte Text-, Audio-, Video- und/oder Steuerungsdaten angesprochen werden und deren Ausgabe, Übergabe oder Auslagerung an eine Datensenke bzw. deren Ausgabe an der Datenquelle veranlasst und bewirkt wird.

Unter der Prämisse, dass das erwähnte Mobilteil und die erwähnten Einrichtungen selbst sowohl Datenquelle als auch Datensenke sein können, ergibt sich folgendes Szenario gemäß dem mit Hilfe der Steuerungskommandos
**(i)** in der Basisstation und/oder in dem Mobilteil terminierte Text-, Audio-, Video- und/oder Steuerungsdaten angesprochen und diese Daten von der Einrichtung, in der die Daten terminiert sind, an eine INTERN-Datenquelle/-senke mit einem dieser zugeordneten ersten Mobilteil und/oder eine mit der Basisstation verbundene, dem leitungs- und/oder paketvermittelten Netz zugeordnete EXTERN-Datenquelle/-senke zu deren Ausgabe, Übergabe oder Auslagerung unmittelbar - d.h. beispielsweise ohne Zwischenschaltung eines weiteren Mobilteils, der Basisstation und/oder einer sonstigen Einrichtung - oder mittelbar - d.h. beispielsweise mit Zwischenschaltung eines weiteren Mobilteils, der Basisstation und /oder einer sonstigen Einrichtung - gesendet werden und/oder
**(ii)** in dem Mobilteil und/oder in der INTERN-Datenquelle/- senke terminierte Text-, Audio-, Video- und/oder Steuerungsdaten angesprochen und diese Daten von der Einrichtung, in der die Daten terminiert sind, über das der INTERN-Datenquelle/-senke zugeordnete erste Mobilteil und/oder der Basisstation an das Mobilteil, die EXTERN Datenquelle/-senke, die INTERN Datenquelle/-senke zu deren Ausgabe, Übergabe oder Auslagerung unmittelbar - d.h. beispielsweise ohne Zwischenschaltung eines weiteren Mobilteils, der Basisstation und/oder einer sonstigen Einrichtung - oder mittelbar - d.h. beispielsweise mit Zwischenschaltung eines weiteren Mobilteils, der Basisstation und /oder einer sonstigen Einrichtung - gesendet werden.

Das die Steuerungskommandos erzeugende und aussendende Mobilteil ist beispielsweise ein in herkömmlicher Weise mit einer komfortablen Bedienoberfläche (z.B. Tastatur, Display, Menüsteuerung, Sprachsteuerung etc.) ausgestatteter Schnurlos-Telefonhandapparat bzw. ausgestattetes Mobiltelefon mit einer zusätzlichen für den vorstehend genannten Zweck ausgelegte Steuerungsfunktionalität. Der/das mit dieser Funktionalität ergänzte Schnurlos-Telefonhandapparat/Mobiltelefon kann somit einerseits wie gehabt als mobiles Kommunikationsinstrument und andererseits als universell einsetzbares Steuerungs- bzw. Fernbedienungsinstrument in der "Smart Home"-Umgebung benutzt werden, wodurch sich für den Benutzer/Bediener des Schnurlos-Telefonhandapparates bzw. Mobiltelefons der Bedienkomfort verbessert wird. Er braucht für die diversen "Smart Home"-Szenarien, wie z.B. Telefonie, Intelligente Steuerung von Geräten bzw. Einrichtungen im "Residential"-Bereich (z.B. SOHO-Bereich; **S**mall **O**ffice/**HO**me) etc., nur noch ein einziges Gerät und nicht wie gemäß dem Stand der Technik mehrere Geräte.

In beiden genannten Fällen, Schnurlos-Telefonhandapparat oder Mobiltelefon, ist die erwähnte Basisstation gemäß den Ansprüchen 6, 7, 26, 27, 46 und 47 eine Schnurlos-Basisstation. Die Anbindung des Mobiltelefons an diese Schnurlos-Basisstation erfolgt dabei über eine Schnurlos-Schnittstelle, z.B. eine "Bluetoth"-Schnittstelle.

Zusätzliche vorteilhafte Weiterbildungen der Erfindung sind in den übrigen Unteransprüchen und in der Beschreibung des Ausführungsbeispiels der Erfindung angegeben. Hierzu zählen insbesondere:
Die Steuerungsfunktionalität des Mobilteils kann über die Steuerungskommandos hinaus noch auf Kontrollkommandos ausgedehnt werden (Ansprüche 2, 22, 42), mit denen das Bedienkomfort für die Ausgabe, Übergabe oder Auslagerung der Text-, Audio-, Video- und/oder Steuerungsdaten verbessert wird. Typische Kontrollkommandos sind beispielsweise im Zusammenhang mit der Wiedergabe/Ausgabe der Daten die Kommandos "Vor- und Zurück", "Beenden", "Unterbrechen/Pause" "Anhalten" "Fortsetzen" etc. und im Zusammenhang mit der Übergabe und Auslagerung die Kommandos "Abbrechen", "Löschen", "Kopieren" etc.

Um in einer "Smart Home"-Umgebung des Telekommunikationssystems die physikalische Ressourcen für die drahtlose Kommunikation und Telekommunikation optimal an die zu übertragenden Daten (z.B. Sprachdaten, Paketdaten) und der damit in der Regel verbundenen Datenmenge optimal anzupassen, ist es unter Umständen von Vorteil, für die beiden genannten Datenarten unterschiedliche separate Luftschnittstellen vorzusehen; so z.B. eine Luftschnittstelle für die Breitbandübertragung (z.B. Bluetooth-Schnittstellle, IEEE 802.11a/b/g-basierte Schnittstellen etc.) und eine Luftschnittstelle für die Telefonie (z.B. DECT-, WDCT-, GSM-Schnittstelle etc.). Andererseits ist es aufgrund von Kompatibilitäts-, Interoperabilitäts- und Störanfälligkeitsaspekten mitunter notwendig die drahtlose Kommunikation und Telekommunikation in einer "Smart Home"-Umgebung nur über eine einzige Luftschnittstelle, vorzugsweise eine für die Breitbadübertragung geeignete Luftschnittstelle (z.B. eine auf dem Standard IEEE 802.11 a/b/g etc. basierte Schnittstelle), abzuwickeln [vgl. Ansprüche 3 bis 5, 23 bis 25 und 43 bis 45). Darüber hinaus können aber auch noch andere Schnurlos-Schnittstellen in Betracht kommen, so z.B. eine auf der WiMax- und/oder ZigBee-Technologie basierende Schnittstelle.

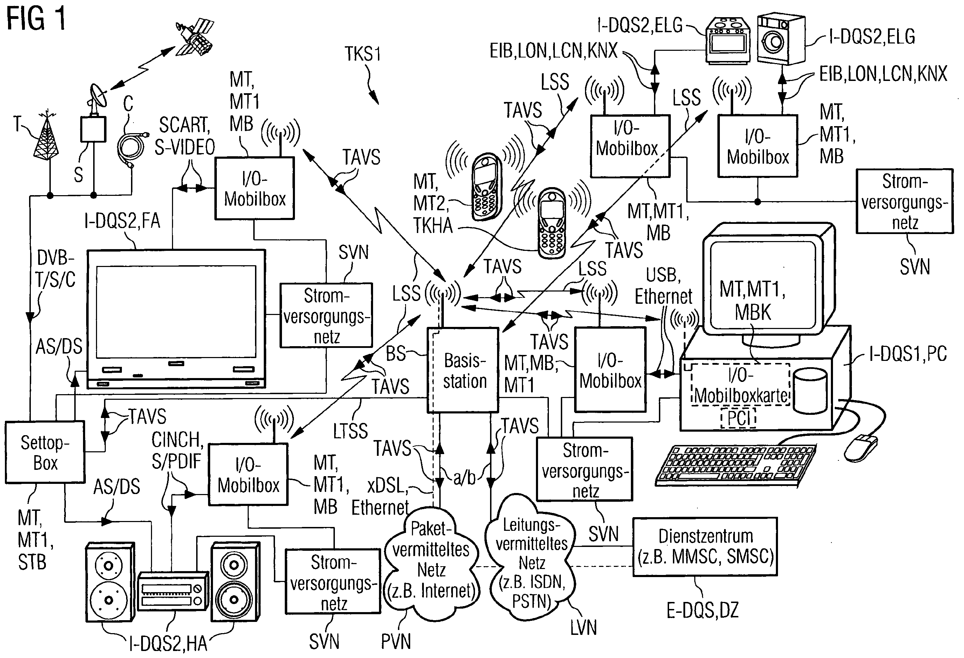

Ein Ausführungsbeispiel der Erfindung wird anhand der FIGUREN 1 bis 11 erläutert. Es zeigen:
FIGUR 1 ein erstes Telekommunikationssystem für die drahtlose Kommunikation und Telekommunikation in einer "Smart Home"-Umgebung,

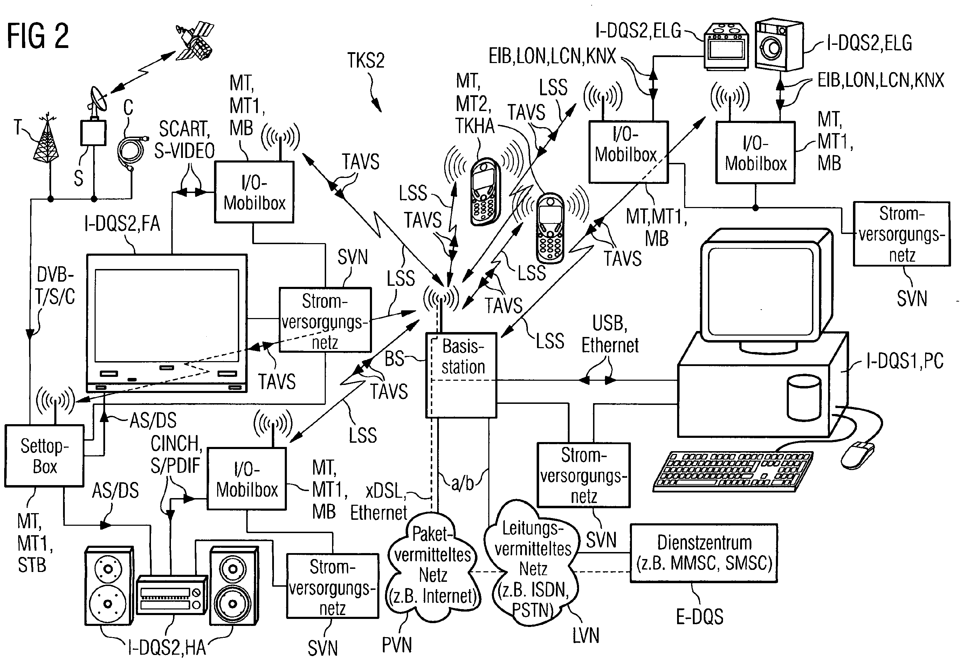

FIGUR 2 ein zweites Telekommunikationssystem für die drahtlose Kommunikation und Telekommunikation in einer "Smart Home"-Umgebung,

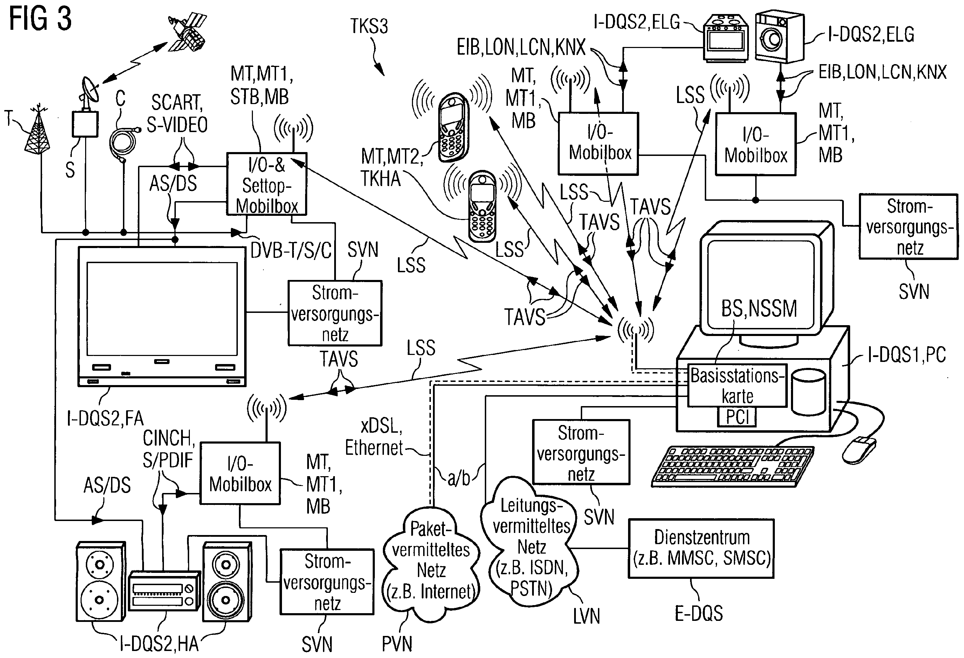

FIGUR 3 ein drittes Telekommunikationssystem für die drahtlose Kommunikation und Telekommunikation in einer "Smart Home"-Umgebung,

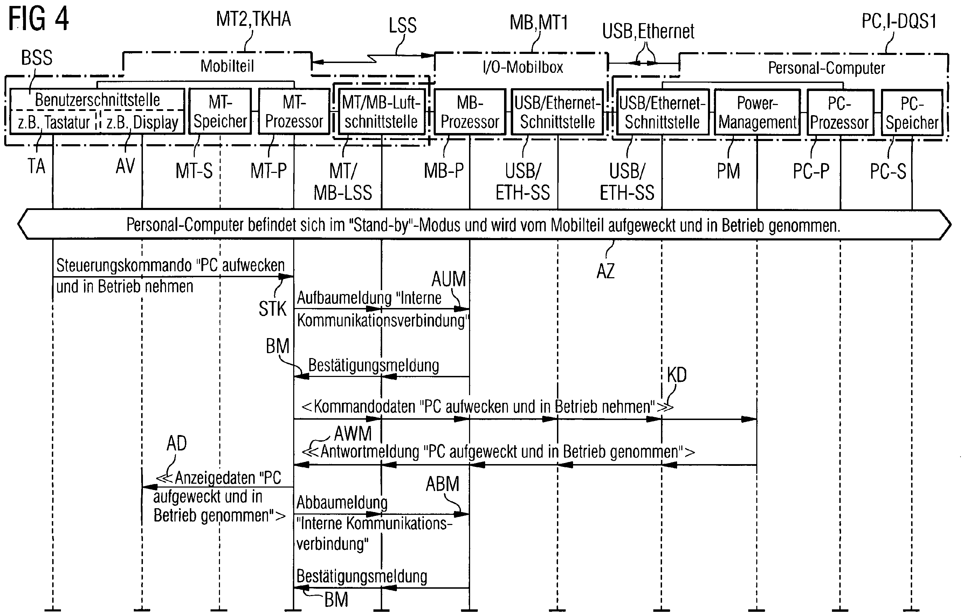

FIGUR 4 ein erstes Meldungsflussdiagramm (message sequence chart), gemäß dem der Benutzer eines Mobilteils der in den FIGUREN 1 bis 3 dargestellten Telekommunikationssysteme mit diesem Mobilteil einen sich im "Stand-by"-Modus befindenden Personal Computer aufweckt und in Betrieb nimmt *(erstes "Smart Home"-Szenario),*

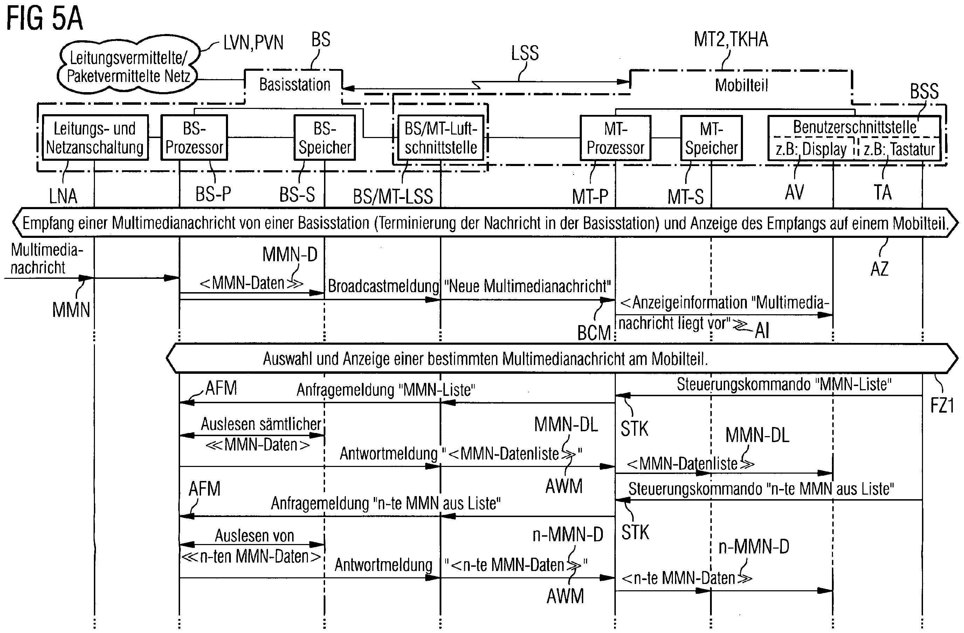

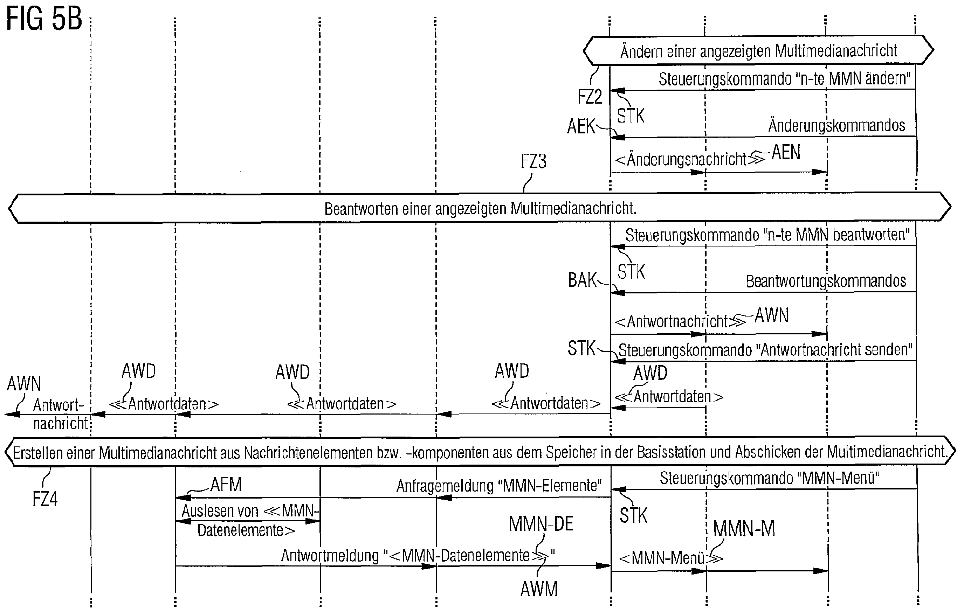

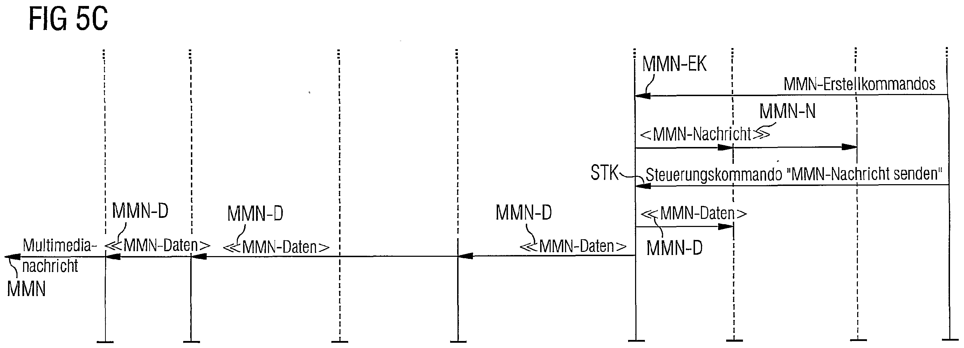

FIGUREN 5a bis 5c ein zweites Meldungsflussdiagramm (message sequence chart), gemäß dem der Benutzer eines Mobilteils der in den FIGUREN 1 bis 3 dargestellten Telekommunikationssysteme auf diesem eine in einer Basisstation terminierte Multimedianachricht zur Anzeige bringt und bearbeitet sowie eine neue Multimedianachricht erstellt *(zweites "Smart Home"-Szenario),*

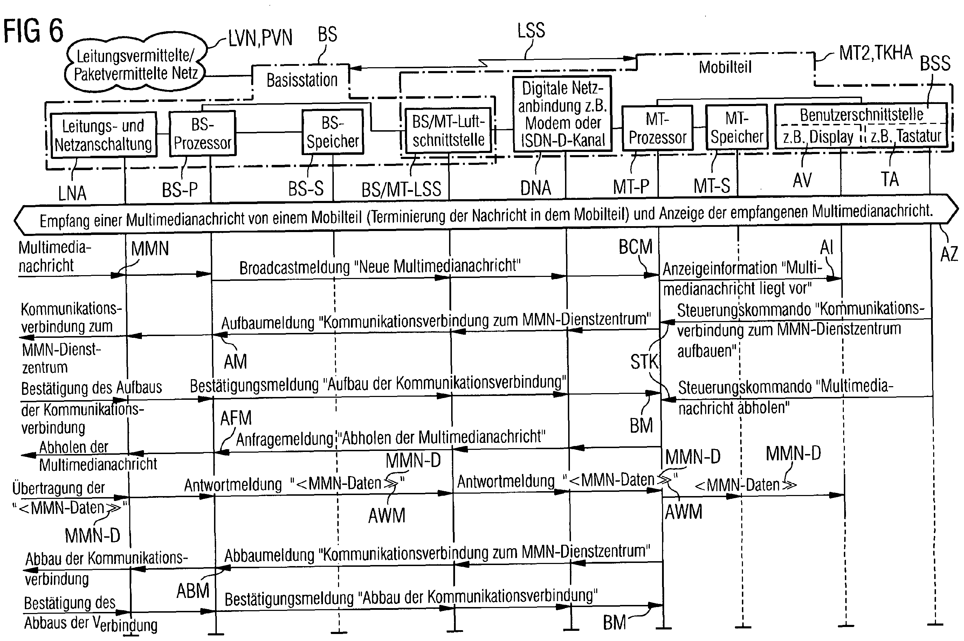

FIGUR 6 ein drittes Meldungsflussdiagramm (message sequence chart), gemäß dem der Benutzer eines Mobilteils der in den FIGUREN 1 bis 3 dargestellten Telekommunikationssysteme mit diesem Mobilteil eine Multimedianachricht empfängt, also in dem Mobilteil terminiert, und zur Anzeige bringt *(drittes "Smart Home"-Szenario),*

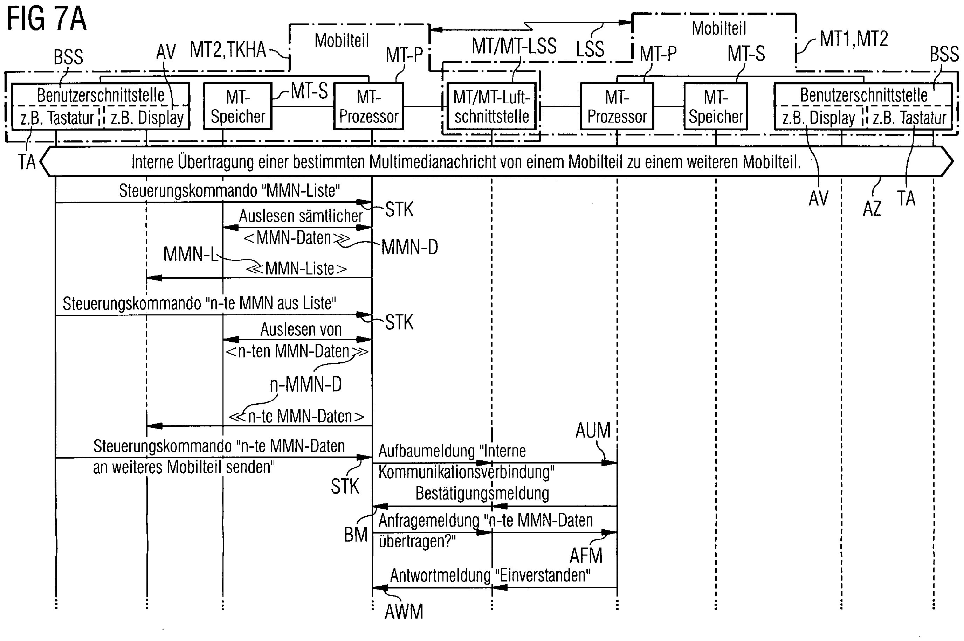

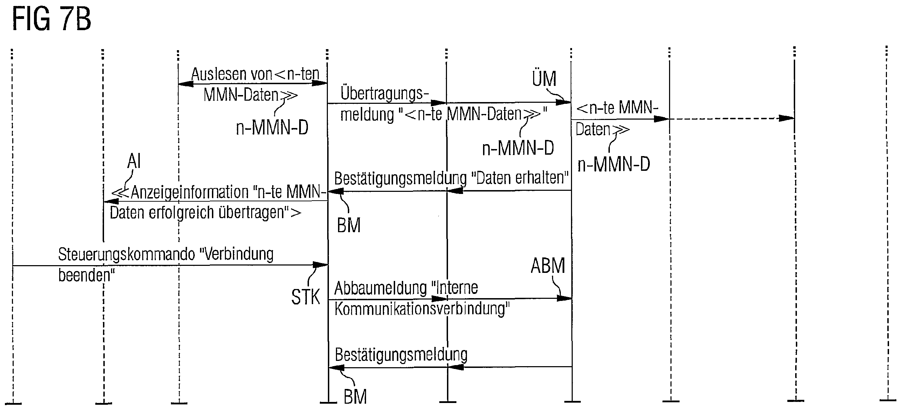

FIGUREN 7a und 7b ein viertes Meldungsflussdiagramm (message sequence chart), gemäß dem der Benutzer eines Mobilteils der in den FIGUREN 1 bis 3 dargestellten Telekommunikationssysteme eine Multimedianachricht auf ein anderes Mobilteil überträgt *(viertes "Smart Home"-Szenario),*

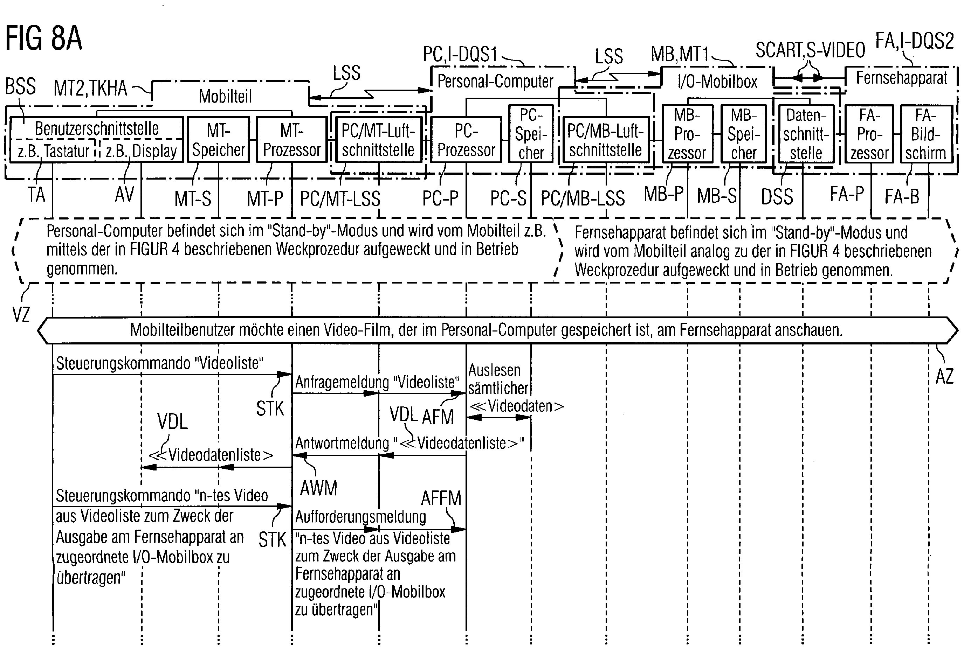

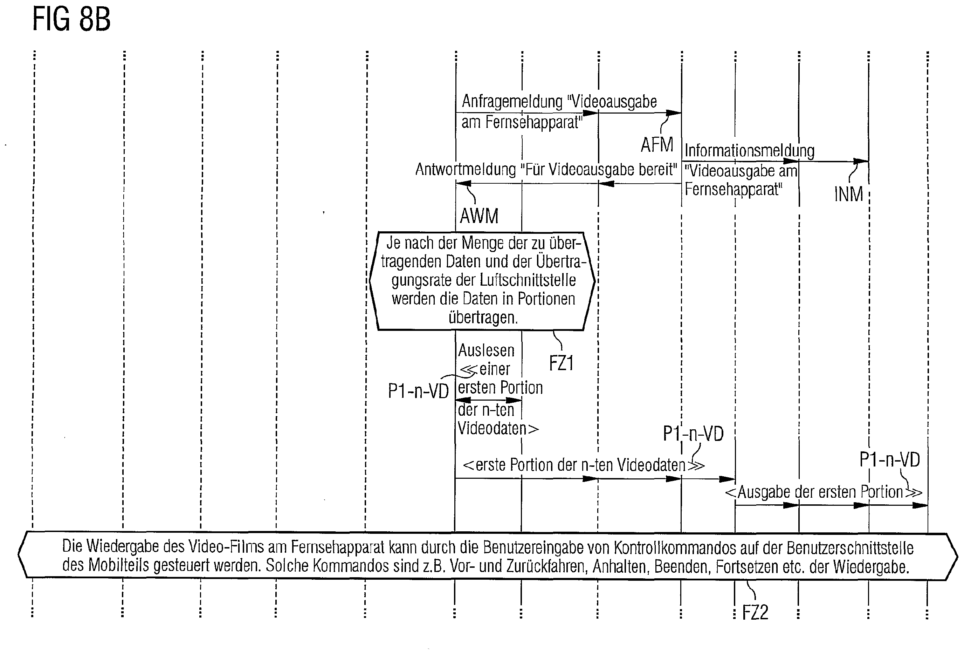

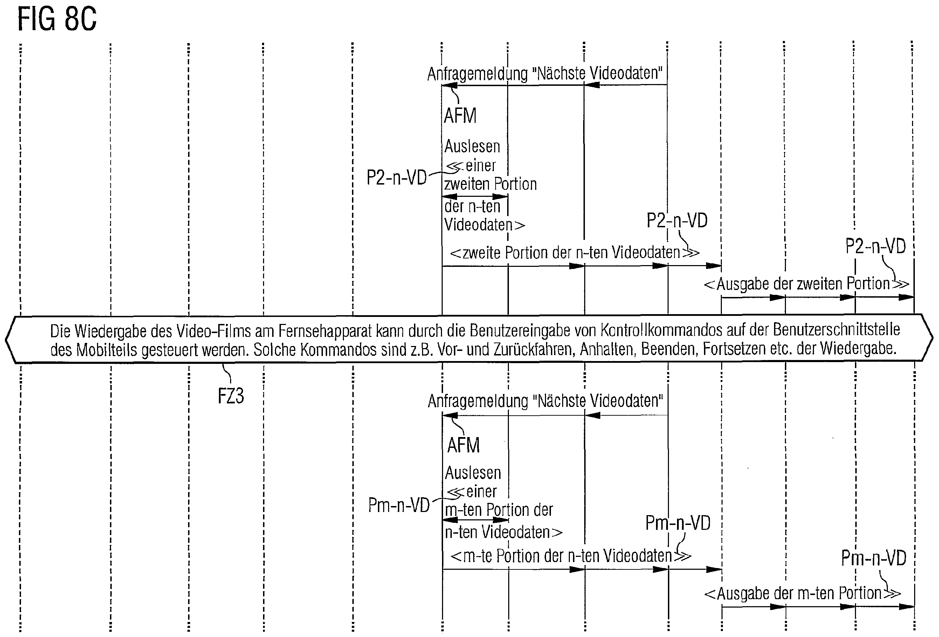

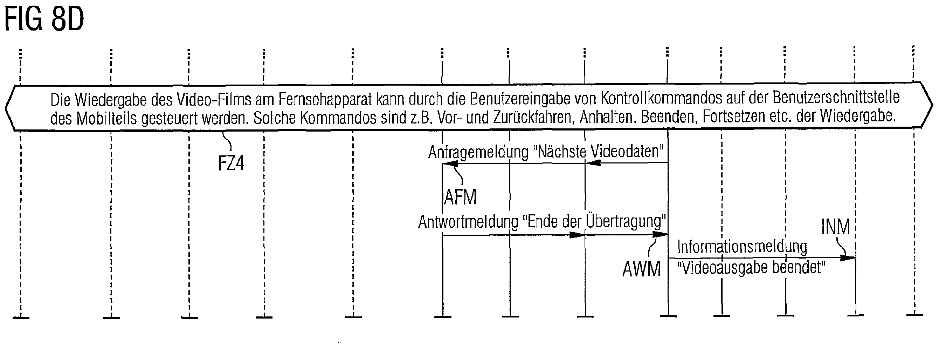

FIGUREN 8a bis 8c ein fünftes Meldungsflussdiagramm (message sequence chart), gemäß dem sich der Benutzer eines Mobilteils der in den FIGUREN 1 bis 3 dargestellten Telekommunikationssysteme einen Video-Film, der auf einem Personal Computer gespeichert ist, an einem Fernsehapparat anschaut *(fünftes "Smart Home"-Szenario),*

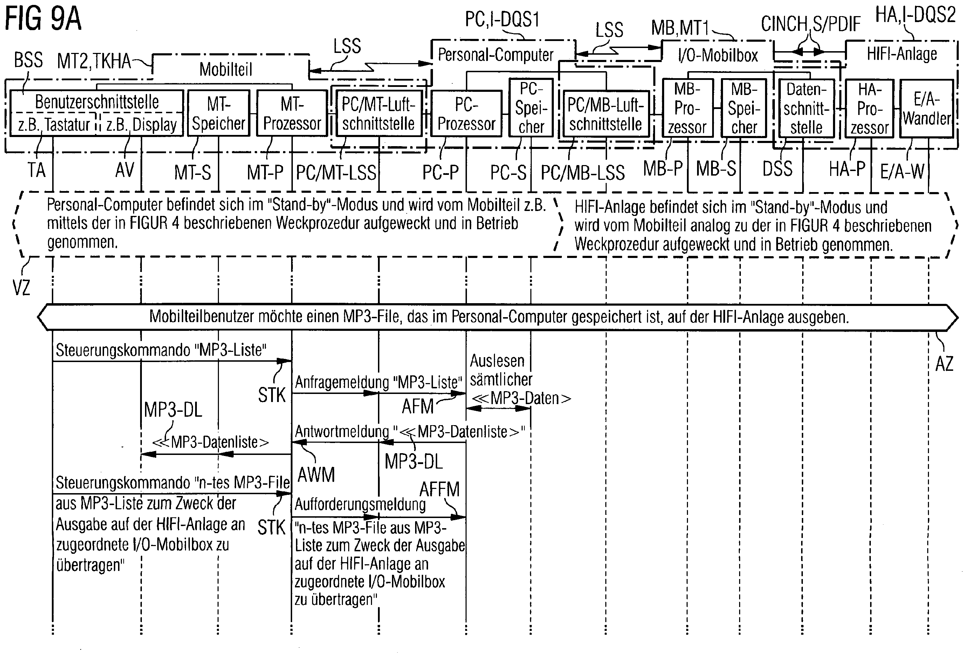

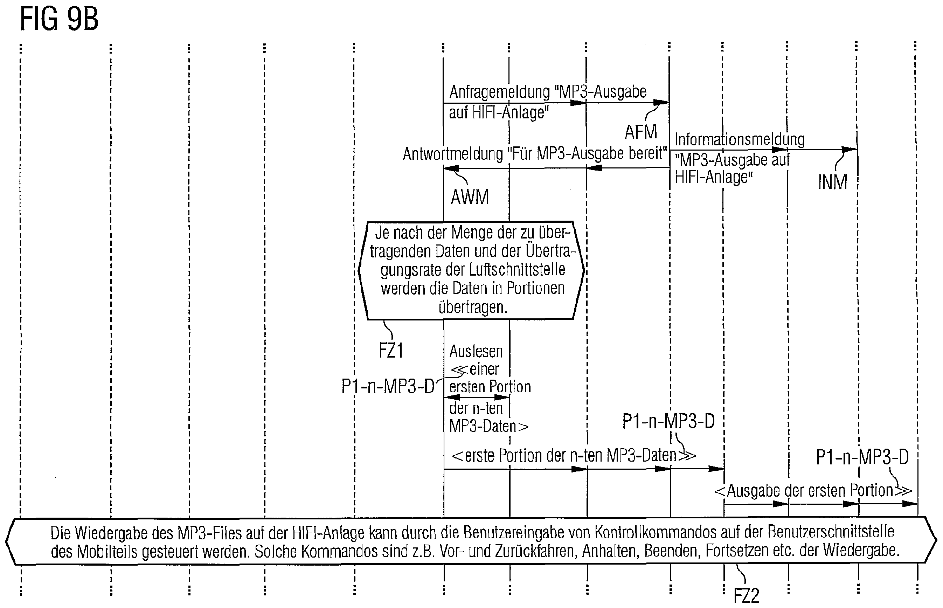

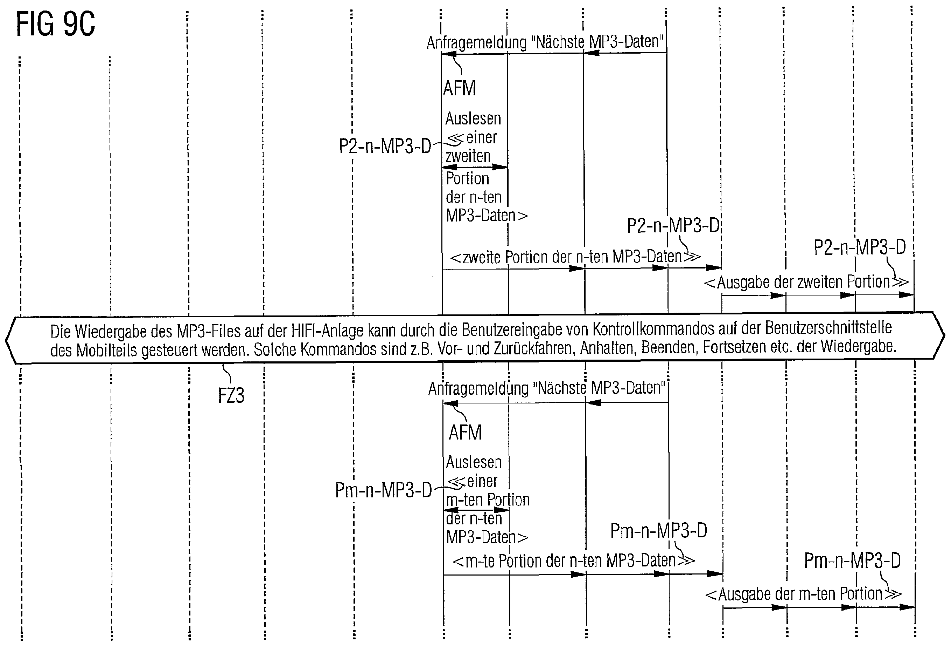

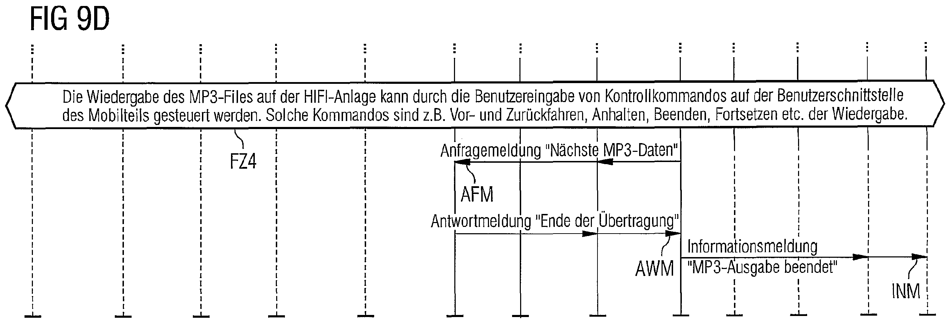

FIGUREN 9a bis 9c ein sechstes Meldungsflussdiagramm (message sequence chart), gemäß dem der Benutzer eines Mobilteils der in den FIGUREN 1 bis 3 dargestellten Telekommunikationssysteme ein MP3-File, das auf einem Personal Computer gespeichert ist, auf einer HIFI-Anlage ausgibt *(sechstes "Smart Home"-Szenario),*

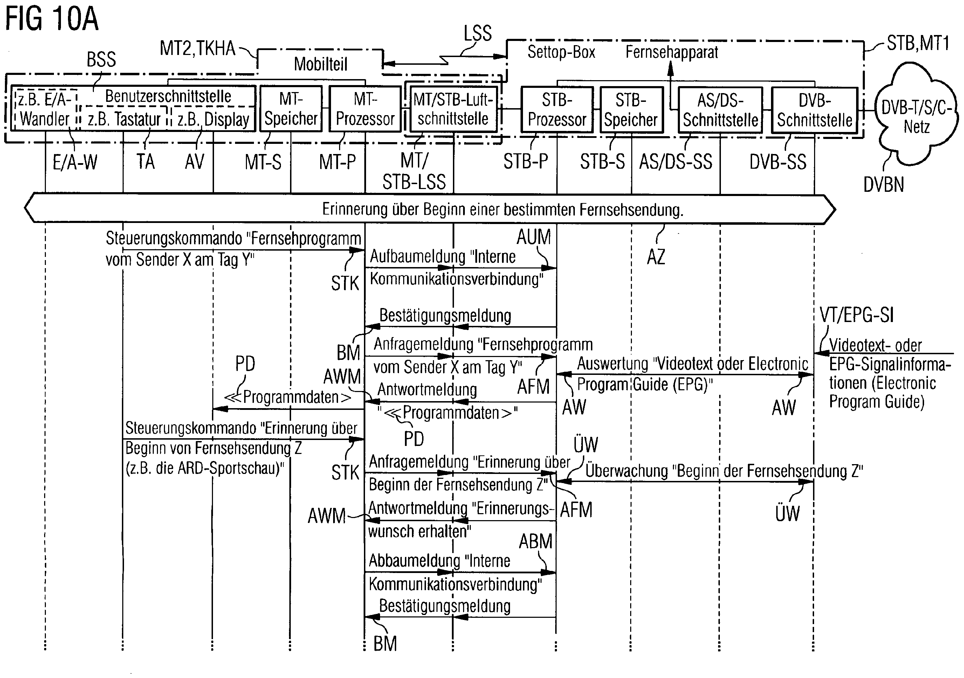

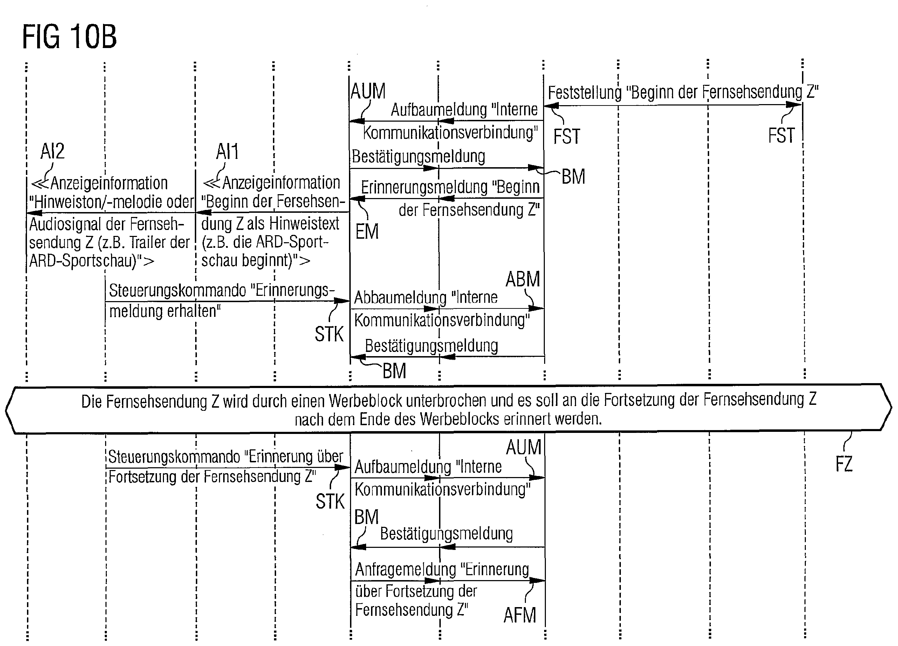

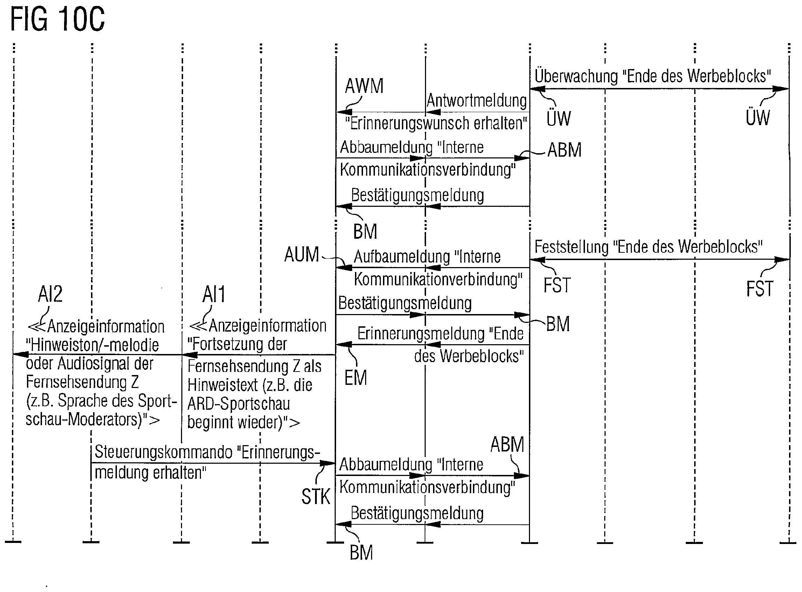

FIGUREN 10a bis 10c ein siebtes Meldungsflussdiagramm (message sequence chart), gemäß dem der Benutzer eines Mobilteils der in den FIGUREN 1 bis 3 dargestellten Telekommunikationssysteme durch das Mobilteil über den Beginn einer Fernsehsendung und die Unterbrechung dieser durch Werbeblocks informiert wird *(siebtes "Smart Home"-Szenario),*

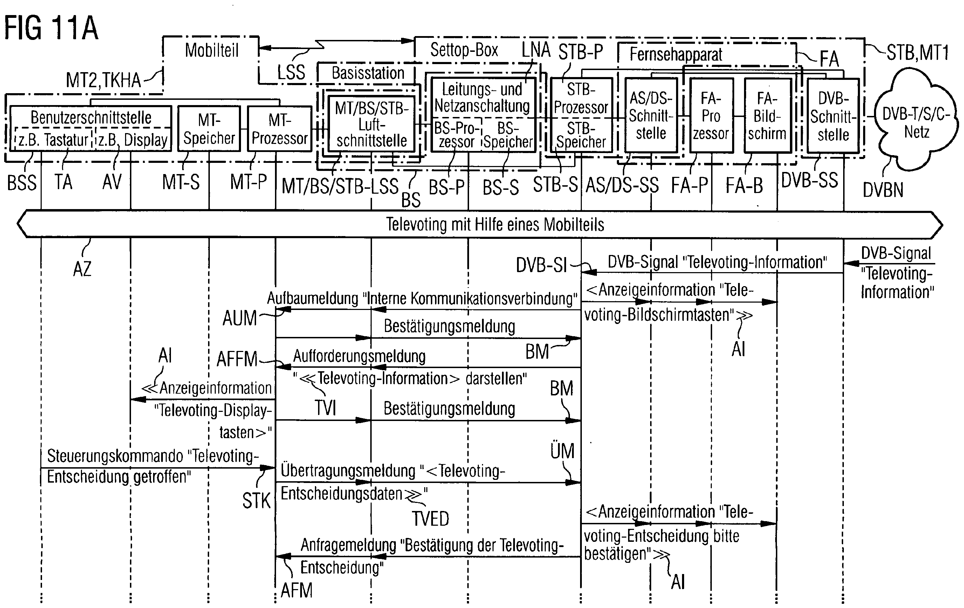

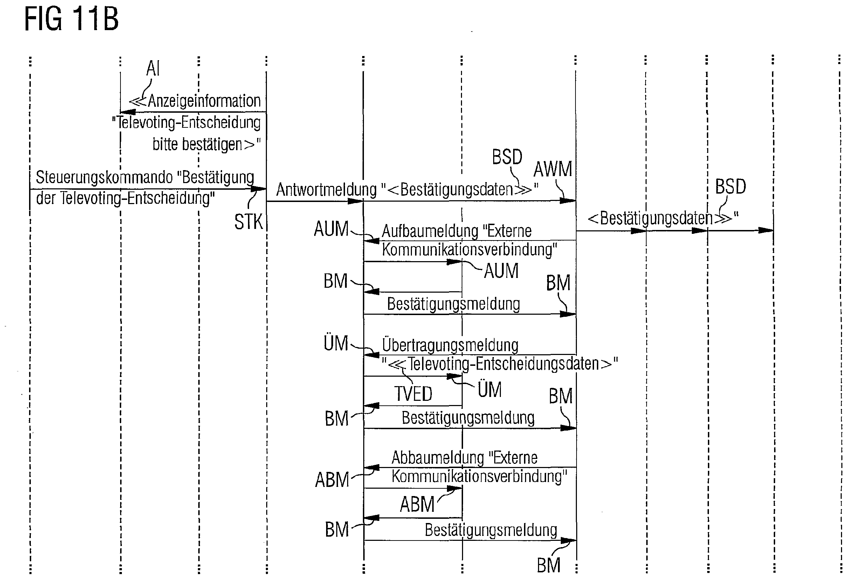

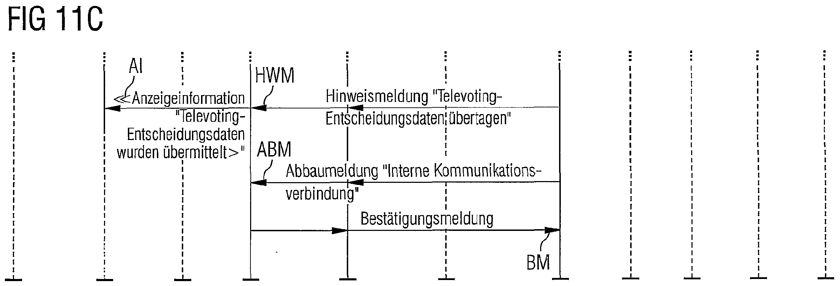

FIGUREN 11a bis 11c ein achtes Meldungsflussdiagramm (message sequence chart), gemäß dem der Benutzer eines Mobilteils der in den FIGUREN 1 bis 3 dargestellten Telekommunikationssysteme mit Hilfe dieses Mobilteils am "Televoting" teilnimmt *(achtes "Smart Home"-Szenario).*

FIGUR 1 zeigt ein erstes Telekommunikationssystem TKS1 für die drahtlose Kommunikation und Telekommunikation in einer "Smart Home"-Umgebung. Hierfür weist das erste Telekommunikationssystem TKS1 eine vorzugsweise als Schnurlos-Basisstation ausgebildete Basisstation BS, die über eine Leitungsverbindung a/b an ein leitungsvermitteltes Netz PVN, das z.B. als ISDN- oder PSTN-Netz ausgebildet sein kann, und mit einer zusätzlichen xDSL- oder ETHERNET-Verbindung an ein paketvermitteltes Netz PVN, das z.B. als Internet ausgebildet sein kann, angeschlossen ist, sowie mindestens ein als Schnurlos-Mobilteil und schnurgebundenes Mobilteil ausgebildetes Mobilteil MT, das für eine EXTERN-Kommunikation - Zugriffe auf das leitungsvermittelte Netz LVN und/oder das paketvermittelte Netz PVN - und/oder für eine INTERN-Kommunikation - Kommunikation der Mobilteile in dem Telekommunikationssystem untereinander - jeweils über eine Luftschnittstelle LSS oder über eine Leitungsschnittstelle LTSS bidirektional mit der Basisstation BS verbunden ist, auf.

Die EXTERN-Kommunikation kann beispielsweise darin bestehen, dass zwischen der Basisstation BS und/oder den Mobilteilen MT und einem Dienstzentrum DZ für Kurznachrichten gemäß dem "**S**hort **M**essage **S**ervice; SMS" und/oder Multimedianachrichten gemäß dem "**M**ultimedia **M**essage **S**ervice; MMS" übertragen werden, weil ein Teilnehmer in dem ersten Telekommunikationssystem TKS1 entweder eine solche Nachricht an einem fernen Telekommunikationsteilnehmer senden möchte oder der Telekommunikationssystemteilnehmer eine solche Nachricht von dem fernen Telekommunikationsteilnehmer empfängt.

Bei der INTERN-Kommunikation kommunizieren die hieran beteiligten Mobilteile in der Regel über die Basisstation BS, bei der die Basisstation zwar die Steuerung der Kommunikation (Verbindung) übernimmt, aber die für die eigentliche Nutzdatenübertragung zu übertragenden Daten lediglich weiterreicht. Es ist aber auch möglich, dass sich die Mobilteile, die über die Luftschnittstelle LSS mit der Basisstation BS verbunden sind, die Daten auch ohne Einbeziehung der Basisstation BS im Zuge einer so genannten "Point-To-Point"-Verbindung gegenseitig übertragen, bei der sie sowohl für Steuerung der Verbindung als auch für die eigentliche Nutzdatenübertragung zuständig sind.

Die Schnurlos-Mobilteile MT des ersten Telekommunikationssystems TKS1, die über die Luftschnittstelle LSS mit der Schnurlos-Basisstation BS verbunden sind, sind entweder schnurlose **I**NPUT/**O**UTPUT-Mobilboxen MB, so genannte schnurlose I/O-Mobilboxen, oder ganz gewöhnliche als schnurlose Komfort-Telefonhandapparate ausgebildete Telekommunikationshandapparate TKHA mit einer Benutzerschnittstelle (Bedien- oder Benutzungsoberfläche) bestehend aus einer Tastatur oder Sprachsteuerung sowie einer Anzeigevorrichtung (Display) mit Menüsteuerung, während das schnurgebundene Mobilteil MT, das über die Leitungsschnittstelle LTSS mit der Basisstation BS verbunden ist, eine schnurgebundene Settop-Box STB mit der bekannten Funktionalität ist.

Alternativ zu dem in der FIGUR 1 dargestellten ersten Telekommunikationssystem TKS1 ist in einer "Smart Home"-Umgebung auch ein dahingehend modifiziertes Telekommunikationssystem einsetzbar, bei dem statt des schnurlosen Komfort-Telefonhandapparates ein mit den gleichen oder vergleichbaren Merkmalen ausgestattetes Mobiltelefon (z.B. ein GSM- oder 3GPP-Handy) mit einer Schnurlos-Schnittstelle für die Schnurlos-Verbindung zu der Schnurlos-Basisstation BS und zu den anderen Schnurlos-Mobilteilen MT benutzt wird.

In einer weiteren Modifikation ist es auch möglich, dass zusätzlich auch noch die Schnurlos-Basisstation BS durch eine Mobilfunk-Basisstation ersetzt wird. Dies hat zur Folge, dass die INTERN-Kommunikation in einem derartigen Telekommunikationssystem ausschließlich eine drahtlose Kommunikation von Schnurlos-Mobilteil zu Schnurlos-Mobilteil oder von Schnurlos-Mobilteil zu dem Mobiltelefon mit der Schnurlos-Schnittstelle im Zuge einer Point-To-Point-Verbindung ist, ohne Einbeziehung der Mobilfunk-Basisstation. Die EXTERN-Kommunikation in diesem Telekommunikationssystem von dem Mobiltelefon ins externe Netz erfolgt, wie im Mobilfunkbereich, über die Mobilfunk-Basisstation, wohingegen die EXTERN-Kommunikation von den anderen Schnurlos-Mobilteilen MT sowohl über das Mobiltelefon und der Mobilfunk-Basisstation erfolgt, wobei das Mobiltelefon dabei als Schnurlos-/Mobilfunkumsetzer fungiert.

Die verschiedenen I/O-Mobilboxen MB und die Settop-Box STB in dem ersten Telekommunikationssystem TKS1 sind für das "Smart Home"-Szenario mit diversen Geräten und Einrichtungen verbunden. So ist eine als erstes Mobilteil MT1 ausgebildete I/O-Mobilbox MB über eine Leitungsverbindung USB, ETHERNET mit einem Personal Computer PC verbunden. Anstatt dem Personal Computer PC über die Leitungsverbindung USB, ETHERNET mit dem ersten Mobilteil MT1 bzw. der I/O-Mobilbox MB zu verbinden, ist aber auch eine Integrationslösung möglich, bei der eine als erstes Mobilteil MT1 ausgebildete I/O-Mobilboxkarte MBK mit einer PCI-Busschnittstelle (**P**eripheral **C**omponent **I**nterconnect) auf einem freien PCI-Kartensteckplatz des Personal Computers PC untergebracht wird.

Darüber hinaus werden weitere vier I/O-Mobilboxen MB als weitere erste Mobilteile MT1 mit einem Fernsehapparat FA, einer HIFI-Anlage HA und zwei elektrischen Geräten ELG, einer Waschmaschine und einem Elektroherd, verbunden. Während die Verbindung zwischen dem Fernsehapparat FA und dem ersten Mobilteil MT1 vorzugsweise eine Leitungsverbindung SCART, S-VIDEO (**S**yndicat des **C**onstructeurs d'**A**ppareils **R**adiorecepteurs et **T**eleviseurs; **S**uper-**Video**) ist und die Verbindung zwischen der HIFI-Anlage HA und dem ersten Mobilteil MT1 vorzugsweise eine Leitungsverbindung CINCH, S/PDIF (genormte, auf die Firma **CINCH** zurückgehende Verbindung zur Übertragung von elektrischen Signalen, die an Koaxialkabeln verwendet werden; **S**ony/**P**hilips **D**igital **I**nter**F**ace) ist, ist die Verbindung zwischen den beiden elektrischen Geräten ELG, der Waschmaschine und dem Elektroherd, vorzugsweise eine Leitungsverbindung EIB, LON, LCN, KNX (**E**uropean **I**nstallation **B**us - ein genormter Bus für die Gebäudeinstallation zur Steuerung technischer Geräte aller Art; **L**ocal **O**perating **N**etwork - ein Feldbussystem der amerikanischen Firma Echolon; **L**ocal **C**ontrol **N**etwork - Bussystem der Firma Issendorf; **K**o**N**ne**X**-Standard, in der die Stärke der drei Bussysteme EIB, BatiBus und EHS zusammengeführt werden und somit Interoperabilität garantieren, wobei BatiBus ein in Frankreich entwickeltes Bussystem ist, das ähnlich dem EIB-Bus aufgebaut ist und wobei EHS ein Zusammenschluss mehrerer europäischer Firmen zum Thema "European Home System" ist). Sämtliche angegebenen Leitungsverbindungen SCART, S-VIDEO, CINCH, S/PDIF, EIB, LON, LCN, KNX sind gängige, in der Haustechnik und Unterhaltungselektronik verwendete normierte Standardschnittstellen.

Es sei an dieser Stelle erwähnt, dass die bei der Zuordnung "I/O-Mobilbox <---> Personal Computer" diskutierte Integrationslösung selbstverständlich auch beim Fernsehapparat FA, bei der HIFI-Anlage HA sowie bei den elektrischen Geräten ELG möglich ist.

Sowohl die elektrischen Geräte ELG, der Fernsehapparat FA, die HIFI-Anlage HA, der Personal Computer PC, die Basisstation BS als auch die als erste Mobilteile MT1 ausgebildeten I/O-Mobilboxen MB sind zur Stromversorgung an ein Stromversorgungsnetz SVN angeschlossen.

Im Unterschied dazu sind die als zweite Mobilteile MT2 ausgebildeten, ebenfalls über die Luftschnittstelle LSS mit der Basisstation BS verbundenen Telekommunikationshandapparate TKHA batterie- bzw. akkubetrieben, wohingegen die zu den ersten Mobilteilen MT1 gehörende, über die Leitungsschnittstelle LTSS mit der Basisstation BS verbundene Settop-Box STB wie die I/O-Mobilboxen MB an dem Stromversorgungsnetz SVN angeschlossen ist. Die Settop-Box STB empfängt ein DVB-Signal DVB-T/S/C (**D**igital **V**ideo **B**roadcasting-**T**errestrial/**S**atellite/- **C**able) und wandelt dieses DVB-Signal in bekannter Weise in ein **A**nalog-**S**ignal/**D**igital-**S**ignal AS/DS für den Fernsehapparat FA und die HIFI-Anlage HA um.

In dem ersten Telekommunikationssystem TKS1 kommt es nun im Zuge der "Smart Home"-Szenarien zu einer Übertragung von Text-, Audio-, Video- und/oder Steuerungsdaten TAVS zwischen den Mobilteilen MT1, MT2 und der Basisstation BS, zwischen den Mobilteilen MT1, MT2 und zwischen den Mobilteilen MT1, MT2 sowie der Basisstation BS einerseits und dem leitungsvermittelten Netz LVN sowie dem paketvermittelten Netz PVN einschließlich des diesen Netzen zugeordneten Dienstzentrums DZ andererseits. Da die Daten von jedem beliebigen Gerät bzw. jeder beliebigen Einrichtung des ersten Telekommunikationssystems TKS1 zu einem anderen Gerät bzw. zu einer anderen Einrichtung des Telekommunikationssystems TKS1 übertragen werden können, und diese Geräte bzw. Einrichtungen somit als Datenquelle/Datensenke fungieren, was insbesondere nach der klassischen Vorstellung von einer Datenquelle/Datensenke für den Personal Computer PC, den Fernsehapparat FA, die HIFI-Anlage HA und die elektrischen Geräte ELG sowie das Dienstzentrum DZ zutrifft, werden der Personal Computer PC wegen der örtlichen, lokalen Nähe zu der Basisstation BS und der Zuordnung zu dem ersten Mobilteil MT1 als erste INTERN-Datenquelle/-senke I-DQS1, der Fernsehapparat FA, die HIFI-Anlage HA und die elektrischen Geräte ELG ebenfalls wegen ihrer örtlichen, lokalen Nähe zu der Basisstation BS und der Zuordnung zu dem ersten Mobilteil MT1 als zweite INTERN-Datenquelle/-senke I/DQS2 und das Dienstzentrum DZ wegen der Zugehörigkeit zu dem leitungsvermittelten Netz LVN bzw. dem paketvermittelten Netz PVN und damit der örtlichen, lokalen Entfernung von der Basisstation BS als EXTERN-Datenquelle/- senke E-DQS bezeichnet.

Für das "Smart Home"-Szenario ist es aber auch möglich, dass die Mobilteile MT1, MT2 und die Basisstation BS selbst als weitere Datenquellen/Datensenken ausgebildet sein können.

Die für das "Smart Home"-Szenario in dem ersten Telekommunikationssystem TKS1 übertragenen Text-, Audio-, Video- und/oder Steuerungsdaten TAVS können wie folgt beschaffen sein:
***** Die Textdaten sind vorzugsweise Kurznachrichten gemäß dem "Short Message Service" oder Videotextinformationen.
***** Die Audiodaten sind vorzugsweise Telefonsprachinformationen, Musikinformationen gemäß dem "Multimedia Message Service" oder Audio-Downloads aus dem Internet, z.B. MP3-Dateien. ***** Die Videodaten sind vorzugsweise Bildinformationen gemäß dem "Multimedia Message Service" oder Video-Downloads aus dem Internet.
***** Die Steuerungsdaten sind letztlich Daten zum Steuern, Messen, Regeln, Kalibrieren, Diagnostizieren und/oder Warten von elektrischen Geräten.

Um die physikalischen Ressourcen des ersten Telekommunikationssystems TKS1 für die drahtlose Kommunikation und Telekommunikation in der "Smart Home"-Umgebung optimal an die zu übertragenden Daten (z.B. Sprach- und Textdaten einerseits sowie Paket-, Audio- und Videodaten andererseits) und der damit in der Regel verbundenen Datenmenge anzupassen, ist das erste Telekommunikationssystem TKS1 vorzugsweise so ausgelegt, dass für die genannten unterschiedlichen Datenarten jeweils unterschiedliche für die jeweilige Datenübertragung optimal ausgelegte Luftschnittstellen zur Verfügung stehen. So kann die Luftschnittstelle LSS beispielsweise eine gemeinsame Schnittstelle für Telefonie und Breitbanddatenübertragung - oder jeweils eine separate Schnittstelle für Telefonie und Breitbanddatenübertragung enthalten.

Demzufolge ist es beispielsweise möglich, dass die Luftschnittstelle LSS gemäß der aus dem Stand der Technik zur Verfügung stehenden Funkstandards eine DECT-, WDCT-, DECT- und Bluetooth-, eine WDCT- und Bluetooth-, DECT- und IEEE 802.11a-, DECT- und IEEE 802.11b-, DECT- und IEEE 802.11g-, WDCT- und IEEE 802.11a-, WDCT- und IEEE 802.11b-, WDCT- und IEEE 802.11g-, GSM- und DECT-, GSM- und Bluetooth-, GSM- und IEEE 802.11a-, GSM- und IEEE 802.11b-, GSM- und IEEE 802.11g-, 3GPP- und Bluetooth-, 3GPP- und IEEE 802.11a-, 3GPP- und IEEE 802.11b- oder 3GPP- und IEEE 802.11g-basierte Schnittstelle ist.

FIGUR 2 zeigt ein zweites Telekommunikationssystem TKS2 für die drahtlose Kommunikation und Telekommunikation in einer "Smart Home"-Umgebung. Hierfür weist das zweite Telekommunikationssystem TKS2 wie das erste Telekommunikationssystem TKS 1 in FIGUR 1 wieder eine vorzugsweise als Schnurlos-Basisstation ausgebildete Basisstation BS, die über eine Leitungsverbindung a/b an ein leitungsvermitteltes Netz PVN, das z.B. als ISDN- oder PSTN-Netz ausgebildet sein kann, und mit einer zusätzlichen xDSL- oder ETHERNET-Verbindung an ein paketvermitteltes Netz PVN, das z.B. als Internet ausgebildet sein kann, angeschlossen ist, sowie mindestens ein als Schnurlos-Mobilteil ausgebildetes Mobilteil MT, das für eine EXTERN-Kommunikation - Zugriffe auf das leitungsvermittelte Netz LVN und/oder das paketvermittelte Netz PVN - und/oder für eine INTERN-Kommunikation - Kommunikation der Mobilteile in dem Telekommunikationssystem untereinander - jeweils über eine Luftschnittsstelle LSS bidirektional mit der Basisstation BS verbunden ist, auf.

Die EXTERN-Kommunikation kann beispielsweise wieder darin bestehen, dass zwischen der Basisstation BS und/oder den Mobilteilen MT und einem Dienstzentrum DZ für Kurznachrichten gemäß dem "**S**hort **M**essage **S**ervice; SMS" und/oder Multimedianachrichten gemäß dem "**M**ultimedia **M**essage **S**ervice; MMS" übertragen werden, weil ein Teilnehmer in dem zweiten Telekommunikationssystem TKS2 entweder eine solche Nachricht an einem fernen Telekommunikationsteilnehmer senden möchte oder der Telekommunikationssystemteilnehmer eine solche Nachricht von dem fernen Telekommunikationsteilnehmer empfängt.

Bei der INTERN-Kommunikation kommunizieren die hieran beteiligten Mobilteile wieder in der Regel über die Basisstation BS, bei der die Basisstation zwar die Steuerung der Kommunikation (Verbindung) übernimmt, aber die für die eigentliche Nutzdatenübertragung zu übertragenden Daten lediglich weiterreicht. Es ist aber auch wieder möglich, dass sich die Mobilteile, die über die Luftschnittstelle LSS mit der Basisstation BS verbunden sind, die Daten auch ohne Einbeziehung der Basisstation BS im Zuge einer so genannten "Point-To-Point"-Verbindung gegenseitig übertragen, bei der sie sowohl für Steuerung der Verbindung als auch für die eigentliche Nutzdatenübertragung zuständig sind.

Die Schnurlos-Mobilteile MT des zweiten Telekommunikationssystems TKS1, die über die Luftschnittstelle LSS mit der Schnurlos-Basisstation BS verbunden sind, sind entweder wieder schnurlose **I**NPUT/**O**UTPUT-Mobilboxen MB, so genannte schnurlose I/O-Mobilboxen, eine schnurlose Settop-Box STB mit der bekannten Funktionalität oder wieder ganz gewöhnliche als schnurlose Komfort-Telefonhandapparate ausgebildete Telekommunikationshandapparate TKHA mit einer Benutzerschnittstelle (Bedien- oder Benutzungsoberfläche) bestehend aus einer Tastatur oder Sprachsteuerung sowie einer Anzeigevorrichtung (Display) mit Menüsteuerung.

Alternativ zu dem in der FIGUR 2 dargestellten zweiten Telekommunikationssystem TKS2 ist in einer "Smart Home"-Umgebung auch wieder ein dahingehend modifiziertes Telekommunikationssystem einsetzbar, bei dem statt des schnurlosen Komfort-Telefonhandapparates ein mit den gleichen oder vergleichbaren Merkmalen ausgestattetes Mobiltelefon (z.B. ein GSM- oder 3GPP-Handy) mit einer Schnurlos-Schnittstelle für die Schnurlos-Verbindung zu der Schnurlos-Basisstation BS und zu den anderen Schnurlos-Mobilteilen MT benutzt wird.

Die verschiedenen I/O-Mobilboxen MB und die Settop-Box STB in dem zweiten Telekommunikationssystem TKS1 sind wieder für das "Smart Home"-Szenario mit diversen Geräten und Einrichtungen verbunden. Im Unterschied zu dem ersten Telekommunikationssystem TKS 1 ist nun aber ein Personal Computer PC über eine Leitungsverbindung USB, ETHERNET nicht mit einer als erstes Mobilteil MT1 ausgebildeten I/O-Mobilbox MB verbunden, sondern direkt mit der Schnurlos-Basisstation BS.

Darüber hinaus sind vier I/O-Mobilboxen MB als weitere erste Mobilteile MT1 mit einem Fernsehapparat FA, einer HIFI-Anlage HA und zwei elektrischen Geräten ELG, einer Waschmaschine und einem Elektroherd, verbunden. Während die Verbindung zwischen dem Fernsehapparat FA und dem ersten Mobilteil MT1 wieder vorzugsweise eine Leitungsverbindung SCART, S-VIDEO ist und die Verbindung zwischen der HIFI-Anlage HA und dem ersten Mobilteil MT1 wieder vorzugsweise eine Leitungsverbindung CINCH, S/PDIF ist, ist auch die Verbindung zwischen den beiden elektrischen Geräten ELG, der Waschmaschine und dem Elektroherd, wieder vorzugsweise eine Leitungsverbindung EIB, LON, LCN, KNX.

Es sei an dieser Stelle erwähnt, dass die bei der Zuordnung "Basisstation <---> Personal Computer" diskutierte direkte Verbindungsmöglichkeit selbstverständlich auch beim Fernsehapparat FA, bei der HIFI-Anlage HA sowie bei den elektrischen Geräten ELG möglich ist.

Sowohl die elektrischen Geräte ELG, der Fernsehapparat FA, die HIFI-Anlage HA, der Personal Computer PC, die Basisstation BS als auch die als zweites Mobilteil MT2 ausgebildeten I/O-Mobilboxen MB sind zur Stromversorgung wieder an ein Stromversorgungsnetz SVN angeschlossen.

Im Unterschied dazu sind wieder die als zweite Mobilteile MT2 ausgebildeten, ebenfalls über die Luftschnittstelle LSS mit der Basisstation BS verbundenen Telekommunikationshandapparate TKHA batterie- bzw. akkubetrieben, wohingegen die zu den ersten Mobilteilen MT1 gehörende, über die Luftschnittstelle LSS mit der Basisstation BS verbundene Settop-Box STB wie die I/O-Mobilboxen MB an dem Stromversorgungsnetz SVN angeschlossen ist. Die Settop-Box STB empfängt wieder ein DVB-Signal DVB-T/S/C und wandelt dieses DVB-Signal in bekannter Weise in ein Analog-Signal/Digital-Signal AS/DS für den Fernsehapparat FA und die HIFI-Anlage HA um.

In dem zweiten Telekommunikationssystem TKS2 kommt es nun wie beim ersten Telekommunikationssystem TKS1 im Zuge der "Smart Home"-Szenarien zu einer Übertragung von Text-, Audio-, Video- und/oder Steuerungsdaten TAVS zwischen den Mobilteilen MT1 und der Basisstation BS, zwischen den Mobilteilen MT1, MT2 und zwischen den Mobilteilen MT1, MT2 sowie der Basisstation BS einerseits und dem leitungsvermittelten Netz LVN sowie dem paketvermittelten Netz PVN einschließlich des diesen Netzen zugeordneten Dienstzentrums DZ andererseits. Da die Daten wieder von jedem beliebigen Gerät bzw. jeder beliebigen Einrichtung des zweiten Telekommunikationssystems TKS2 zu einem anderen Gerät bzw. zu einer anderen Einrichtung des Telekommunikationssystems TKS2 übertragen werden können, und diese Geräte bzw. Einrichtungen somit als Datenquelle/Datensenke fungieren, was insbesondere nach der klassischen Vorstellung von einer Datenquelle/Datensenke für den Personal Computer PC, den Fernsehapparat FA, die HIFI-Anlage HA und die elektrischen Geräte ELG sowie das Dienstzentrum DZ zutrifft, werden der Personal Computer PC wegen der örtlichen, lokalen Nähe zu der Basisstation BS wieder als erste INTERN-Datenquelle/-senke I-DQS1, der Fernsehapparat FA, die HIFI-Anlage HA und die elektrischen Geräte ELG ebenfalls wegen ihrer örtlichen, lokalen Nähe zu der Basisstation BS und der Zuordnung zu dem ersten Mobilteil MT1 wieder als zweite INTERN-Datenquelle/-senke I/DQS2 und das Dienstzentrum DZ wegen der Zugehörigkeit zu dem leitungsvermittelten Netz LVN bzw. dem paketvermittelten Netz PVN und damit der örtlichen, lokalen Entfernung von der Basisstation BS wieder als EXTERN-Datenquelle/-senke E-DQS bezeichnet.

Für das "Smart Home"-Szenario ist es aber auch wieder möglich, dass die Mobilteile MT1, MT2 und die Basisstation BS selbst als weitere Datenquellen/Datensenken ausgebildet sein können.

Die für das "Smart Home"-Szenario in dem zweiten Telekommunikationssystem TKS2 übertragenen Text-, Audio-, Video- und/oder Steuerungsdaten TAVS können wieder wie folgt beschaffen sein:
***** Die Textdaten sind vorzugsweise Kurznachrichten gemäß dem "Short Message Service" oder Videotextinformationen.
***** Die Audiodaten sind vorzugsweise Telefonsprachinformationen, Musikinformationen gemäß dem "Multimedia Message Service" oder Audio-Downloads aus dem Internet, z.B. MP3-Dateien.
***** Die Videodaten sind vorzugsweise Bildinformationen gemäß dem "Multimedia Message Service" oder Video-Downloads aus dem Internet.
***** Die Steuerungsdaten sind letztlich Daten zum Steuern, Messen, Regeln, Kalibrieren, Diagnostizieren und/oder Warten von elektrischen Geräten.

Um die physikalischen Ressourcen des zweiten Telekommunikationssystems TKS2 für die drahtlose Kommunikation und Telekommunikation in der "Smart Home"-Umgebung wieder optimal an die zu übertragenden Daten (z.B. Sprach- und Textdaten einerseits sowie Paket-, Audio- und Videodaten andererseits) und der damit in der Regel verbundenen Datenmenge anzupassen, ist das zweite Telekommunikationssystem TKS2 vorzugsweise wieder so ausgelegt, dass für die genannten unterschiedlichen Datenarten jeweils unterschiedliche für die jeweilige Datenübertragung optimal ausgelegte Luftschnittstellen zur Verfügung stehen. So kann die Luftschnittstelle LSS beispielsweise wieder eine gemeinsame Schnittstelle für Telefonie und Breitbanddatenübertragung oder wieder jeweils eine separate Schnittstelle für Telefonie und Breitbanddatenübertragung enthalten.

Demzufolge ist es beispielsweise wieder möglich, dass die Luftschnittstelle LSS gemäß der aus dem Stand der Technik zur Verfügung stehenden Funkstandards eine DECT-, WDCT-, DECT- und Bluetooth-, eine WDCT- und Bluetooth-, DECT- und IEEE 802.11a-, DECT- und IEEE 802.11b-, DECT- und IEEE 802.11g-, WDCT- und IEEE 802.11a-, WDCT- und IEEE 802.11b-, WDCT- und IEEE 802.11g-, GSM- und DECT-, GSM- und Bluetooth-, GSM- und IEEE 802.11a-, GSM- und IEEE 802.11b-, GSM- und IEEE 802.11g-, 3GPP- und Bluetooth-, 3GPP- und IEEE 802.11a-, 3GPP- und IEEE 802.11b- oder 3GPP- und IEEE 802.11g-basierte Schnittstelle ist.

FIGUR 3 zeigt ein drittes Telekommunikationssystem TKS3 für die drahtlose Kommunikation und Telekommunikation in einer "Smart Home"-Umgebung. Hierfür weist das dritte Telekommunikationssystem TKS3 eine vorzugsweise als Netzschnittstellenmodul NSSM in Form einer in einen Personal Computer PC integrierte Schnurlos-Basisstationskarte ausgebildete Basisstation BS, die wieder über eine Leitungsverbindung a/b an ein leitungsvermitteltes Netz PVN, das z.B. als ISDN- oder PSTN-Netz ausgebildet sein kann, und mit einer zusätzlichen xDSL- oder ETHERNET-Verbindung an ein paketvermitteltes Netz PVN, das z.B. als Internet ausgebildet sein kann, angeschlossen ist, sowie mindestens ein als Schnurlos-Mobilteil und schnurgebundenes Mobilteil ausgebildetes Mobilteil MT, das für eine EXTERN-Kommunikation - Zugriffe auf das leitungsvermittelte Netz LVN und/oder das paketvermittelte Netz PVN - und/oder für eine INTERN-Kommunikation - Kommunikation der Mobilteile in dem Telekommunikationssystem untereinander - jeweils über eine Luftschnittstelle LSS bidirektional mit der Basisstation BS verbunden ist, auf. Das Netzschnittstellenmodul NSSM bzw. die Basisstationskarte weist eine PCI-Busschnittstelle (**P**eripheral **C**omponent **I**nterconnect) auf und wird diesbezüglich auf einem freien PCI-Kartensteckplatz des Personal Computers PC untergebracht.

Die EXTERN-Kommunikation kann beispielsweise wieder darin bestehen, dass zwischen der Basisstation BS und/oder den Mobilteilen MT und einem Dienstzentrum DZ für Kurznachrichten gemäß dem "**S**hort **M**essage **S**ervice; SMS" und/oder Multimedianachrichten gemäß dem "**M**ultimedia **M**essage **S**ervice; MMS" übertragen werden, weil ein Teilnehmer in dem ersten Telekommunikationssystem TKS1 entweder eine solche Nachricht an einem fernen Telekommunikationsteilnehmer senden möchte oder der Telekommunikationssystemteilnehmer eine solche Nachricht von dem fernen Telekommunikationsteilnehmer empfängt.

Bei der INTERN-Kommunikation kommunizieren die hieran beteiligten Mobilteile wieder in der Regel über die Basisstation BS, bei der die Basisstation zwar die Steuerung der Kommunikation (Verbindung) übernimmt, aber die für die eigentliche Nutzdatenübertragung zu übertragenden Daten lediglich weiterreicht. Es ist aber auch wieder möglich, dass sich die Mobilteile, die über die Luftschnittstelle LSS mit der Basisstation BS verbunden sind, die Daten auch ohne Einbeziehung der Basisstation BS im Zuge einer so genannten "Point-To-Point"-Verbindung gegenseitig übertragen, bei der sie sowohl für Steuerung der Verbindung als auch für die eigentliche Nutzdatenübertragung zuständig sind.

Die Schnurlos-Mobilteile MT des dritten Telekommunikationssystems TKS3, die über die Luftschnittstelle LSS mit der als Netzschnittstellenmodul NSSM bzw. Basisstationskarte ausgebildeten Schnurlos-Basisstation BS verbunden sind, sind entweder wieder schnurlose **I**NPUT/**O**UTPUT-Mobilboxen MB, so genannte schnurlose I/O-Mobilboxen, eine I/O- & Settop-Mobilbox MB, STB oder wieder ganz gewöhnliche als schnurlose Komfort-Telefonhandapparate ausgebildete Telekommunikationshandapparate TKHA mit einer Benutzerschnittstelle (Bedien- oder Benutzungsoberfläche) bestehend aus einer Tastatur oder Sprachsteuerung sowie einer Anzeigevorrichtung (Display) mit Menüsteuerung.

Alternativ zu dem in der FIGUR 3 dargestellten dritten Telekommunikationssystem TKS3 ist in einer "Smart Home"-Umgebung auch wieder ein dahingehend modifiziertes Telekommunikationssystem einsetzbar, bei dem statt des schnurlosen Komfort-Telefonhandapparates ein mit den gleichen oder vergleichbaren Merkmalen ausgestattetes Mobiltelefon (z.B. ein GSM- oder 3GPP-Handy) mit einer Schnurlos-Schnittstelle für die Schnurlos-Verbindung zu der Schnurlos-Basisstation BS und zu den anderen Schnurlos-Mobilteilen MT benutzt wird.

Die verschiedenen I/O-Mobilboxen MB und die I/O- & Settop-Mobilbox MB, STB in dem dritten Telekommunikationssystem TKS3 sind wieder für das "Smart Home"-Szenario mit diversen Geräten und Einrichtungen verbunden. So sind drei I/O-Mobilboxen MB als erste Mobilteile MT1 mit einer HIFI-Anlage HA und zwei elektrischen Geräten ELG, einer Waschmaschine und einem Elektroherd, und die I/O- & Settop-Mobilbox MB, STB mit einem Fernsehapparat FA verbunden. Während die Verbindung zwischen dem Fernsehapparat FA und dem ersten Mobilteil MT1 wieder vorzugsweise eine Leitungsverbindung SCART, S-VIDEO ist und die Verbindung zwischen der HIFI-Anlage HA und dem ersten Mobilteil MT1 wieder vorzugsweise eine Leitungsverbindung CINCH, S/PDIF ist, ist auch die Verbindung zwischen den beiden elektrischen Geräten ELG, der Waschmaschine und dem Elektroherd, wieder vorzugsweise eine Leitungsverbindung EIB, LON, LCN, KNX.

Es sei an dieser Stelle erwähnt, dass die bei der Zuordnung "Basisstation <---> Personal Computer" diskutierte Integrationslösung (Stw.: Netzschnittstellenmodul bzw. Basisstationskarte) selbstverständlich auch beim Fernsehapparat FA, bei der HIFI-Anlage HA sowie bei den elektrischen Geräten ELG möglich ist.

Sowohl die elektrischen Geräte ELG, der Fernsehapparat FA, die HIFI-Anlage HA, der Personal Computer PC, die Basisstation BS als auch die als erstes Mobilteil MT1 ausgebildeten I/O-Mobilboxen MB sind zur Stromversorgung an ein Stromversorgungsnetz SVN angeschlossen.

Im Unterschied dazu sind wieder die als zweite Mobilteile MT2 ausgebildeten, ebenfalls über die Luftschnittstelle LSS mit der Basisstation BS verbundenen Telekommunikationshandapparate TKHA batterie- bzw. akkubetrieben, wohingegen die zu den ersten Mobilteilen MT1 gehörende, über die Luftschnittstelle LSS mit der Basisstation BS verbundene I/O- & Settop-Mobilbox MB, STB wie die I/O-Mobilboxen MB an dem Stromversorgungsnetz SVN angeschlossen ist. Die Settop-Box STB empfängt wieder ein DVB-Signal DVB-T/S/C und wandelt dieses DVB-Signal in bekannter Weise in ein Analog-Signal/Digital-Signal AS/DS für den Fernsehapparat FA und die HIFI-Anlage HA um.

In dem dritten Telekommunikationssystem TKS3 kommt es nun wie beim ersten und zweiten Telekommunikationssystem TKS1, TKS2 im Zuge der "Smart Home"-Szenarien zu einer Übertragung von Text-, Audio-, Video- und/oder Steuerungsdaten TAVS zwischen den Mobilteilen MT1, MT2 und der Basisstation BS, zwischen den Mobilteilen MT1, MT2 und zwischen den Mobilteilen MT1, MT2 sowie der Basisstation BS einerseits und dem leitungsvermittelten Netz LVN sowie dem paketvermittelten Netz PVN einschließlich des diesen Netzen zugeordneten Dienstzentrums DZ andererseits. Da die Daten wieder von jedem beliebigen Gerät bzw. jeder beliebigen Einrichtung des dritten Telekommunikationssystems TKS3 zu einem anderen Gerät bzw. zu einer anderen Einrichtung des Telekommunikationssystems TKS1 übertragen werden können, und diese Geräte bzw. Einrichtungen somit als Datenquelle/Datensenke fungieren, was insbesondere nach der klassischen Vorstellung von einer Datenquelle/Datensenke für den Personal Computer PC, den Fernsehapparat FA, die HIFI-Anlage HA und die elektrischen Geräte ELG sowie das Dienstzentrum DZ zutrifft, werden der Personal Computer PC wegen der baulichen Einheit mit der Basisstation BS wieder als erste INTERN-Datenquelle/-senke I-DQS1, der Fernsehapparat FA, die HIFI-Anlage HA und die elektrischen Geräte ELG ebenfalls wegen ihrer örtlichen, lokalen Nähe zu der Basisstation BS und der Zuordnung zu dem ersten Mobilteil MT1 wieder als zweite INTERN-Datenquelle/-senke I/DQS2 und das Dienstzentrum DZ wegen der Zugehörigkeit zu dem leitungsvermittelten Netz LVN bzw. dem paketvermittelten Netz PVN und damit der örtlichen, lokalen Entfernung von der Basisstation BS wieder als EXTERN-Datenquelle/-senke E-DQS bezeichnet.

Für das "Smart Home"-Szenario ist es aber auch wieder möglich, dass die Mobilteile MT1, MT2 und die Basisstation BS selbst als weitere Datenquellen/Datensenken ausgebildet sein können.

Die für das "Smart Home"-Szenario in dem dritten Telekommunikationssystem TKS3 übertragenen Text-, Audio-, Video- und/oder Steuerungsdaten TAVS können wieder wie folgt beschaffen sein:
***** Die Textdaten sind vorzugsweise Kurznachrichten gemäß dem "Short Message Service" oder Videotextinformationen.
***** Die Audiodaten sind vorzugsweise Telefonsprachinformationen, Musikinformationen gemäß dem "Multimedia Message Service" oder Audio-Downloads aus dem Internet, z.B. MP3-Dateien. ***** Die Videodaten sind vorzugsweise Bildinformationen gemäß dem "Multimedia Message Service" oder Video-Downloads aus dem Internet.
***** Die Steuerungsdaten sind letztlich Daten zum Steuern, Messen, Regeln, Kalibrieren, Diagnostizieren und/oder Warten von elektrischen Geräten.

Um die physikalischen Ressourcen des dritten Telekommunikationssystems TKS3 für die drahtlose Kommunikation und Telekommunikation in der "Smart Home"-Umgebung wieder optimal an die zu übertragenden Daten (z.B. Sprach- und Textdaten einerseits sowie Paket-, Audio- und Videodaten andererseits) und der damit in der Regel verbundenen Datenmenge anzupassen, ist das dritte Telekommunikationssystem TKS3 vorzugsweise wieder so ausgelegt, dass für die genannten unterschiedlichen Datenarten jeweils unterschiedliche für die jeweilige Datenübertragung optimal ausgelegte Luftschnittstellen zur Verfügung stehen. So kann die Luftschnittstelle LSS beispielsweise wieder eine gemeinsame Schnittstelle für Telefonie und Breitbanddatenübertragung oder wieder jeweils eine separate Schnittstelle für Telefonie und Breitbanddatenübertragung enthalten.

Demzufolge ist es beispielsweise wieder möglich, dass die Luftschnittstelle LSS gemäß der aus dem Stand der Technik zur Verfügung stehenden Funkstandards eine DECT-, WDCT-, DECT- und Bluetooth-, eine WDCT- und Bluetooth-, DECT- und IEEE 802.11a-, DECT- und IEEE 802.11b-, DECT- und IEEE 802.11g-, WDCT- und IEEE 802.11a-, WDCT- und IEEE 802.11b-, WDCT- und IEEE 802.11g-, GSM- und DECT-, GSM- und Bluetooth-, GSM- und IEEE 802.11a-, GSM- und IEEE 802.11b-, GSM- und IEEE 802.11g-, 3GPP- und Bluetooth-, 3GPP- und IEEE 802.11a-, 3GPP- und IEEE 802.11b- oder 3GPP- und IEEE 802.11g-basierte Schnittstelle ist.

FIGUR 4 zeigt ein erstes Meldungsflussdiagramm (Message Sequence Chart) gemäß einem ersten "Smart Home"-Szenario, bei dem der Benutzer des als Telekommunikationshandapparat TKHA ausgebildeten zweiten Mobilteils MT2 der in den FIGUREN 1 bis 3 dargestellten Telekommunikationssysteme TKS1, TKS2, TKS3 mit diesem Mobilteil MT2 den sich in einem "Stand-by"-Modus befindenden Personal Computer PC aufweckt und in Betrieb nimmt. Der hierfür notwendige Meldungsfluss verläuft gemäß der FIGUR 4 zwischen dem zweiten Mobilteil MT2, dem mit dem zweiten Mobilteil MT2 über die Luftschnittstelle LSS verbundenen, als I/O-Mobilbox MB bzw. als I/O-Mobilboxkarte MBK ausgebildeten ersten Mobilteil MT1 und dem mit dem ersten Mobilteil MT1 über die Leitungsverbindung USB, ETHERNET verbundenen, als erste INTERN-Datenquelle/-senke I-DQS1 ausgebildeten Personal Computer PC.

Die für die Darstellung des Meldungsflusses berücksichtigten Baueinheiten oder Komponenten sind
**(i)** für das Mobilteil MT2 eine Benutzerschnittstelle BSS, die z.B. eine Tastatur TA und eine als Display ausgebildete Anzeigevorrichtung AV aufweist, ein MT-Speicher MT-S, eine als MT-Prozessor ausgebildete Zentrale Steuereinheit MT-P sowie eine zwischen dem Mobilteil MT2 und der I/O-Mobilbox MB wirksame, gemeinsame MT/MB-Luftschnittstelle MT/MB-LSS, die in der dargestellten Weise miteinander verbunden sind,
**(ii)** für die I/O-Mobilbox MB die mit dem Mobilteil MT2 gemeinsame MT/MB-Luftschnittstelle MT/MB-LSS, eine als MB-Prozessor ausgebildete Zentrale Steuereinheit MB-P sowie eine USB/ETHERNET-Schnittstelle USB/ETH-SS, die in der dargestellten Weise miteinander verbunden sind, und
**(iii)** für den Personal Computer PC, wie bei der I/O-Mobilbox MB, eine USB/ETHERNET-Schnittstelle USB/ETH-SS, ein Power-Management PM, eine als PC-Prozessor ausgebildete Zentrale Steuereinheit PC-P sowie ein PC-Speicher PC-S, die in der dargestellten Weise miteinander verbunden sind.

In einem für alle Baueinheiten bzw. Komponenten maßgebenden Ausgangszustand AZ des Meldungsflussdiagramms befindet sich der Personal Computer PC im "Stand-by"-Modus und wird in diesem Zustand vom Mobilteil MT2 aufgeweckt und in Betrieb genommen. Hierzu wird von der Tastatur TA der Benutzerschnittstelle BSS ein Steuerungskommando "PC aufwecken und in Betrieb nehmen" STK zum MT-Prozessor MT-P übertragen. Der MT-Prozessor MT-P überträgt zum Aufbau einer internen Kommunikationsverbindung eine Aufbaumeldung "Interne Kommunikationsverbindung" AUM über die MT/MB-Luftschnittstelle MT/MB-LSS an den MB-Prozessor MB-P. Der MB-Prozessor MB-P sendet daraufhin eine Bestätigungsmeldung BM über die MT/MB-Luftschnittstelle MT/MB-LSS an den MT-Prozessor MT-P zurück. Danach werden von dem MT-Prozessor MT-P die zu dem Steuerungskommando "PC aufwecken und in Betrieb nehmen" STK gehörenden Kommandodaten "PC aufwecken und in Betrieb nehmen" KD über die MT/MB-Luftschnittstelle MT/MB-LSS, den MB-Prozessor MB-P die USB/ETHERNET-Schnittstelle USB/ETH-SS in der I/O-Mobilbox MB und des Personal Computers PC zum Power-Management PM übertragen. Über den gleichen Meldungsweg wird in umgekehrter Richtung von dem Power-Management PM eine Antwortmeldung "PC aufgeweckt und in Betrieb genommen" AWM an den MT-Prozessor MT-P übertragen. Der MT-Prozessor MT-P gibt daraufhin Anzeigedaten "PC aufgeweckt und in Betrieb genommen" AD an das Display AV der Benutzerschnittstelle BSS, wo diese Daten angezeigt werden. Anschließend überträgt der MT-Prozessor MT-P zum Abbau der aufgebauten internen Kommunikationsverbindung eine Abbaumeldung "Interne Kommunikationsverbindung" ABM über die MT/MB-Luftschnittstelle MT/MB-LSS an den MB-Prozessor MB-P, die dieser auf dem gleichen Meldungsweg in umgekehrter Richtung mit einer weiteren Bestätigungsmeldung BM beantwortet, wodurch die Verbindung abgebaut ist.

FIGUREN 5a bis 5c zeigen ein zweites Meldungsflussdiagramm gemäß einem zweiten "Smart Home"-Szenario, bei dem der Benutzer des als Telekommunikationshandapparat TKHA ausgebildeten zweiten Mobilteils MT2 der in den FIGUREN 1 bis 3 dargestellten Telekommunikationssysteme TKS1, TKS2, TKS3 auf diesem Mobilteil MT2 eine in der Basisstation BS terminierte Multimedianachricht zur Anzeige bringt und bearbeitet sowie eine neue Multimedianachricht erstellt. Der hierfür notwendige Meldungsfluss verläuft gemäß den FIGUREN 5a bis 5c zwischen dem leitungsvermittelten und/oder paketvermittelten Netz LVN, PVN, der mit dem Netz LVN, PVN über die Leitungsverbindung a/b, xDSL, ETHERNET verbundenen Basisstation BS und dem mit der Basisstation BS über die Luftschnittstelle LSS verbundenen zweiten Mobilteil MT2.

Die für die Darstellung des Meldungsflusses berücksichtigenden Baueinheiten oder Komponenten sind
**(i)** für die Basisstation BS eine Leitungs- und Netzanschaltung LNA, eine als BS-Prozessor ausgebildete Zentrale Steuereinheit BS-P, ein BS-Speicher BS-S sowie eine zwischen der Basisstation BS und dem Mobilteil MT2 wirksame, gemeinsame BS/MT-Luftschnittstelle BS/MT-LSS, die in der dargestellten Weise miteinander verbunden sind, und
**(ii)** für das zweite Mobilteil MT2 die mit der Basisstation BS gemeinsame BS/MT-Luftschnittstelle BS/MT-LSS, eine als MT-Prozessor ausgebildete Zentrale Steuereinheit MT-P, ein MT-Speicher MT-S sowie eine Benutzerschnittstelle BSS, die z.B. eine Tastatur TA und eine als Display ausgebildete Anzeigevorrichtung AV aufweist, wobei die Komponenten des Mobilteils MT2 in der dargestellten Weise miteinander verbunden sind.

In einem für alle Baueinheiten bzw. Komponenten maßgebenden Ausgangszustand AZ des Meldungsflussdiagramms wird eine Multimedianachricht MMN von der Basisstation BS empfangen (Terminierung der Nachricht in der Basisstation) und der Empfang der Multimedianachricht MMN auf dem Mobilteil MT2 angezeigt. Hierzu wird von dem leitungsvermittelten/paketvermittelten Netz LVN, PVN die Multimedianachricht MMN über die Leitungs- und Netzanschaltung LNA dem BS-Prozessor BS-P übermittelt. Der BS-Prozessor BS-P speichert zu der Multimedianachricht MMN korrespondierende MMN-Daten MMN-D in den BS-Speicher ab. Danach sendet der BS-Prozessor BS-P eine Broadcastmeldung "Neue Multimedianachricht" BCM über die BS/MT-Luftschnittstelle BS/MT-LSS an den MT-Prozessor MT-P. Der MT-Prozessor MT-P gibt im Anschluss daran eine Anzeigeinformation "Multimedianachricht liegt vor" AI an das Display AV der Benutzerschnittstelle BSS, wo diese Information angezeigt wird.

In einem sich daran anschließenden, für alle Baueinheiten bzw. Komponenten bis auf die Leitungs- und Netzanschaltung LNA maßgebenden ersten Folgezustand FZ1 des Meldungsflussdiagramms wird eine bestimmte (n-te), in der Basisstation BS terminierte Multimedianachricht MMN vom Mobilteil MT2 ausgewählt und an diesem angezeigt. Hierzu wird von der Tastatur TA der Benutzerschnittstelle BSS ein Steuerungskommando "MMN-Liste" STK zum MT-Prozessor MT-P übertragen. Der MT-Prozessor MT-P sendet eine Anfragemeldung "MMN-Liste" AFM über die BS/MT-Luftschnittstelle BS/MT-LSS an den BS-Prozessor BS-P. Aufgrund dieser Anfragemeldung liest der BS-Prozessor BS-P sämtliche MMN-Daten aus dem BS-Speicher BS-S aus. Nach diesem Auslesevorgang sendet der BS-Prozessor BS-P eine Antwortmeldung AWM mit einer MMN-Datenliste MMN-DL über die BS/MT-Luftschnittstelle BS/MT-LSS an den MT-Prozessor MT-P. In dem MT-Prozessor MT-P wird die MMN-Datenliste MMN-DL in den MT-Speicher MT-S zwischengespeichert und an das Display AV der Benutzerschnittstelle BSS gegeben, wo die MMN-Datenliste MMN-DL angezeigt wird. Daran anschließend wird von der Tastatur TA der Benutzerschnittstelle BSS ein Steuerungskommando "n-te MMN aus Liste" STK zum MT-Prozessor MT-P übertragen. Der MT-Prozessor MT-P sendet daraufhin eine Anfragemeldung "n-te MMN aus Liste" AFM über die BS/MT-Luftschnittstelle BS/MT-LSS an den BS-Prozessor BS-P. Aufgrund dieser empfangenen Anfragemeldung liest der BS-Prozessor BS-P die n-ten MMN-Daten aus dem BS-Speicher BS-S aus. Nach Beendigung des Auslesevorgangs überträgt der BS-Prozessor BS-P in einer Antwortmeldung AWM die ausgelesenen n-ten MMN-Daten n-MMN-D über die BS/MT-Luftschnittstelle BS/MT-LSS an den MT-Prozessor MT-P. Von dem MT-Prozessor MT-P werden die übermittelten n-ten MMN-Daten n-MMN-D in den MT-Speicher MT-S gespeichert und an das Display AV der Benutzerschnittstelle BSS gegeben, wo diese Daten bzw. die n-te Multimedianachricht angezeigt werden.

In einem sich daran anschließenden, für die Baueinheiten bzw. Komponenten "MT-Prozessor, MT-Speicher, Benutzerschnittstelle/Display und Benutzerschnittstelle/Tastatur" maßgebenden zweiten Folgezustand FZ2 des Meldungsflussdiagramms wird eine angezeigte Multimedianachricht, z.B. die n-te Multimedianachricht, geändert. Hierzu wird von der Tastatur TA der Benutzerschnittstelle BSS ein Steuerungskommando "n-te MMN ändern" STK zum MT-Prozessor MT-P übertragen. Im Anschluss an die Übertragung des Steuerungskommandos STK werden von der Tastatur TA Änderungskommandos AEK dem MT-Prozessor MT-P übermittelt. Aufgrund dieser Änderungskommandos AEK wird von dem MT-Prozessor MT-P eine Änderungsnachricht AEN erzeugt und diese in dem MT-Speicher MT-S gespeichert und an das Display AV der Benutzerschnittstelle BSS gegeben, wo die Änderungsnachricht AEN angezeigt wird.

In einem sich daran anschließenden, wieder für alle Baueinheiten bzw. Komponenten maßgebenden dritten Folgezustand FZ3 des Meldungsflussdiagramms wird eine angezeigte Multimedianachricht, z.B. die geänderte n-te Multimedianachricht, beantwortet. Hierzu wird von der Tastatur TA der Benutzerschnittstelle BSS ein Steuerungskommando "n-te MMN beantworten" STK zum MT-Prozessor MT-P übertragen. Im Anschluss an die Übertragung des Steuerungskommandos STK werden von der Tastatur TA Beantwortungskommandos BAK dem MT-Prozessor MT-P übermittelt. Aufgrund dieser Beantwortungskommandos BAK wird von dem MT-Prozessor MT-P eine Antwortnachricht AWN erzeugt und diese in dem MT-Speicher MT-S gespeichert und an das Display AV der Benutzerschnittstelle BSS gegeben, wo die Antwortnachricht AWN angezeigt wird. Abschließend wird von der Tastatur TA der Benutzerschnittstelle BSS ein Steuerungskommando "Antwortnachricht senden" STK zum MT-Prozessor MT-P - übertragen. Der MT-Prozessor MT-P liest Antwortdaten AWD der Antwortnachricht AWN aus dem MT-Speicher MT-S und überträgt die Antwortdaten AWD über die BS/MT-Luftschnittstelle BS/MT-LSS und den BS-Prozessor BS-P an die Leitungs- und Netzanschaltung LNA, von wo aus die zu den Antwortdaten AWD korrespondierende Antwortnachricht AWN an das leitungsvermittelte/paketvermittelte Netz LVN, PVN gesendet wird.

In einem sich daran anschließenden, wieder für alle Baueinheiten bzw. Komponenten maßgebenden vierten Folgezustand FZ4 des Meldungsflussdiagramms wird eine Multimedianachricht aus Nachrichtenelementen bzw. Nachrichtenkomponenten aus dem Speicher BS-S in der Basisstation BS erstellt und anschließend abgeschickt. Hierzu wird von der Tastatur TA der Benutzerschnittstelle BSS ein Steuerungskommando " MMN Menü" STK zum MT-Prozessor MT-P übertragen. Der MT-Prozessor MT-P sendet daraufhin eine Anfragemeldung "MMN-Elemente" AFM über die BS/MT-Luftschnittstelle BS/MT-LSS an den BS-Prozessor BS-P. Aufgrund dieser Anfragemeldung liest der BS-Prozessor BS-P sämtliche MMN-Datenelemente aus dem BS-Speicher BS-S aus. Nach diesem Auslesevorgang sendet der BS-Prozessor BS-P eine Antwortmeldung AWM mit MMN-Datenelementen MMN-DE über die BS/MT-Luftschnittstelle BS/MT-LSS an den MT-Prozessor MT-P. In dem MT-Prozessor MT-P wird aus den MMN-Datenelementen MMN-DE ein MMN-Menü MMN-M erzeugt, dieses Menü in den MT-Speicher MT-S zwischengespeichert und an das Display AV der Benutzerschnittstelle BSS gegeben, wo das MMN-Menü MMN-M angezeigt wird. Daran anschließend werden von der Tastatur TA der Benutzerschnittstelle BSS MMN-Erstellkommandos MMN-EK zum MT-Prozessor MT-P übertragen. Der MT-Prozessor MT-P erstellt aus diesen MMN-Erstellkommandos eine MMN-Nachricht MMN-N, die in den MT-Speicher MT-S gespeichert und an das Display AV der Benutzerschnittstelle BSS gegeben wird, wo die MMN-Nachricht MMN-N angezeigt wird. Daraufhin wird von der Tastatur TA der Benutzerschnittstelle BSS ein Steuerungskommando "MMN-Nachricht senden" STK zum MT-Prozessor MT-P übertragen. Der MT-Prozessor MT-P liest zu der MMN-Nachricht korrespondierende MMN-Daten MMN-D aus dem MT-Speicher MT-S und überträgt die MMN-Daten MMN-D über die BS/MT-Luftschnittstelle BS/MT-LSS und den BS-Prozessor BS-P an die Leitungs- und Netzanschaltung LNA, von wo aus die zu den MMN-Daten MMN-D korrespondierende Multimedianachricht MMN an das leitungsvermittelte/paketvermittelte Netz LVN, PVN gesendet wird.

FIGUR 6 zeigt ein drittes Meldungsflussdiagramm gemäß einem dritten "Smart Home"-Szenario, bei dem der Benutzer des als Telekommunikationshandapparat TKHA ausgebildeten zweiten Mobilteils MT2 der in den FIGUREN 1 bis 3 dargestellten Telekommunikationssysteme TKS1, TKS2, TKS3 mit diesem Mobilteil MT2 eine Multimedianachricht empfängt, also in dem Mobilteil MT2 terminiert, und zur Anzeige bringt. Der hierfür notwendige Meldungsfluss verläuft gemäß der FIGUR 6 zwischen dem leitungsvermittelten und/oder paketvermittelten Netz LVN, PVN, der mit dem Netz LVN, PVN über die Leitungsverbindung a/b, xDSL, ETHERNET verbundenen Basisstation BS und dem mit der Basisstation BS über die Luftschnittstelle LSS verbundenen zweiten Mobilteil MT2.

Die für die Darstellung des Meldungsflusses berücksichtigenden Baueinheiten oder Komponenten sind
**(i)** für die Basisstation BS eine Leitungs- und Netzanschaltung LNA, eine als BS-Prozessor ausgebildete Zentrale Steuereinheit BS-P, ein BS-Speicher BS-S sowie eine zwischen der Basisstation BS und dem Mobilteil MT2 wirksame, gemeinsame BS/MT-Luftschnittstelle BS/MT-LSS, die in der dargestellten Weise miteinander verbunden sind, und
**(ii)** für das zweite Mobilteil MT2 die mit der Basisstation BS gemeinsame BS/MT-Luftschnittstelle BS/MT-LSS, eine z.B. als Modem oder ISDN-D-Kanal ausgebildete Digitale Netzanbindung DNA, eine als MT-Prozessor ausgebildete Zentrale Steuereinheit MT-P, ein MT-Speicher MT-S sowie eine Benutzerschnittstelle BSS, die z.B. eine Tastatur TA und eine als Display ausgebildete Anzeigevorrichtung AV aufweist, wobei die Komponenten des Mobilteils MT3 in der dargestellten Weise miteinander verbunden sind.

In einem für alle Baueinheiten bzw. Komponenten maßgebenden Ausgangszustand AZ des Meldungsflussdiagramms wird eine Multimedianachricht MMN von dem Mobilteil MT2 empfangen (Terminierung der Nachricht in dem Mobilteil) und der Empfang der Multimedianachricht MMN auf dem Mobilteil MT2 angezeigt. Hierzu wird von dem leitungsvermittelten/paketvermittelten Netz LVN, PVN die Multimedianachricht MMN über die Leitungs- und Netzanschaltung LNA dem BS-Prozessor BS-P übermittelt, worauf dieser eine Broadcastmeldung "Neue Multimedianachricht" BCM über die BS/MT-Luftschnittstelle BS/MT-LSS und die Digitale Netzanbindung DNA an den MT-Prozessor MT-P sendet. Der MT-Prozessor MT-P gibt im Anschluss daran eine Anzeigeinformation "Multimedianachricht liegt vor" AI an das Display AV der Benutzerschnittstelle BSS, wo diese Information angezeigt wird. Danach wird von der Tastatur TA der Benutzerschnittstelle BSS ein Steuerungskommando "Kommunikationsverbindung zum MMN-Dienstzentrum aufbauen" STK zum MT-Prozessor MT-P übertragen. Der MT-Prozessor MT-P überträgt zum Aufbau einer Kommunikationsverbindung zum MMN-Dienstzentrum eine Aufbaumeldung "Kommunikationsverbindung zum MMN-Dienstzentrum" AUM über die Digitale Netzanbindung DNA und die BS/MT-Luftschnittstelle BS/MT-LSS an den BS-Prozessor BS-P. Von dem BS-Prozessor BS-P wird daraufhin über die Leitungs- und Netzanschaltung LNA die Kommunikationsverbindung zum MMN-Dienstzentrum in dem leitungsvermittelten/paketvermittelten Netz LVN, PVN aufgebaut. Erhält der BS-Prozessor BS-P daraufhin über die Leitungs- und Netzanschaltung LNA aus dem leitungsvermittelten/paketvermittelten Netz LVN, PVN eine Bestätigung über den Aufbau der Kommunikationsverbindung, so sendet dieser eine Bestätigungsmeldung "Aufbau der Kommunikationsverbindung" BM über die BS/MT-Luftschnittstelle BS/MT-LSS und die Digitale Netzanbindung DNA an den MT-Prozessor MT-P. Danach wird von der Tastatur TA der Benutzerschnittstelle BSS ein Steuerungskommando "Multimedianachricht abholen" STK zum MT-Prozessor MT-P übertragen. Der MT-Prozessor MT-P sendet daraufhin eine Anfragemeldung "Abholen der Multimedianachricht" AFM über die Digitale Netzanbindung DNA und die BS/MT-Luftschnittstelle BS/MT-LSS an den BS-Prozessor BS-P. Von dem BS-Prozessor BS-P wird daraufhin über die Leitungs- und Netzanschaltung LNA die Kommunikationsverbindung zum MMN-Dienstzentrum die Multimedianachricht aus dem leitungsvermittelten/paketvermittelten Netz LVN, PVN abgeholt. Erhält der BS-Prozessor BS-P daraufhin über die Leitungs- und Netzanschaltung LNA aus dem leitungsvermittelten/paketvermittelten Netz LVN, PVN MMN-Daten MMN-D, so sendet dieser eine Antwortmeldung AWM mit den MMN-Daten MMN-D über die BS/MT-Luftschnittstelle BS/MT-LSS und die Digitale Netzanbindung DNA an den MT-Prozessor MT-P. Von dem MT-Prozessor MT-P werden die übermittelten MMN-Daten MMN-D in den MT-Speicher MT-S gespeichert und an das Display AV der Benutzerschnittstelle BSS gegeben, wo diese Daten bzw. die Multimedianachricht angezeigt werden. Anschließend überträgt der MT-Prozessor MT-P zum Abbau der Kommunikationsverbindung zum MMN-Dienstzentrum eine Abbaumeldung "Kommunikationsverbindung zum MMN-Dienstzentrum" ABM über die Digitale Netzanbindung DNA und die BS/MT-Luftschnittstelle BS/MT-LSS an den BS-Prozessor BS-P. Von dem BS-Prozessor BS-P wird daraufhin über die Leitungs- und Netzanschaltung LNA die Kommunikationsverbindung zum MMN-Dienstzentrum in dem leitungsvermittelten/paketvermittelten Netz LVN, PVN abgebaut. Erhält der BS-Prozessor BS-P daraufhin über die Leitungs- und Netzanschaltung LNA aus dem leitungsvermittelten/paketvermittelten Netz LVN, PVN eine Bestätigung über den Abbau der Kommunikationsverbindung, so sendet dieser eine Bestätigungsmeldung "Abbau der Kommunikationsverbindung" BM über die BS/MT-Luftschnittstelle BS/MT-LSS und die Digitale Netzanbindung DNA an den MT-Prozessor MT-P, wodurch die Verbindung abgebaut ist.

FIGUREN 7a und 7b zeigen ein viertes Meldungsflussdiagramm gemäß einem vierten "Smart Home"-Szenario, bei dem der Benutzer des als Telekommunikationshandapparat TKHA ausgebildeten zweiten Mobilteils MT2 der in den FIGUREN 1 bis 3 dargestellten Telekommunikationssysteme TKS1, TKS2, TKS3 eine bestimmte (n-te) Multimedianachricht von diesem Mobilteil MT2 auf ein anderes Mobilteil, z.B. das erste Mobilteil MT1 oder ein weiteres zweites Mobilteil MT2, intern überträgt. Der hierfür notwendige Meldungsfluss verläuft gemäß den FIGUREN 7a und 7b zwischen dem zweiten Mobilteil MT2 und dem mit diesem über die Luftschnittstelle LSS unmittelbar (Point-To-Point-Verbindung) oder mittelbar über die Basisstation BS verbundenen weiteren Mobilteil MT1, MT2.

Die für die Darstellung des Meldungsflusses berücksichtigenden Baueinheiten oder Komponenten sind
**(i)** für das Mobilteil MT2 eine Benutzerschnittstelle BSS, die z.B. eine Tastatur TA und eine als Display ausgebildete Anzeigevorrichtung AV aufweist, ein MT-Speicher MT-S, eine als MT-Prozessor ausgebildete Zentrale Steuereinheit MT-P sowie eine zwischen dem Mobilteil MT2 und dem weiteren Mobilteil MT1, MT2 wirksame, gemeinsame MT/MT-Luftschnittstelle MT/MT-LSS, die in der dargestellten Weise miteinander verbunden sind, und
**(ii)** für das weitere Mobilteil MT1, MT2 die mit dem zweiten Mobilteil MT2 gemeinsame MT/MT-Luftschnittstelle MT/MT-LSS, eine als MT-Prozessor ausgebildete Zentrale Steuereinheit MT-P, ein MT-Speicher MT-S sowie eine Benutzerschnittstelle BSS, die z.B. eine Tastatur TA und eine als Display ausgebildete Anzeigevorrichtung AV aufweist, wobei die Komponenten des Mobilteils MT2 in der dargestellten Weise miteinander verbunden sind.

In einem für alle Baueinheiten bzw. Komponenten maßgebenden Ausgangszustand AZ des Meldungsflussdiagramms wird eine n-te Multimedianachricht MMN von dem zweiten Mobilteil MT2 intern zu einem weiteren Mobilteil MT1, MT2 übertragen. Hierzu wird von der Tastatur TA der Benutzerschnittstelle BSS ein Steuerungskommando "MMN-Liste" STK zum MT-Prozessor MT-P übertragen. Der MT-Prozessor MT-P liest daraufhin sämtliche MMN-Daten aus dem MT-Speicher MT-S aus. Nach diesem Auslesevorgang gibt der MT-Prozessor MT-P eine MMN-Liste MMN-L an das Display AV der Benutzerschnittstelle BSS, wo diese MMN-Liste MMN-L angezeigt wird. Daran anschließend wird von der Tastatur TA der Benutzerschnittstelle BSS ein Steuerungskommando "n-te MMN aus Liste" STK zum MT-Prozessor MT-P übertragen. Der MT-Prozessor MT-P liest daraufhin n-ten MMN-Daten n-MMN-D aus dem MT-Speicher MT-S aus. Nach Beendigung des Auslesevorgangs gibt der MT-Prozessor MT-P die ausgelesenen n-ten MMN-Daten n-MMN-D an das Display AV der Benutzerschnittstelle BSS, wo diese Daten angezeigt werden. Danach wird von der Tastatur TA der Benutzerschnittstelle BSS ein Steuerungskommando "n-te MMN-Daten an weiteres Mobilteil senden" STK zum MT-Prozessor MT-P übertragen. Der MT-Prozessor MT-P überträgt zum Aufbau einer internen Kommunikationsverbindung eine Aufbaumeldung "Interne Kommunikationsverbindung" AUM über die MT/MT-Luftschnittstelle MT/MT-LSS an den MT-Prozessor MT-P des weiteren Mobilteils MT1, MT2. Dieser MT-Prozessor MT-P sendet daraufhin eine Bestätigungsmeldung BM über die MT/MT-Luftschnittstelle MT/MT-LSS an den MT-Prozessor MT-P des zweiten Mobilteils MT2 zurück. Der MT-Prozessor MT-P sendet daraufhin eine Anfragemeldung "n-te MMN-Daten übertragen?" AFM über die MT/MT-Luftschnittstelle MT/MT-LSS an den MT-Prozessor MT-P des weiteren Mobilteils MT1, MT2. Dieser MT-Prozessor MT-P sendet als Antwort eine Antwortmeldung "Einverstanden" AWM über die MT/MT-Luftschnittstelle MT/MT-LSS an den MT-Prozessor MT-P des zweiten Mobilteils MT2 zurück. Aufgrund dieser Anwortmeldung AWM liest der MT-Prozessor MT-P die n-ten MMN-Daten n-MMN-D aus dem MT-Speicher MT-S aus. Nach diesem Auslesevorgang sendet der MT-Prozessor MT-P eine Übertragungsmeldung ÜM mit den n-ten MMN-Daten n-MMN-D über die MT/MT-Luftschnittstelle MT/MT-LSS an den MT-Prozessor MT-P des weiteren Mobilteils MT1, MT2. Von diesem MT-Prozessor MT-P werden die n-ten MMN-Daten n-MMN-D in den MT-Speicher MT-S gespeichert und gegebenenfalls an das Display AV der Benutzerschnittstelle BSS gegeben, wo diese Daten angezeigt werden können. Daran anschließend wird von dem MT-Prozessor MT-P eine Bestätigungsmeldung "Daten erhalten" BM über die MT/MT-Luftschnittstelle MT/MT-LSS an den MT-Prozessor MT-P des zweiten Mobilteils MT2 gesendet. Aufgrund dieser empfangenen Bestätigungsmeldung BM gibt der MT-Prozessor MT-P eine Anzeigeinformation "n-te MMN-Daten erfolgreich übertragen" AI an das Display AV der Benutzerschnittstelle BSS des zweiten Mobilteils MT2, wo diese Information angezeigt wird. Danach wird von der Tastatur TA der Benutzerschnittstelle BSS ein Steuerungskommando "Verbindung beenden" STK zum MT-Prozessor MT-P des zweiten Mobilteils MT2 übertragen, worauf dieser zum Abbau der aufgebauten internen Kommunikationsverbindung eine Abbaumeldung "Interne Kommunikationsverbindung" ABM über die MT/MT-Luftschnittstelle MT/MT-LSS an den MT-Prozessor MB-P des weiteren Mobilteils MT1, MT2 sendet, die dieser auf dem gleichen Meldungsweg in umgekehrter Richtung mit einer weiteren Bestätigungsmeldung BM beantwortet, wodurch die Verbindung abgebaut ist.

FIGUREN 8a bis 8d zeigen ein fünftes Meldungsflussdiagramm gemäß einem fünften "Smart Home"-Szenario, bei dem der Benutzer des als Telekommunikationshandapparat TKHA ausgebildeten zweiten Mobilteils MT2 der in den FIGUREN 1 bis 3 dargestellten Telekommunikationssysteme TKS1, TKS2, TKS3 einen Video-Film, der auf dem Personal Computer PC gespeichert ist, an dem Fernsehapparat FA anschaut. Der hierfür notwendige Meldungsfluss verläuft gemäß den FIGUREN 8a bis 8d zwischen dem zweiten Mobilteil MT2, dem mit dem zweiten Mobilteil MT2 über die Luftschnittstelle LSS unmittelbar (Point-To-Point-Verbindung oder mittelbar über die Basisstation BS verbundenen Personal Computer PC mit der gemäß den FIGUREN 1 und 3 integrierten I/O-Mobilboxkarte MBK, der mit dem Personal Computer PC über die Luftschnittstelle LSS verbundenen I/O-Mobilbox MB und dem mit der I/O-Mobilbox MB über die Leitungsverbindung SCART, S-VIDEO verbundenen Fernsehapparat FA.

Die für die Darstellung des Meldungsflusses berücksichtigenden Baueinheiten oder Komponenten sind
**(i)** für das Mobilteil MT2 eine Benutzerschnittstelle BSS, die z.B. eine Tastatur TA und eine als Display ausgebildete Anzeigevorrichtung AV aufweist, ein MT-Speicher MT-S, eine als MT-Prozessor ausgebildete Zentrale Steuereinheit MT-P sowie eine zwischen dem Mobilteil MT2 und dem Personal Computer PC mit der integrierten I/O-Mobilboxkarte MBK wirksame, gemeinsame PC/MT-Luftschnittstelle PC/MT-LSS, die in der dargestellten Weise miteinander verbunden sind,
**(ii)** für den Personal Computer PC mit der integrierten I/O-Mobilboxkarte MBK die mit dem Mobilteil MT2 gemeinsame PC/MT-Luftschnittstelle PC/MT-LSS, eine als MT-Prozessor ausgebildete Zentrale Steuereinheit MT-P, ein PC-Speicher PC-S sowie eine zwischen dem Personal Computer PC mit der integrierten I/O-Mobilboxkarte MBK und der I/O-Mobilbox MB wirksame, gemeinsame PC/MB-Luftschnittstelle PC/MB-LSS, die in der dargestellten Weise miteinander verbunden sind,
**(iii)** für die I/O-Mobilbox MB die mit dem Personal Computer PC mit der integrierten I/O-Mobilboxkarte MBK gemeinsame PC/MB-Luftschnittstelle PC/MB-LSS, eine als MB-Prozessor ausgebildete Zentrale Steuereinheit MB-P, ein MB-Speicher MB-S sowie eine zwischen der I/O-Mobilbox MB und dem Fernsehapparat FA wirksame, gemeinsame Datenschnittstelle DSS, die in der dargestellten Weise miteinander verbunden sind, und
**(iv)** für den Fernsehapparat FA die mit der I/O-Mobilbox MB gemeinsame Datenschnittstelle DSS, eine als FA-Prozessor ausgebildete Zentrale Steuereinheit FA-P sowie ein FA-Bildschirm FA-B, die in der dargestellten Weise miteinander verbunden sind.

In einem für alle Baueinheiten bzw. Komponenten maßgebenden optionalen Vorabzustand VZ des Meldungsflussdiagramms können sich sowohl der Personal Computer PC als auch der Fernsehapparat FA in einem "Stand-by"-Modus befinden und in diesem Zustand von dem Mobilteil MT2 gemäß der in der FIGUR 4 beschriebenen Weckprozedur aufgeweckt und in Betrieb genommen werden. In einem darauf folgenden, für alle Baueinheiten bzw. Komponenten maßgebenden Ausgangszustand AZ des Meldungsflussdiagramms wird ein Video-Film, der im Personal Computer PC gespeichert ist, am Fernsehapparat FA ausgegeben. Hierzu wird von der Tastatur TA der Benutzerschnittstelle BSS ein Steuerungskommando "Videoliste" STK vom MT-Prozessor MT-P übertragen. Der MT-Prozessor MT-P überträgt eine Anfragemeldung "Videoliste" AFM über die PC/MT-Luftschnittstelle PC/MT-LSS an den PC-Prozessor PC-P. Aufgrund dieser Anfragemeldung AFM liest der PC-Prozessor PC-P sämtliche Videodaten aus dem PC-Speicher PC-S aus. Nach diesem Auslesevorgang sendet der PC-Prozessor PC-P eine Antwortmeldung AWM mit einer Videodatenliste VDL über die PC/MT-Luftschnittstelle PC/MT-LSS an den MT-Prozessor MT-P. In dem MT-Prozessor MT-P wird die Videodatenliste VDL in den MT-Speicher MT-S zwischengespeichert und an das Display AV der Benutzerschnittstelle BSS gegeben, wo die Videodatenliste VDL angezeigt wird. Daran anschließend wird von der Tastatur TA der Benutzerschnittstelle BSS ein Steuerungskommando "n-tes Video aus Videoliste zum Zweck der Ausgabe am Fernsehapparat an zugeordnete I/O-Mobilbox zu übertragen" STK zum MT-Prozessor MT-P übertragen. Der MT-Prozessor MT-P sendet daraufhin eine Aufforderungsmeldung "n-tes Video aus Videoliste zum Zweck der Ausgabe am Fernsehapparat an zugeordnete I/O-Mobilbox zu übertragen" AFFN über die PC/MT-Luftschnittstelle PC/MT-LSS an den PC-Prozessor PC-P. Im Anschluss an die Übertragung der Aufforderungsmeldung AFFM wird von dem PC-Prozessor PC-P eine Anfragemeldung "Videoausgabe am Fernsehapparat" AFM über die PC/MB-Luftschnittstelle PC/MB-LSS an den MB-Prozessor MB-P gesendet, worauf der MB-Prozessor MB-P eine Informationsmeldung "Videoausgabe am Fernsehapparat" INM über die Datenschnittstelle DSS an den FA-Prozessor FA-P überträgt. Nach der Aussendung dieser Informationsmeldung INM wird von dem MB-Prozessor MB-P eine Antwortmeldung "Für Videoausgabe bereit" AWN über die PC/MB-Luftschnittstelle PC/MB-LSS an den PC-Prozessor PC-P gesendet.

In einem sich daran anschließenden, für die Baueinheiten bzw. Komponenten "PC-Prozessor und PC-Speicher" maßgebenden ersten Folgezustand FZ1 des Meldungsflussdiagramms werden je nach der Menge der zu übertragenden Daten und der Übertragungsrate der Luftschnittstelle die Daten in Portionen übertragen. Hierfür liest der PC-Prozessor PC-P eine erste Portion der n-ten Videodaten P1-n-VD aus dem PC-Speicher PC-S aus. Nach dem Auslesevorgang dieser ersten Portion der n-ten Videodaten P1-n-VD wird die erste Portion der n-ten Videodaten P1-n-VD von dem PC-Prozessor PC-P über die PC/MB-Luftschnittstelle PC/MB-LSS an den MB-Prozessor MB-P übertragen, wo sie von diesem zur Zwischenspeicherung an den MB-Speicher MB-S übergeben und anschließend zur Ausgabe auf den FA-Bildschirm FA-B des Fernsehapparats FA über die Datenschnittstelle DSS dem FA-Prozessor FA-P weitergeleitet werden.

In einem sich daran anschließenden, für alle Baueinheiten bzw. Komponenten maßgebenden zweiten Folgezustand FZ2 des Meldungsflussdiagramms wird die Wiedergabe des Video-Films am Fernsehapparat FA durch die Benutzereingabe von Kontrollkommandos auf der Benutzerschnittstelle BSS des Mobilteils gesteuert. Solche Kommandos sind z.B. Vor- und Zurückfahren, Anhalten, Beenden, Fortsetzen etc. der Wiedergabe. Hierzu wird von dem MB-Prozessor MB-P eine Anfragemeldung "Nächste Videodaten" AFM über die PC/MB-Luftschnittstelle PC/MB-LSS an den PC-Prozessor PC-P gesendet. Aufgrund dieser Anfragemeldung AFM liest der PC-Prozessor PC-P eine zweite Portion der n-ten Videodaten P2-n-VD aus dem PC-Speicher PC-S aus. Nach dem Auslesevorgang dieser zweiten Portion der n-ten Videodaten P2-n-VD wird die zweite Portion der n-ten Videodaten P2-n-VD von dem PC-Prozessor PC-P über die PC/MB-Luftschnittstelle PC/MB-LSS an den MB-Prozessor MB-P übertragen, wo sie von diesem zur Zwischenspeicherung an den MB-Speicher MB-S übergeben und anschließend zur Ausgabe auf den FA-Bildschirm FA-B des Fernsehapparats FA über die Datenschnittstelle DSS dem FA-Prozessor FA-P weitergeleitet werden.

In einem sich daran anschließenden, für alle Baueinheiten bzw. Komponenten maßgebenden dritten Folgezustand FZ3 des Meldungsflussdiagramms wird die Wiedergabe des Video-Films am Fernsehapparat FA durch die Benutzereingabe von Kontrollkommandos auf der Benutzerschnittstelle BSS des Mobilteils gesteuert. Solche Kommandos sind z.B. Vor- und Zurückfahren, Anhalten, Beenden, Fortsetzen etc. der Wiedergabe. Hierzu wird von dem MB-Prozessor MB-P eine Anfragemeldung "Nächste Videodaten" AFM über die PC/MB-Luftschnittstelle PC/MB-LSS an den PC-Prozessor PC-P gesendet. Aufgrund dieser Anfragemeldung AFM liest der PC-Prozessor PC-P eine m-te Portion der n-ten Videodaten Pm-n-VD aus dem PC-Speicher PC-S aus. Nach dem Auslesevorgang dieser m-ten Portion der n-ten Videodaten Pmn-VD wird die m-te Portion der n-ten Videodaten Pm-n-VD von dem PC-Prozessor PC-P über die PC/MB-Luftschnittstelle PC/MB-LSS an den MB-Prozessor MB-P übertragen, wo sie von diesem zur Zwischenspeicherung an den MB-Speicher MB-S übergeben und anschließend zur Ausgabe auf den FA-Bildschirm FA-B des Fernsehapparats FA über die Datenschnittstelle DSS dem FA-Prozessor FA-P weitergeleitet werden.

In einem sich daran anschließenden, für alle Baueinheiten bzw. Komponenten maßgebenden vierten Folgezustand FZ4 des Meldungsflussdiagramms wird die Wiedergabe des Video-Films am Fernsehapparat FA durch die Benutzereingabe von Kontrollkommandos auf der Benutzerschnittstelle BSS des Mobilteils gesteuert. Solche Kommandos sind z.B. Vor- und Zurückfahren, Anhalten, Beenden, Fortsetzen etc. der Wiedergabe. Hierzu wird von dem MB-Prozessor MB-P eine Anfragemeldung "Nächste Videodaten" AFM über die PC/MB-Luftschnittstelle PC/MB-LSS an den PC-Prozessor PC-P gesendet. Aufgrund dieser Anfragemeldung AFM wird von dem PC-Prozessor PC-P eine Antwortmeldung "Ende der Übertragung" AWM über die PC/MB-Luftschnittstelle PC/MB-LSS an den MB-Prozessor MB-P übertragen. Der MB-Prozessor MB-P sendet daraufhin eine Informationsmeldung "Videoausgabe beendet" über die Datenschnittstelle DSS an den FA-Prozessor FA-P.

FIGUREN 9a bis 9d zeigen ein sechstes Meldungsflussdiagramm gemäß einem sechsten "Smart Home"-Szenario, bei dem der Benutzer des als Telekommunikationshandapparat TKHA ausgebildeten dritten Mobilteils MT3 der in den FIGUREN 1 bis 3 dargestellten Telekommunikationssysteme TKS1, TKS2, TKS3 eine MP3-Datei (MP3-File), die bzw. das auf dem Personal Computer PC gespeichert ist, auf der HIFI-Anlage HA ausgibt. Der hierfür notwendige Meldungsfluss verläuft gemäß den FIGUREN 9a bis 9d zwischen dem zweiten Mobilteil MT23, dem mit dem zweiten Mobilteil MT2 über die Luftschnittstelle LSS unmittelbar (Point-To-Point-Verbindung oder mittelbar über die Basisstation BS verbundenen Personal Computer PC mit der gemäß den FIGUREN 1 und 3 integrierten I/O-Mobilboxkarte MBK, der mit dem Personal Computer PC über die Luftschnittstelle LSS verbundenen I/O-Mobilbox MB und der mit der I/O-Mobilbox MB über die Leitungsverbindung CINCH, S/PDIF verbundenen HIFI-Anlage HA.

Die für die Darstellung des Meldungsflusses berücksichtigenden Baueinheiten oder Komponenten sind
**(i)** für das Mobilteil MT2 eine Benutzerschnittstelle BSS, die z.B. eine Tastatur TA und eine als Display ausgebildete Anzeigevorrichtung AV aufweist, ein MT-Speicher MT-S, eine als MT-Prozessor ausgebildete Zentrale Steuereinheit MT-P sowie eine zwischen dem Mobilteil MT2 und dem Personal Computer PC mit der integrierten I/O-Mobilboxkarte MBK wirksame, gemeinsame PC/MT-Luftschnittstelle PC/MT-LSS, die in der dargestellten Weise miteinander verbunden sind,
**(ii)** für den Personal Computer PC mit der integrierten I/O-Mobilboxkarte MBK die mit dem Mobilteil MT2 gemeinsame PC/MT-Luftschnittstelle PC/MT-LSS, eine als MT-Prozessor ausgebildete Zentrale Steuereinheit MT-P, ein PC-Speicher PC-S sowie eine zwischen dem Personal Computer PC mit der integrierten I/O-Mobilboxkarte MBK und der I/O-Mobilbox MB wirksame, gemeinsame PC/MB-Luftschnittstelle PC/MB-LSS, die in der dargestellten Weise miteinander verbunden sind,
**(iii)** für die I/O-Mobilbox MB die mit dem Personal Computer PC mit der integrierten I/O-Mobilboxkarte MBK gemeinsame PC/MB-Luftschnittstelle PC/MB-LSS, eine als MB-Prozessor ausgebildete Zentrale Steuereinheit MB-P, ein MB-Speicher MB-S sowie eine zwischen der I/O-Mobilbox MB und dem Fernsehapparat FA wirksame, gemeinsame Datenschnittstelle DSS, die in der dargestellten Weise miteinander verbunden sind, und
**(iv)** für die HIFI-Anlage HA die mit der I/O-Mobilbox MB gemeinsame Datenschnittstelle DSS, eine als HA-Prozessor ausgebildete Zentrale Steuereinheit HA-P sowie ein E/A-Wandler E/A-W, die in der dargestellten Weise miteinander verbunden sind.

In einem für alle Baueinheiten bzw. Komponenten maßgebenden optionalen Vorabzustand VZ des Meldungsflussdiagramms können sich sowohl der Personal Computer PC als auch die HIFI-Anlage HA in einem "Stand-by"-Modus befinden und in diesem Zustand von dem Mobilteil MT2 gemäß der in der FIGUR 4 beschriebenen Weckprozedur aufgeweckt und in Betrieb genommen werden. In einem darauf folgenden, für alle Baueinheiten bzw. Komponenten maßgebenden Ausgangszustand AZ des Meldungsflussdiagramms wird das MP3-File, das im Personal Computer PC gespeichert ist, auf der HIFI-Anlage HA ausgegeben. Hierzu wird von der Tastatur TA der Benutzerschnittstelle BSS ein Steuerungskommando "MP3-Liste" STK vom MT-Prozessor MT-P übertragen. Der MT-Prozessor MT-P überträgt eine Anfragemeldung "MP3-Liste" AFM über die PC/MT-Luftschnittstelle PC/MT-LSS an den PC-Prozessor PC-P. Aufgrund dieser Anfragemeldung AFM liest der PC-Prozessor PC-P sämtliche MP3-Daten aus dem PC-Speicher PC-S aus. Nach diesem Auslesevorgang sendet der PC-Prozessor PC-P eine Antwortmeldung AWM mit einer MP3-Datenliste MP3-DL - über die PC/MT-Luftschnittstelle PC/MT-LSS an den MT-Prozessor MT-P. In dem MT-Prozessor MT-P wird die MP3-Datenliste MP3-DL in den MT-Speicher MT-S zwischengespeichert und an das Display AV der Benutzerschnittstelle BSS gegeben, wo die MP3-Datenliste MP3-DL angezeigt wird. Daran anschließend wird von der Tastatur TA der Benutzerschnittstelle BSS ein Steuerungskommando "n-tes MP3-File aus MP3-Liste zum Zweck der Ausgabe auf der HIFI-Anlage an zugeordnete I/O-Mobilbox zu übertragen" STK zum MT-Prozessor MT-P übertragen. Der MT-Prozessor MT-P sendet daraufhin eine Aufforderungsmeldung "n-tes MP3-File aus MP3-Liste zum Zweck der Ausgabe auf der HIFI-Anlage an zugeordnete I/O-Mobilbox zu übertragen" AFFN über die PC/MT-Luftschnittstelle PC/MT-LSS an den PC-Prozessor PC-P. Im Anschluss an die Übertragung der Aufforderungsmeldung AFFM wird von dem PC-Prozessor PC-P eine Anfragemeldung "MP3-Ausgbabe auf HIFI-Anlage" AFM über die PC/MB-Luftschnittstelle PC/MB-LSS an den MB-Prozessor MB-P gesendet, worauf der MB-Prozessor MB-P eine Informationsmeldung "MP3-Ausgbabe auf HIFI-Anlage" INM über die Datenschnittstelle DSS an den HA-Prozessor HA-P überträgt. Nach der Aussendung dieser Informationsmeldung INM wird von dem MB-Prozessor MB-P eine Antwortmeldung "Für MP3-Ausgabe bereit" AWN über die PC/MB-Luftschnittstelle PC/MB-LSS an den PC-Prozessor PC-P gesendet.

In einem sich daran anschließenden, für die Baueinheiten bzw. Komponenten "PC-Prozessor und PC-Speicher" maßgebenden ersten Folgezustand FZ1 des Meldungsflussdiagramms werden je nach der Menge der zu übertragenden Daten und der Übertragungsrate der Luftschnittstelle die Daten in Portionen übertragen. Hierfür liest der PC-Prozessor PC-P eine erste Portion der n-ten MP3-Daten P1-n-MP3-D aus dem PC-Speicher PC-S aus. Nach dem Auslesevorgang dieser ersten Portion der n-ten MP3-Daten P1-n-MP3-D wird die erste Portion der n-ten MP3-Daten P1-n-MP3-D von dem PC-Prozessor PC-P über die PC/MB-Luftschnittstelle PC/MB-LSS an den MB-Prozessor MB-P übertragen, wo sie von diesem zur Zwischenspeicherung an den MB-Speicher MB-S übergeben und anschließend zur Ausgabe auf den E/A-Wandler E/A-W der HIFI-Anlage HA über die Datenschnittstelle DSS dem HA-Prozessor HFA-P weitergeleitet werden.

In einem sich daran anschließenden, für alle Baueinheiten bzw. Komponenten maßgebenden zweiten Folgezustand FZ2 des Meldungsflussdiagramms wird die Wiedergabe des MP3-Files auf der HIFI-Anlage HA durch die Benutzereingabe von Kontrollkommandos auf der Benutzerschnittstelle BSS des Mobilteils gesteuert. Solche Kommandos sind z.B. Vor- und Zurückfahren, Anhalten, Beenden, Fortsetzen etc. der Wiedergabe. Hierzu wird von dem MB-Prozessor MB-P eine Anfragemeldung "Nächste MP3-Daten" AFM über die PC/MB-Luftschnittstelle PC/MB-LSS an den PC-Prozessor PC-P gesendet. Aufgrund dieser Anfragemeldung AFM liest der PC-Prozessor PC-P eine zweite Portion der n-ten MP3-Daten P2-n-MP3-D aus dem PC-Speicher PC-S aus. Nach dem Auslesevorgang dieser zweiten Portion der n-ten MP3-Daten P2-n-MP3-D wird die zweite Portion der n-ten MP3-Daten P2-n-MP3-D von dem PC-Prozessor PC-P über die PC/MB-Luftschnittstelle PC/MB-LSS an den MB-Prozessor MB-P übertragen, wo sie von diesem zur Zwischenspeicherung an den MB-Speicher MB-S übergeben und anschließend zur Ausgabe auf den E/A-Wandler E/A-W der HIFI-Anlage über die Datenschnittstelle DSS dem HA-Prozessor HA-P weitergeleitet werden.

In einem sich daran anschließenden, für alle Baueinheiten bzw. Komponenten maßgebenden dritten Folgezustand FZ3 des Meldungsflussdiagramms wird die Wiedergabe des MP3-Files auf der HIFI-Anlage HA durch die Benutzereingabe von Kontrollkommandos auf der Benutzerschnittstelle BSS des Mobilteils gesteuert. Solche Kommandos sind z.B. Vor- und Zurückfahren, Anhalten, Beenden, Fortsetzen etc. der Wiedergabe. Hierzu wird von dem MB-Prozessor MB-P eine Anfragemeldung "Nächste MP3-Daten" AFM über die PC/MB-Luftschnittstelle PC/MB-LSS an den PC-Prozessor PC-P gesendet. Aufgrund dieser Anfragemeldung AFM liest der PC-Prozessor PC-P eine m-te Portion der n-ten MP3-Daten Pm-n-MP3-D aus dem PC-Speicher PC-S aus. Nach dem Auslesevorgang dieser m-ten Portion der n-ten MP3-Daten Pm-n-MP3-D wird die m-te Portion der n-ten MP3-Daten Pm-n-MP3-D von dem PC-Prozessor PC-P über die PC/MB-Luftschnittstelle PC/MB-LSS an den MB-Prozessor MB-P übertragen, wo sie von diesem zur Zwischenspeicherung an den MB-Speicher MB-S übergeben und anschließend zur Ausgabe auf den E/A-Wandler E/A-W der HIFI-Anlage über die Datenschnittstelle DSS dem HA-Prozessor HA-P weitergeleitet werden.

In einem sich daran anschließenden, für alle Baueinheiten bzw. Komponenten maßgebenden vierten Folgezustand FZ4 des Meldungsflussdiagramms wird die Wiedergabe des MP3-Files auf der HIFI-Anlage HA durch die Benutzereingabe von Kontrollkommandos auf der Benutzerschnittstelle BSS des Mobilteils gesteuert. Solche Kommandos sind z.B. Vor- und Zurückfahren, Anhalten, Beenden, Fortsetzen etc. der Wiedergabe. Hierzu wird von dem MB-Prozessor MB-P eine Anfragemeldung "Nächste MP3-Daten" AFM über die PC/MB-Luftschnittstelle PC/MB-LSS an den PC-Prozessor PC-P gesendet. Aufgrund dieser Anfragemeldung AFM wird von dem PC-Prozessor PC-P eine Antwortmeldung "Ende der Übertragung" AWM über die PC/MB-Luftschnittstelle PC/MB-LSS an den MB-Prozessor MB-P übertragen. Der MB-Prozessor MB-P sendet daraufhin eine Informationsmeldung "MP3-Ausgabe beendet" über die Datenschnittstelle DSS an den HA-Prozessor HA-P.

FIGUREN 10a bis 10c zeigen ein siebtes Meldungsflussdiagramm gemäß einem siebten "Smart Home"-Szenario, bei dem der Benutzer des als Telekommunikationshandapparat TKHA ausgebildeten dritten Mobilteils MT3 der in den FIGUREN 1 bis 3 dargestellten Telekommunikationssysteme TKS1, TKS2, TKS3 durch das Mobilteil MT2 über den Beginn einer Fernsehsendung und die Unterbrechung dieser durch Werbeblocks informiert wird. Der hierfür notwendig Meldungsfluss läuft gemäß den FIGUREN 10a bis 10c zwischen dem zweiten Mobilteil MT2 und der mit diesem über die Luftschnittstelle LSS unmittelbar (Point-to-Point-Verbindung) oder mittelbar über die Basisstation BS verbundenen Settop-Box STB mit dem daran angeschlossenen Fernsehapparat FA und der Verbindung zu dem DVB-T/S/T-Netz DVBN.

Die für die Darstellung des Meldungsflusses berücksichtigten Baueinheiten oder Komponenten sind
**(i)** für das Mobilteil MT2 eine Benutzerschnittstelle BSS, die z.B. einen E/A-Wandler E/A-W, eine Tastatur TA und eine als Display ausgebildete Anzeigevorrichtung AV aufweist, ein MT-Speicher MT-S, eine als MT-Prozessor ausgebildete Zentrale Steuereinheit MT-P sowie eine zwischen dem Mobilteil MT2 und der Settop-Box STB wirksame, gemeinsame MT/STB-Luftschnittstelle MT/STB-LSS, die in der dargestellten Weise miteinander verbunden sind, und
**(ii)** für die Settop-Box STB die mit dem Mobilteil MT2 gemeinsame MT/STB-Luftschnittstelle MT/STB-LSS, eine als STB-Prozessor ausgebildete Zentrale Steuereinheit STB-P, eine AS/DS-Schnittstelle AS/DS-SS mit einer Verbindung zu dem Fernsehapparat FA sowie eine DVB-Schnittstelle DVB-SS mit der Verbindung zu dem DVB-T/S/T-Netz DVBN, die in der dargestellten Weise miteinander verbunden sind.

In einem für alle Baueinheiten bzw. Komponenten maßgebenden Ausgangszustand AZ des Meldungsflussdiagramms wird durch das Mobilteil MT3 über den Beginn einer bestimmten Fernsehsendung erinnert. Hierzu wird von der Tastatur TA der Benutzerschnittstelle BSS ein Steuerungskommando "Fernsehprogramm vom Sender X am Tag Y" STK zum MT-Prozessor MT-P übertragen. Der MT-Prozessor MT-P überträgt zum Aufbau einer internen Kommunikationsverbindung eine Aufbaumeldung "Interne Kommunikationsverbindung" AUM über die MT/STB-Luftschnittstelle MT/STB-LSS an den STB-Prozessor STB-P. Der STB-Prozessor STB-P sendet daraufhin eine Bestätigungsmeldung BM über die MT/STB-Luftschnittstelle MT/STB-LSS an den MT-Prozessor MT-P zurück. Im Anschluss daran wird von dem MT-Prozessor MT-P eine Anfragemeldung "Fernsehprogramm vom Sender X am Tag Y" AFM über die MT/STB-Luftschnittstelle MT/STB-LSS an den STB-Prozessor STB-P übermittelt. Aufgrund dieser eingehenden Anfragemeldung AFM findet in dem STB-Prozessor STB-P eine Auswertung "Videotext oder Electronic Program Guide (EPG)" AW statt, bei der über die DVB-Schnittstelle DVB-SS aus dem DVB-T/S/C-Netz DVBN empfangene Videotext- oder EPG-Signalinformationen VT/EPG-SI (Electronic Program Guide) ausgewertet werden. Nach Beendigung dieser Auswertung AW durch den STB-Prozessor STB-P wird von diesem eine Antwortmeldung AWM mit Programmdaten PD über die MT/STB-Luftschnittstelle MT/STB-LSS an den MT-Prozessor MT-P gesendet. Von dem MT-Prozessor MT-P werden die empfangenen Programmdaten PD danach an das Display AV der Benutzerschnittstelle BSS gegeben, wo sie angezeigt werden. Danach wird von der Tastatur TA der Benutzerschnittstelle ein Steuerungskommando "Erinnerung über Beginn von Fernsehsendung Z (z.B. die ARD-Sportschau)" STK zu dem MT-Prozessor MT-P geschickt. Der MT-Prozessor MT-P überträgt daraufhin eine Anfragemeldung "Erinnerung über Beginn der Fernsehsendung Z" AFM über die MT/STB-Luftschnittstelle MT/STB-LSS an den STB-Prozessor STB-P. Aufgrund dieser empfangenen Anfragemeldung AFM wird von dem STB-Prozessor STB-P zusammen mit der DVB-Schnittstelle DVB-SS eine Überwachung "Beginn der Fernsehsendung Z" ÜW durchgeführt. Nach der Aufnahme der Überwachung ÜW sendet der STB-Prozessor STB-P eine Antwortmeldung "Erinnerungswunsch erhalten" AWM über die MT/STB-Luftschnittstelle MT/STB-LSS an den MT-Prozessor MT-P. Aufgrund dieser Antwortmeldung AWM wird von dem MT-Prozessor MT-P danach zum Abbau der aufgebauten internen Kommunikationsverbindung eine Abbaumeldung "Interne Kommunikationsverbindung" ABM über die MT/STB-Luftschnittstelle MT/STB-LSS an den STB-Prozessor STB-P übertragen, die dieser auf dem gleichen Meldungsweg in umgekehrter Richtung mit einer weiteren Bestätigungsmeldung BM beantwortet, wodurch die Verbindung abgebaut ist.

Im Anschluss daran erfolgt durch den STB-Prozessor STB-P aufgrund der Überwachung ÜW eine Feststellung "Beginn der Fernsehsendung Z" FST. Der STB-Prozessor STB-P überträgt daraufhin zum Aufbau einer internen Kommunikationsverbindung eine Aufbaumeldung "Interne Kommunikationsverbindung" AUM über die MT/STB-Luftschnittstelle MT/STB-LSS an den MT-Prozessor MT-P. Der MT-Prozessor MT-P sendet daraufhin eine Bestätigungsmeldung BM über die MT/STB-Luftschnittstelle MT/STB-LSS an den STB-Prozessor STB-P zurück. Aufgrund dieser empfangenen Bestätigungsmeldung BM wird von dem STB-Prozessor STB-P eine Erinnerungsmeldung "Beginn der Fernsehsendung Z" EM über die MT/STB-Luftschnittstelle MT/STB-LSS an den MT-Prozessor MT-P übertragen, worauf der MT-Prozessor MT-P eine erste Anzeigeinformation "Beginn der Fernsehsendung Z als Hinweistext (z.B. die ARD-Sportschau beginnt)" AI1 an das Display AV der Benutzerschnittstelle BSS und/oder eine zweite Anzeigeinformation "Hinweiston/-melodie oder Audiosignal der Fernsehsendung Z (z.B. Trailer der ARD-Sportschau)" AI2 an den E/A-Wandler E/A-W der Benutzerschnittstelle BSS gibt. Die jeweilige Anzeigeinformation AI1, AI2 wird anschließend auf dem Display AV und/oder dem E/A-Wandler E/A-W ausgegeben. Im Anschluss daran wird von der Tastatur TA der Benutzerschnittstelle BSS ein Steuerungskommando "Erinnerungsmeldung erhalten" STK an den MT-Prozessor MT-P gesendet. Infolge des empfangenen Steuerungskommandos STG wird von dem MT-Prozessor MT-P zum Abbau der aufgebauten internen Kommunikationsverbindung eine Abbaumeldung "Interne Kommunikationsverbindung" ABM über die MT/STB-Luftschnittstelle MT/STB-LSS an den STB-Prozessor STB-P übertragen, die dieser auf dem gleichen Meldungsweg in umgekehrter Richtung mit einer weiteren Bestätigungsmeldung BM beantwortet, wodurch die Verbindung abgebaut ist.

In einem sich daran anschließenden, für alle Baueinheiten bzw. Komponenten maßgebenden Folgezustand FZ des Meldungsflussdiagramms wird durch das Mobilteil MT2 über die Fortsetzung der Fernsehsendung Z, nachdem diese durch einen Werbeblock unterbrochen worden ist, nach dem Ende des Werbeblocks erinnert. Hierzu wird von der Tastatur TA der Benutzerschnittstelle BSS ein Steuerungskommando "Erinnerung über Fortsetzung der Fernsehsendung Z" STK zum MT-Prozessor MT-P übertragen. Der MT-Prozessor MT-P überträgt zum Aufbau einer internen Kommunikationsverbindung eine Aufbaumeldung "Interne Kommunikationsverbindung" AUM über die MT/STB-Luftschnittstelle MT/STB-LSS an den STB-Prozessor STB-P. Der STB-Prozessor STB-P sendet daraufhin eine Bestätigungsmeldung BM über die MT/STB-Luftschnittstelle MT/STB-LSS an den MT-Prozessor MT-P zurück. Im Anschluss daran wird von dem MT-Prozessor MT-P eine Anfragemeldung " Erinnerung über Fortsetzung der Fernsehsendung Z " AFM über die MT/STB-Luftschnittstelle MT/STB-LSS an den STB-Prozessor STB-P übermittelt. Aufgrund dieser empfangenen Anfragemeldung AFM wird von dem STB-Prozessor STB-P zusammen mit der DVB-Schnittstelle DVB-SS eine Überwachung "Ende des Werbeblocks" ÜW durchgeführt. Nach der Aufnahme der Überwachung ÜW sendet der STB-Prozessor STB-P eine Antwortmeldung "Erinnerungswunsch erhalten" AWM über die MT/STB-Luftschnittstelle MT/STB-LSS an den MT-Prozessor MT-P. Aufgrund dieser Antwortmeldung AWM wird von dem MT-Prozessor MT-P danach zum Abbau der aufgebauten internen Kommunikationsverbindung eine Abbaumeldung "Interne Kommunikationsverbindung" ABM über die MT/STB-Luftschnittstelle MT/STB-LSS an den STB-Prozessor STB-P übertragen, die dieser auf dem gleichen Meldungsweg in umgekehrter Richtung mit einer weiteren Bestätigungsmeldung BM beantwortet, wodurch die Verbindung abgebaut ist.

Im Anschluss daran erfolgt durch den STB-Prozessor STB-P aufgrund der Überwachung ÜW eine Feststellung "Ende des Werbeblocks" FST. Der STB-Prozessor STB-P überträgt daraufhin zum Aufbau einer internen Kommunikationsverbindung eine Aufbaumeldung "Interne Kommunikationsverbindung" AUM über die MT/STB-Luftschnittstelle MT/STB-LSS an den MT-Prozessor MT-P. Der MT-Prozessor MT-P sendet daraufhin eine Bestätigungsmeldung BM über die MT/STB-Luftschnittstelle MT/STB-LSS an den STB-Prozessor STB-P zurück. Aufgrund dieser empfangenen Bestätigungsmeldung BM wird von dem STB-Prozessor STB-P eine Erinnerungsmeldung "Ende des Werbeblocks" EM über die MT/STB-Luftschnittstelle MT/STB-LSS an den MT-Prozessor MT-P übertragen, worauf der MT-Prozessor MT-P eine erste Anzeigeinformation "Fortsetzung der Fernsehsendung Z als Hinweistext (z.B. die ARD-Sportschau beginnt wieder)" AI1 an das Display AV der Benutzerschnittstelle BSS und/oder eine zweite Anzeigeinformation "Hinweiston/-melodie oder Audiosignal der Fernsehsendung Z (z.B. Sprache des Sportschau-Moderators)" AI2 an den E/A-Wandler E/A-W der Benutzerschnittstelle BSS gibt. Die jeweilige Anzeigeinformation AI1, AI2 wird anschließend auf dem Display AV und/oder dem E/A-Wandler E/A-W ausgegeben. Im Anschluss daran wird von der Tastatur TA der Benutzerschnittstelle BSS ein Steuerungskommando "Erinnerungsmeldung erhalten" STK an den MT-Prozessor MT-P gesendet. Infolge des empfangenen Steuerungskommandos STG wird von dem MT-Prozessor MT-P zum Abbau der aufgebauten internen Kommunikationsverbindung eine Abbaumeldung "Interne Kommunikationsverbindung" ABM über die MT/STB-Luftschnittstelle MT/STB-LSS an den STB-Prozessor STB-P übertragen, die dieser auf dem gleichen Meldungsweg in umgekehrter Richtung mit einer weiteren Bestätigungsmeldung BM beantwortet, wodurch die Verbindung abgebaut ist.

FIGUREN 11a bis 11c zeigen ein achtes Meldungsdiagramm gemäß einem achten "Smart Home"-Szenario, bei dem der Benutzer des als Telekommunikationshandapparat TKHA ausgebildeten dritten Mobilteils MT3 der in den FIGUREN 1 bis 3 dargestellten Telekommunikationssysteme TKS1, TKS2, TKS3 mit Hilfe dieses Mobilteils MT2 am "Tele Voting" teilnimmt. Der hierfür notwendige Meldungsfluss verläuft gemäß den FIGUREN 11a bis 11c zwischen dem zweiten Mobilteil MT2, der mit dem zweiten Mobilteil MT2 über die Luftschnittstelle LSS verbundenen Settop-Box STB mit der Verbindung zu dem DVB-T/S/C-Netz DVBN, dem mit der Settop-Box verbundenen Fernsehapparat FA und der mit dem zweiten Mobilteil MT2 und der Settop-Box STB über die Luftschnittstelle LSS verbundenen Basisstation BS.

Die für die Darstellung des Meldungsflusses berücksichtigten Baueinheiten oder Komponenten sind
**(i)** für das Mobilteil MT2 eine Benutzerschnittstelle BSS, die z.B. eine Tastatur TA und eine als Display ausgebildete Anzeigevorrichtung AV aufweist, ein MT-Speicher MT-S, eine als MT-Prozessor ausgebildete Zentrale Steuereinheit MT-P sowie eine zwischen dem Mobilteil MT2 sowie der Settop-Box STB und der Basisstation BS wirksame, gemeinsame MT/BS/STB-Luftschnittstelle MT/BS/STB-LSS, die in der dargestellten Weise miteinander verbunden sind,
**(ii)** für die Basisstation BS die mit dem Mobilteil MT2 und der Settop-Box STB gemeinsame MT/BS/STB-Luftschnittstelle MT/BS/STB-LSS sowie ein gemeinsamer Funktionsblock bestehend aus einer Leitungs- und Netzanschaltung LNA, einer als BS-Prozessor ausgebildeten Zentralen Steuereinheit BS-P sowie einem BS-Speicher BS-S, die in der dargestellten Weise miteinander verbunden sind,
**(iii)** für die Settop-Box STB die mit dem Mobilteil MT2 und der Basisstation BS gemeinsame MT/BS/STB-Luftschnittstelle MT/BS/STB-LSS, eine als STB-Prozessor ausgebildete Zentrale Steuereinheit STB-P, eine zwischen der Settop-Box STB und dem Fernsehapparat FA wirksame, gemeinsame AS/DS-Schnittstelle AS/DS-SS sowie eine DVB-Schnittstelle DVB-SS mit der Verbindung zu dem DVB-T/S/C-Netz DVBN, die in der dargestellten Weise miteinander verbunden sind, und
**(iv)** für den Fernsehapparat FA die mit der Settop-Box STB gemeinsame AS/DS-Schnittstelle AS/DS-SS, eine als FA-Prozessor ausgebildete Zentrale Steuereinheit FA-P sowie ein FA-Bildschirm FA-B, die in der dargestellten Weise miteinander verbunden sind.

In einem für alle Baueinheiten bzw. Komponenten maßgebenden Ausgangszustand AZ des Meldungsflussdiagramms wird mit Hilfe des Mobilteils MT2 ein "Televoting" durchgeführt. Hierzu erhält der STB-Prozessor STB-P über die DVB-Schnittstelle DVB-SS aus dem DVB-T/S/C-Netz DVBN ein DVB-Signal "Televoting-Information" DVB-SI. Im Anschluss daran überträgt der STB-Prozessor STB-P über die AS/DS-Schnittstelle AS/DS-SS, den FA-Prozessor FA-P eine Anzeigeinformation "Televoting-Bildschirmtasten" an den FA-Bildschirm FA-B und zum Aufbau einer internen Kommunikationsverbindung eine Aufbaumeldung "Interne Kommunikationsverbindung" AUM über die MT/BS/STB-Luftschnittstelle MT/BS/STB-LSS an den MT-Prozessor MT-P. Der MT-Prozessor MT-P sendet daraufhin eine Bestätigungsmeldung BM über die MT/BS/STB-Luftschnittstelle MT/BS/STB-LSS an den STB-Prozessor STB-P zurück. Aufgrund dieser Bestätigungsmeldung BM überträgt der STB-Prozessor über die MT/BS/STB-Luftschnittstelle MT/BS/STB-LSS zusammen mit einer Televoting-Information TVI eine Aufforderungsmeldung "Televoting-Information darstellen" AFFM an den MT-Prozessor MT-P. Nach Erhalt der Aufforderungsmeldung AFFM mit der Televoting-Information TVI wird von diesem eine Anzeigeinformation "Televoting-Displaytasten" an das Display AV der Benutzerschnittstelle BSS geschickt, wo die Televoting-Displaytasten dargestellt werden. Außerdem sendet der MT-Prozessor MT-P eine Bestätigungsmeldung BM für die erhaltene Aufforderungsmeldung AFFM über die MT/BS/STB-Luftschnittstelle MT/BS/STB-LSS an den STB-Prozessor STB-P. Danach wird von der Tastatur TA der Benutzerschnittstelle BSS ein Steuerungskommando "Televoting-Entscheidung getroffen" STK an den MT-Prozessor MT-P - übertragen. Der MT-Prozessor MT-P übermittelt daraufhin zusammen mit Televoting-Entscheidungsdaten TVED eine Übertragungsmeldung "Televoting-Entscheidungsdaten" ÜM an den STB-Prozessor STB-P. Aufgrund dieser Übertragungsmeldung ÜM wird von dem STB-Prozessor STB-P eine Anzeigeinformation "Televoting-Entscheidung bitte bestätigen" AI über die AS/DS-Schnittstelle AS/DS-SS und dem FA-Prozessor FA-P an den FA-Bildschirm FA-B und eine Anfragemeldung "Bestätigung der Televoting-Entscheidung" AFM über die MT/BS/STB-Luftschnittstelle MT/BS/STB-LSS an den MT-Prozessor MT-P übertragen. Der MT-Prozessor MT-P gibt daraufhin eine Anzeigeinformation "Televoting-Entscheidung bitte bestätigen" an das Display AV der Benutzerschnittstelle BSS, wo diese Information angezeigt wird. Anschließend wird von der Tastatur TA der Benutzerschnittstelle BSS ein Steuerungskommando "Bestätigung der Televoting-Entscheidung" STK an den MT-Prozessor MT-P geschickt. Mit dem Erhalt des Steuerungskommandos STK sendet der MT-Prozessor MT-P zusammen mit Bestätigungsdaten BSD eine Antwortmeldung "Bestätigungsdaten" AWM über die MT/BS/STB-Luftschnittstelle MT/BS/STB-LSS an den STB-Prozessor STB-P, der die erhaltenen Bestätigungsdaten BSD über die AS/DS-Schnittstelle AS/DS-SS und den FA-Prozessor FA-P an den FA-Bildschirm FA-B schickt. Danach überträgt der STB-Prozessor STB-P zum Aufbau einer externen Kommunikationsverbindung eine Aufbaumeldung "Externe Kommunikationsverbindung" AUM über die MT/BS/STB-Luftschnittstelle MT/BS/STB-LSS an die Basisstation BS bzw. den aus der Leitungs- und Netzanschaltung LNA, den BS-Prozessor BS-P und den BS-Speicher BS-S gebildeten Funktionsblock. Die Basisstation BS bzw. dieser Funktionsblock sendet daraufhin eine Bestätigungsmeldung BM über die MT/BS/STB-Luftschnittstelle MT/BS/STB-LSS an den STB-Prozessor STB-P zurück. Aufgrund dieser Bestätigungsmeldung BM überträgt der STB-Prozessor STB-P zusammen mit den Televoting-Entscheidungsdaten TVED eine Übertragungsmeldung "Tele Voting-Entscheidungsdaten" über die MT/BS/STB-Luftschnittstelle MT/BS/STB-LSS an an die Basisstation BS bzw. den Funktionsblock, worauf diese bzw. dieser eine weitere Bestätigungsmeldung BM auf dem gleichen Meldungsweg in umgekehrter Richtung an den STB-Prozessor STB-P schickt. Aufgrund dieser Bestätigungsmeldung BM wird von dem STB-Prozessor STB-P zum Abbau der aufgebauten externen Kommunikationsverbindung eine Abbaumeldung "Externe Kommunikationsverbindung" ABM über die MT/BS/STB-Luftschnittstelle MT/BS/STB-LSS an die Basisstation BS bzw. den Funktionsblock übertragen, die diese bzw. dieser auf dem gleichen Meldungsweg in umgekehrter Richtung mit einer weiteren Bestätigungsmeldung BM beantwortet, wodurch die Verbindung abgebaut ist. Der STB-Prozessor STB-B überträgt daraufhin eine Hinweismeldung "Televoting-Entscheidungsdaten übertragen" HWM über die MT/BS/STB-Luftschnittstelle MT/BS/STB-LSS an den MT-Prozessor MT-P, worauf dieser eine Anzeigeinformation "Televoting-Entscheidungsdaten wurden übermittelt" an das Display AV der Benutzerschnittstelle BSS überträgt, wo diese Information angezeigt wird. Nach der Übertragung der Hinweismeldung HWM sendet der STB-Prozessor STB-P zum Abbau der aufgebaute internen Kommunikationsverbindung eine Abbaumeldung "Interne Kommunikationsverbindung" ABM über die MT/BS/STB-Luftschnittstelle MT/BS/STB-LSS an den MT-Prozessor MT-P, die dieser auf dem gleichen Meldungsweg in umgekehrter Richtung mit einer weiteren Bestätigungsmeldung beantwortet, wodurch die Verbindung abgebaut ist.

## Patentansprüche

1. Verfahren für die drahtlose Kommunikation und Telekommunikation in einer "Smart Home"-Umgebung mit folgenden Merkmalen:
a) Eine Basisstation (BS) wird zum Führen von Telefongesprächen und Senden/Empfangen von Text-, Audio-, Video- und/oder Steuerungsdaten (TAVS) an ein leitungs- und/oder paketvermitteltes Netz (LVN, PVN) mit einer diesem zugeordneten EXTERN-Datenquelle/-senke (E-DQS) für Text-, Audio-, Video- und/oder Steuerungsdaten (TAVS) angeschlossen und mindestens ein Mobilteil (MT, MT1, MT2, MT3, STB, MB, MBK, TKHA) wird zum Führen von Telefongesprächen und/oder Senden/Empfangen von Text-, Audio-, Video- und/oder Steuerungsdaten (TAVS) über mindestens eine Luftschnittstelle (LSS) oder über mindestens eine Luftschnittstelle (LSS) und eine Leitungsschnittstelle (LTSS) der Basisstation (BS) zugeordnet, wobei
a1) mindestens ein erstes Mobilteil (MT, MT1, STB, MB, MBK) Text-, Audio-, Video- und/oder Steuerungsdaten (TAVS) sendet/empfängt, wobei das erste Mobilteil (MT, MT1, STB, MB, MBK) und/oder die Basisstation (BS) einer INTERN-Datenquelle/-senke (I-DQS1, I-DQS2) zugeordnet werden, um die die von dieser übertragenen Text-, Audio-, Video- und/oder Steuerungsdaten (TAVS) zu senden und um die die an diese zu übertragenden Text-, Audio-, Video- und/oder Steuerungsdaten (TAVS) zu empfangen,
a2) mit mindestens einem zweiten Mobilteil (MT, MT2, TKHA) über die Basisstation (BS) EXTERN-Telefongespräche geführt oder die Text-, Audio-, Video- und/oder Steuerungsdaten (TAVS) nach extern gesendet/von extern empfangen werden sowie bei mehr als einem zweiten Mobilteil (MT, MT2, TKHA) zwischen den zweiten Mobilteilen (MT, MT2, TKHA) auch INTERN-Telefongespräche geführt oder die Text-, Audio-, Video- und/oder Steuerungsdaten (TAVS) intern versendet/empfangen werden,
b) das zweite Mobilteil (MT, MT2, TKHA) erzeugt Steuerungskommandos (STK) und sendet diese über die Luftschnittstelle (LSS) aus, wobei mit Hilfe dieser Steuerungskommandos (STK) in der Basisstation (BS), in dem ersten Mobilteil (MT, MT1, STB, MB, MBK), in dem zweiten Mobilteil (MT, MT2, TKHA) und/oder in der INTERN-Datenquelle/-senke (I-DQS1, I-DQS2) terminierte Text-, Audio-, Video- und/oder Steuerungsdaten (TAVS) angesprochen und diese Daten von der Einrichtung, in der die Daten terminiert sind, unmittelbar oder mittelbar an die INTERN-Datenquelle/-senke (I-DQS1, I-DQS2) bzw. eine weitere INTERN-Datenquelle/-senke (I-DQS1, I-DQS2), an das zweite Mobilteil (MT, MT2, TKHA) bzw. ein weiteres zweites Mobilteil (MT, MT2, TKHA) und/oder die EXTERN-Datenquelle/-senke (E-DQS) zu deren Ausgabe, Übergabe oder Auslagerung gesendet werden.

2. Verfahren nach Anspruch 1, **dadurch gekennzeichnet, dass**
Kontrollkommandos erzeugt und diese in dem HF-Signal über die Luftschnittstelle (LSS) ausgesendet werden, wobei mit den Kontrollkommandos die Ausgabe, Übergabe und Auslagerung der Text-, Audio-, Video- und/oder Steuerungsdaten (TAVS) zusätzlich gesteuert wird.

3. Verfahren nach Anspruch 1 oder 2, **dadurch gekennzeichnet, dass**
als Luftschnittstelle (LSS) eine gemeinsame Schnittstelle für Telefonie und Breitbanddatenübertragung oder jeweils eine separate Schnittstelle für Telefonie und Breitbanddatenübertragung benutzt wird.

4. Verfahren nach Anspruch 3, **dadurch gekennzeichnet, dass**
als Luftschnittstelle (LSS) eine DECT-, WDCT-, IEEE 802.11a-, IEEE 802.11b-, IEEE 802.11g-, Bluetooth-, DECT- und Bluetooth-, eine WDCT- und Bluetooth-, DECT- und IEEE 802.11a-, DECT- und IEEE 802.11b-, DECT- und IEEE 802.11g-, WDCT- und IEEE 802.11a-, WDCT- und IEEE 802.11b-, WDCT- und IEEE 802.11g-, GSM- und DECT-, GSM- und Bluetooth-, GSM- und IEEE 802.11a-, GSM- und IEEE 802.11b-, GSM- und IEEE 802.11g-, 3GPP- und Bluetooth-, 3GPP- und IEEE 802.11a-, 3GPP- und IEEE 802.11b- oder 3GPP- und IEEE 802.11g-basierte Schnittstelle benutzt wird.

5. Verfahren nach Anspruch 1, **dadurch gekennzeichnet, dass**
als Textdaten Kurznachrichten gemäß dem "Short Message Service" oder Videotextinformationen, als Audiodaten Telefonsprachinformationen, Musikinformationen gemäß dem "Multimedia Message Service (MMS)" oder Audio-Downloads aus dem Internet, insbesondere MP3-Dateien, als Videodaten Bildinformationen gemäß dem "Multimedia Message Service" oder Video-Downloads aus dem Internet und/oder als Steuerungsdaten Daten zum Steuern, Messen, Regeln, Kalibrieren, Diagnostizieren und/oder Warten von elektrischen Geräten, insbesondere im Heimbereich, verwendet werden.

6. Verfahren nach Anspruch 1, 3 oder 4, **dadurch gekennzeichnet, dass**
als zweites Mobilteil (MT, MT2, TKHA) ein schnurloser Komfort-Telefonhandapparat mit Tastatur oder Sprachsteuerung sowie Anzeigevorrichtung einschließlich Menüsteuerung und als Basisstation (BS) eine Schnurlos-Basisstation benutzt werden.

7. Verfahren nach Anspruch 1, 3 oder 4, **dadurch gekennzeichnet, dass**
als zweites Mobilteil (MT, MT2, TKHA) ein Mobiltelefon mit Schnurlos-Schnittstelle, insbesondere "Bluetooth"-Schnittstelle, Tastatur (TA) oder Sprachsteuerung sowie Anzeigevorrichtung (AV) einschließlich Menüsteuerung und als Basisstation (BS) eine Schnurlos-Basisstation benutzt werden.

8. Verfahren nach Anspruch 1, 6 oder 7, **dadurch gekennzeichnet, dass**
als erstes Mobilteil (MT, MT1, STB, MB, MBK) eine schnurlose I/O-Mobilbox (MB, MBK) mit einer "Ethernet"-Schnittstelle oder eine "USB"-Schnittstelle benutzt wird.

9. Verfahren nach Anspruch 1, 6, 7 oder 8, **dadurch gekennzeichnet, dass**
als erstes Mobilteil (MT, MT1, STB, MB, MBK) eine schnurlose Settop-Box (STB) und/oder eine schnurlose I/O-Mobilbox (MB, MBK) mit jeweils einer "Analog/Digital"-Schnittstelle, einer "SCART/S-Video"-Schnittstelle, einer "CINCH/S-PIDF"-Schnittstelle und/oder "EIB/LON/LCN/KNX"-Schnittstelle benutzt wird.

10. Verfahren nach Anspruch 1 oder 8, **dadurch gekennzeichnet, dass**
das erste Mobilteil (MT, MT1, STB, MB, MBK) mit einem Personal Computer (PC) als eine erste INTERN-Datenquelle/-senke (I-DQS1) verbunden wird.

11. Verfahren nach Anspruch 1, **dadurch gekennzeichnet, dass**
das erste Mobilteil (MT, MT1, STB, MB, MBK) in einem Personal Computer (PC) als eine erste INTERN-Datenquelle/-senke (I-DQS1) integriert wird.

12. Verfahren nach Anspruch 1 oder 9, **dadurch gekennzeichnet, dass**
das erste Mobilteil (MT, MT1, STB, MB, MBK) mit einem Fernsehapparat (FA), einer HIFI-Anlage (HA) oder einem elektrischen Gerät (ELG) als eine zweite INTERN-Datenquelle/-senke (I-DQS2) verbunden wird.

13. Verfahren nach Anspruch 1, **dadurch gekennzeichnet, dass**
das erste Mobilteil (MT, MT1, STB, MB, MBK) in einem Fernsehapparat (FA), einer HIFI-Anlage (HA) oder einem elektrischen Gerät (ELG) als eine zweite INTERN-Datenquelle/-senke (I-DQS2) integriert wird.

14. Verfahren nach Anspruch 1, **dadurch gekennzeichnet, dass**
die EXTERN-Datenquelle/-senke (E-DQS) als Multimedianachrichten-Dienstzentrum oder als Kurznachrichten-Dienstzentrum benutzt wird.

15. Verfahren nach Anspruch 1, **dadurch gekennzeichnet, dass**
die Basisstation (BS) mit einem Personal Computer (PC) als eine erste INTERN-Datenquelle/-senke (I-DQS1) und/oder mit einem Fernsehapparat (FA), einer HIFI-Anlage (HA) oder einem elektrischen Gerät (ELG) als eine zweite INTERN-Datenquelle/- senke (I-DQS2) verbunden wird.

16. Verfahren nach Anspruch 1, **dadurch gekennzeichnet, dass**
die Basisstation (BS) als Netzschnittstellenmodul (NSSM) in einem Personal Computer (PC) als eine erste INTERN-Datenquelle/-senke (I-DQS1), in einem Fernsehapparat (FA), einer HIFI-Anlage (HA) oder einem elektrischen Gerät (ELG) als eine zweite INTERN-Datenquelle/-senke (I-DQS2) integriert wird.

17. Verfahren nach Anspruch 1 und 10 oder 1 und 11, **dadurch gekennzeichnet, dass**
mit den Steuerungskommandos (STK) der Personal Computer (PC), der sich im "Stand-by"-Modus befindet, aufgeweckt und in Betrieb genommen wird.

18. Verfahren nach Anspruch 1 und 12 oder 1 und 13, **dadurch gekennzeichnet, dass**
mit den Steuerungskommandos (STK) der Fernsehapparat (FA), die HIFI-Anlage (HA) oder das elektrische Gerät (ELG), die sich jeweils im "Stand-by"-Modus befinden, aufgeweckt und in Betrieb genommen wird.

19. Verfahren nach Anspruch 1, 9 und 12 oder 1, 9 und 13, **dadurch gekennzeichnet, dass**
mit den Steuerungskommandos (STK) ein "Televoting" durchgeführt wird.

20. Verfahren nach Anspruch 1, 9 und 12 oder 1, 9 und 13, **dadurch gekennzeichnet, dass**
mit den Steuerungskommandos (STK) der Beginn und die Fortsetzung einer Fernsehsendung auf dem zweiten Mobilteil (MT2, MT, TKHA) angezeigt wird.

21. Telekommunikationssystem (TKS1, TKS2, TKS3) für die drahtlose Kommunikation und Telekommunikation in einer "Smart Home"-Umgebung mit folgenden Merkmalen:
a) Eine Basisstation (BS) zum Führen von Telefongesprächen und Senden/Empfangen von Text-, Audio-, Video und/oder Steuerungsdaten (TAVS), die an ein leitungs- und/oder paketvermitteltes Netz (LVN, PVN) mit einer diesem zugeordneten EXTERN-Datenquelle/-senke (E-DQS) für Text-, Audio-, Video und/oder Steuerungsdaten (TAVS) anschließbar ist, und mindestens ein Mobilteil (MT, MT1, MT2, MT3, STB, MB, MBK, TKHA) zum Führen von Telefongesprächen und/oder Senden/Empfangen von Text-, Audio-; Video- und/oder Steuerungsdaten (TAVS) sind über mindestens eine Luftschnittstelle (LSS) oder über mindestens eine Luftschnittstelle (LSS) und eine Leitungsschnittstelle (LTSS) miteinander verbunden, wobei
a1) mindestens ein erstes Mobilteil (MT, MT1, STB, MB, MBK) zum Senden/Empfangen von Text-, Audio-, Video- und/oder Steuerungsdaten (TAVS) ausgebildet ist, wobei das erste Mobilteil (MT, MT1, STB, MB, MBK) und/oder die Basisstation (BS) zum Empfangen der Text-, Audio-, Video- und/oder Steuerungsdaten (TAVS), die für eine INTERN-Datenquelle/-senke (I-DQS1, I-DQS2) bestimmt sind, und zum Senden der Text-, Audio-, Video- und/oder Steuerungsdaten (TAVS), die von der INTERN-Datenquelle/-senke (I-DQS1, I-DQS2) stammen, jeweils der INTERN-Datenquelle/-senke (I-DQS1, I-DQS2) zugeordnet sind,
a2) mindestens ein zweites Mobilteil (MT, MT2, TKHA) über die Basisstation (BS) zum Führen von EXTERN-Telefongesprächen oder zum EXTERN-Senden/-Empfangen der Text-, Audio-, Video- und/oder Steuerungsdaten (TAVS) sowie bei mehr als einem zweiten Mobilteil (MT, MT2, TKHA) zwischen den zweiten Mobilteilen (MT, MT2, TKHA) auch zum Führen von INTERN-Telefongesprächen oder zum INTERN-Senden/-Empfangen der Text-, Audio-, Video- und/oder Steuerungsdaten (TAVS) ausgebildet ist,
b) das zweite Mobilteil (MT, MT2, TKHA) eine mit der Luftschnittstelle (LSS) verbundene Zentrale Steuereinheit (MT-P) zur Steuerung der Bedienungs- und Funktionsabläufe in dem zweiten Mobilteil (MT, MT2, TKHA), einen der Zentralen Steuereinheit (MT-P) zugeordneten Speicher (MT-S) sowie mit der Zentralen Steuereinheit (MT-P) verbundene Mittel (BSS, TA) zum Eingeben von Text-, Audio-, Video- und/oder Steuerungsdaten und Mittel (BSS, AV) zum Ausgeben von Text-, Audio-, Video- und/oder Steuerungsdaten aufweist, die eine Funktionseinheit bilden, wobei diese derart ausgebildet ist, dass Steuerungskommandos (STK) erzeugt und diese über die Luftschnittstelle (LSS) ausgesendet werden, wobei mit Hilfe dieser Steuerkommandos (STK) in der Basisstation (BS), in dem ersten Mobilteil (MT, MT1, STB, MB, MBK), in dem zweiten Mobilteil (MT, MT2, TKHA) und/oder in der INTERN-Datenquelle/- senke (I-DQS1, I-DQS2) terminierte Text-, Audio-, Video- und/oder Steuerungsdaten (TAVS) angesprochen und diese Daten von der Einrichtung, in der die Daten terminiert sind, unmittelbar oder mittelbar an die INTERN-Datenquelle/-senke (I-DQS1, I-DQS2) bzw. eine weitere INTERN-Datenquelle/-senke (I-DQS1, I-DQS2), das zweite Mobilteil (MT, MT2, TKHA) bzw. eine weiteres zweites Mobilteil (MT, MT2, TKHA) und/oder die EXTERN-Datenquelle/-senke (E-DQS) zu deren Ausgabe, Übergabe oder Auslagerung gesendet werden.

22. Telekommunikationssystem nach Anspruch 21, **dadurch gekennzeichnet, dass**
in dem zweiten Mobilteil (MT, MT2, TKHA) die mit der Luftschnittstelle (LSS) verbundene Zentrale Steuereinheit (MT-P) mit dem zugeordneten Speicher (MT-S) sowie die mit der Zentralen Steuereinheit (MT-P) verbundenen Eingabemittel (BSS, TA) und Ausgabemittel (BSS, AV) derart ausgebildet sind, dass Kontrollkommandos erzeugt und diese in dem HF-Signal über die Luftschnittstelle (LSS) ausgesendet werden, wobei mit den Kontrollkommandos zusätzlich die Ausgabe, Übergabe und Auslagerung der Text-, Audio-, Video- und/oder Steuerungsdaten (TAVS) steuerbar sind.

23. Telekommunikationssystem nach Anspruch 21 oder 22, **dadurch gekennzeichnet, dass**
die Luftschnittstelle (LSS) eine gemeinsame Schnittstelle für Telefonie und Breitbanddatenübertragung oder jeweils eine separate Schnittstelle für Telefonie und Breitbanddatenübertragung umfasst bzw. ist.

24. Telekommunikationssystem nach Anspruch 23, **dadurch gekennzeichnet, dass**
die Luftschnittstelle (LSS) eine eine DECT-, WDCT-, IEEE 802.11a-, IEEE 802.11b-, IEEE 802.11g-, Bluetooth-, DECT- und Bluetooth-, eine WDCT- und Bluetooth-, DECT- und IEEE 802.11a-, DECT- und IEEE 802.11b-, DECT- und IEEE 802.11g-, WDCT- und IEEE 802.11a-, WDCT- und IEEE 802.11b-, WDCT- und IEEE 802.11g-, GSM- und DECT-, GSM- und Bluetooth-, GSM- und IEEE 802.11a-, GSM- und IEEE 802.11b-, GSM- und IEEE 802.11g-, 3GPP- und Bluetooth-, 3GPP- und IEEE 802.11a-, 3GPP- und IEEE 802.11b- oder 3GPP- und IEEE 802.11g-basierte Schnittstelle ist.

25. Telekommunikationssystem nach Anspruch 21, **dadurch gekennzeichnet, dass**
die Textdaten Kurznachrichten gemäß dem "Short Message Service" oder Videotextinformationen, die Audiodaten Telefonsprachinformationen, Musikinformationen gemäß dem "Multimedia Message Service" oder Audio-Downloads aus dem Internet, insbesondere MP3-Dateien, die Videodaten Bildinformationen gemäß dem "Multimedia Message Service" oder Video-Downloads aus dem Internet und/oder die Steuerungsdaten Daten zum Steuern, Messen, Regeln, Kalibrieren, Diagnostizieren und/oder Warten von elektrischen Geräten, insbesondere im Heimbereich, umfassen.

26. Telekommunikationssystem nach Anspruch 21, 23 oder 24 **dadurch gekennzeichnet, dass**
das zweite Mobilteil (MT, MT2, TKHA) als ein schnurloser Komfort-Telefonhandapparat mit Tastatur (TA) oder Sprachsteuerung sowie Anzeigevorrichtung (AV) einschließlich Menüsteuerung ausgebildet ist und dass und die Basisstation (BS) als eine Schnurlos-Basisstation ausgebildet ist.

27. Telekommunikationssystem nach Anspruch 21, 23 oder 24 **dadurch gekennzeichnet, dass**
das zweite Mobilteil (MT, MT2, TKHA) als ein Mobiltelefon mit Schnurlos-Schnittstelle, insbesondere "Bluetooth"-Schnittstelle, Tastatur (TA) oder Sprachsteuerung sowie Anzeigevorrichtung (AV) einschließlich Menüsteuerung ausgebildet ist und dass und die Basisstation (BS) als eine Schnurlos-Basisstation ausgebildet ist.

28. Telekommunikationssystem nach Anspruch 21, 26 oder 27, **dadurch gekennzeichnet, dass**
das erste Mobilteil (MT, MT1, STB, MB, MBK) als eine schnurlose I/O-Mobilbox (MB, MBK) mit einer "Ethernet"-Schnittstelle oder eine "USB"-Schnittstelle ausgebildet ist.

29. Telekommunikationssystem nach Anspruch 21, 26, 27 oder 28, **dadurch gekennzeichnet, dass**
das erste Mobilteil (MT, MT1, STB, MB, MBK) als eine schnurlose Settop-Box (STB) und/oder eine schnurlose I/O-Mobilbox (MB, MBK) mit jeweils einer "Analog/Digital"-Schnittstelle, einer "SCART/S-Video"-Schnittstelle, einer "CINCH/S-PIDF"-Schnittstelle und/oder "EIB/LON/LCN/KNX"-Schnittstelle ausgebildet ist.

30. Telekommunikationssystem nach Anspruch 21 oder 28, **dadurch gekennzeichnet, dass**
das erste Mobilteil (MT, MT1, STB, MB, MBK) mit einem Personal Computer (PC) als eine erste INTERN-Datenquelle/-senke (I-DQS1) verbunden ist.

31. Telekommunikationssystem nach Anspruch 21, **dadurch gekennzeichnet, dass**
das erste Mobilteil (MT, MT1, STB, MB, MBK) in einem Personal Computer (PC) als eine erste INTERN-Datenquelle/-senke (I-DQS1) integriert ist.

32. Telekommunikationssystem nach Anspruch 21 oder 29, **dadurch gekennzeichnet, dass**
das erste Mobilteil (MT, MT1, STB, MB, MBK) mit einem Fernsehapparat (FA), einer HIFI-Anlage (HA) oder einem elektrischen Gerät (ELG) als eine zweite INTERN-Datenquelle/-senke (I-DQS2) verbunden ist.

33. Telekommunikationssystem nach Anspruch 21, **dadurch gekennzeichnet, dass**
das erste Mobilteil (MT, MT1, STB, MB, MBK) in einem Fernsehapparat (FA), einer HIFI-Anlage (HA) oder in einem elektrischen Gerät (ELG) als eine zweite INTERN-Datenquelle/-senke (I-DQS2) integriert ist.

34. Telekommunikationssystem nach Anspruch 21, **dadurch gekennzeichnet, dass**
die EXTERN-Datenquelle/-senke (E-DQS) als Multimedianachrichten-Dienstzentrum oder als Kurznachrichten-Dienstzentrum ausgebildet ist.

35. Telekommunikationssystem nach Anspruch 21, **dadurch gekennzeichnet, dass**
die Basisstation (BS) mit einem Personal Computer (PC) als eine erste INTERN-Datenquelle/-senke (I-DQS1) und/oder mit einem Fernsehapparat (FA), einer HIFI-Anlage (HA) oder einem elektrischen Gerät (ELG) als eine zweite INTERN-Datenquelle/- senke (I-DQS2) verbunden ist.

36. Telekommunikationssystem nach Anspruch 21, **dadurch gekennzeichnet, dass**
die Basisstation (BS) als Netzschnittstellenmodul (NSSM) in einem Personal Computer (PC) als eine erste INTERN-Datenquelle/-senke (I-DQS1) und/oder in einem Fernsehapparat (FA), einer HIFI-Anlage (HA) oder einem elektrischen Gerät (ELG) als eine zweite INTERN-Datenquelle/-senke (I-DQS2) integriert ist.

37. Telekommunikationssystem nach Anspruch 21 und 30 oder 21 und 31, **dadurch gekennzeichnet, dass** die Steuerungskommandos (STK) derart beschaffen sind, dass der Personal Computer (PC), der sich im "Stand-by"-Modus befindet, aufgeweckt und in Betrieb genommen wird.

38. Telekommunikationssystem nach Anspruch 21 und 32 oder 21 und 33, **dadurch gekennzeichnet, dass** die Steuerungskommandos (STK) derart beschaffen sind, dass der Fernsehapparat (FA), die HIFI-Anlage (HA) oder das elektrische Gerät (ELG), die sich jeweils im "Stand-by"-Modus befinden, aufgeweckt und in Betrieb genommen wird.

39. Telekommunikationssystem nach Anspruch 21, 29 und 32 oder 21, 29 und 33, **dadurch gekennzeichnet, dass** die Steuerungskommandos (STK) derart beschaffen sind, dass ein "Televoting" durchgeführt wird.

40. Telekommunikationssystem nach Anspruch 21, 29 und 32 oder 21, 29 und 33, **dadurch gekennzeichnet, dass** die Steuerungskommandos (STK) derart beschaffen sind, dass der Beginn und die Fortsetzung einer Fernsehsendung auf dem zweiten Mobilteil (MT, MT2, TKHA) angezeigt werden.

41. Telekommunikationshandapparat (MT, MT2, TKHA) für die drahtlose Kommunikation und Telekommunikation in einer "Smart Home"-Umgebung mit folgenden Merkmalen:
a) Mindestens eine Luftschnittstelle (LSS), eine mit der Luftschnittstelle (LSS) verbundene Zentrale Steuereinheit (MT-P) zur Steuerung der Bedienungs- und Funktionsabläufe in dem Telekommunikationshandapparat (MT, MT2, TKHA), einen der Zentralen Steuereinheit (MT-P) zugeordneten Speicher (MT-S) sowie mit der Zentralen Steuereinheit (MT-P) verbundene Mittel (BSS, TA) zum Eingeben von Text-, Audio-, Video- und/oder Steuerungsdaten und Mittel (BSS, AV) zum Ausgeben von Text-, Audio-, Video und/oder Steuerungsdaten bilden eine Funktionseinheit, die derart ausgebildet ist, dass
a1) der Telekommunikationshandapparat (MT, MT2, TKHA) zum Führen von EXTERN-Telefongesprächen oder zum EXTERN-Senden/- Empfangen von Text-, Audio-, Video- und/oder Steuerungsdaten (TAVS) mit einer Basisstation (BS) verbindbar ist, die an ein leitungs- und/oder paketvermitteltes Netz (LVN, PVN) mit einer diesem zugeordneten EXTERN-Datenquelle/-senke (E-DQS) für Text-, Audio-, Video- und/oder Steuerungsdaten (TAVS) anschließbar ist,
a2) falls weitere Telekommunikationshandapparate (MT, MT2, TKHA) und/oder mindestens ein jeweils zusätzliches erstes Mobilteil (MT, MT1, STB, MB, MBK) zum Senden/Empfangen von Text-, Audio-, Video- und/oder Steuerungsdaten (TAVS) mit der Basisstation (BS) verbunden sind, der Telekommunikationshandapparat (MT, MT2, TKHA)
a21) zum Führen von INTERN-Telefongesprächen oder zum INTERN-Senden/-Empfangen der Text-, Audio-, Video- und/oder Steuerungsdaten (TAVS) mit jedem dieser Telekommunikationshandapparate (MT, MT2, TKHA) verbindbar ist,
a22) zum INTERN-Senden/-Empfangen der Text-, Audio-, Video- und/oder Steuerungsdaten (TAVS) mit jedem dieser Mobilteile (MT, MT1, MT2, STB, MB, MBK) verbindbar ist, wobei das erste Mobilteil (MT, MT1, STB, MB, MBK) und/oder die Basisstation (BS) zum Empfangen der Text-, Audio-, Video- und/oder Steuerungsdaten (TAVS), die für eine INTERN-Datenquelle/-senke (I-DQS1, I-DQS2) bestimmt sind, und zum Senden der Text-, Audio-, Video- und/oder Steuerungsdaten (TAVS), die von der INTERN-Datenquelle/-senke (I-DQS1, I-DQS2) stammen, jeweils dieser zugeordnet sind,
a3) Steuerkommandos (STK) erzeugt und diese über die Luftschnittstelle (LSS) ausgesendet werden, wobei mit Hilfe dieser Steuerkommandos (STK) in der Basisstation (BS), in dem ersten Mobilteil (MT, MT1, STB, MB, MBK) in dem Telekommunikationshandapparat (MT, MT2, TKHA) und/oder in der INTERN-Datenquelle/-senke (I-DQS1, I-DQS2) terminierte Text-, Audio-, Video- und/oder Steuerungsdaten (TAVS) angesprochen und diese Daten von der Einrichtung, in der die Daten terminiert sind, unmittelbar oder mittelbar an die INTERN-Datenquelle/- senke (I-DQS1, I-DQS2) bzw. eine weitere INTERN-Datenquelle/- senke (I-DQS1, I-DQS2), den Telekommunikationshandapparat (MT, MT2, TKHA) bzw. den weiteren Telekommunikationshandapparat (MT, MT2, TKHA) und/oder die EXTERN-Datenquelle/-senke (E-DQS) zu deren Ausgabe, Übergabe oder Auslagerung gesendet werden.

42. Telekommunikationshandapparat nach Anspruch 41, **dadurch gekennzeichnet, dass**
die von der Luftschnittstelle (LSS), der mit der Luftschnittstelle (LSS) verbundenen Zentralen Steuereinheit (MT-P), dem der Zentralen Steuereinheit (MT-P) zugeordneten Speicher (MT-S) sowie den mit der Zentralen Steuereinheit (MT-P) verbundenen Eingabemitteln (BSS, TA) und Ausgabemitteln (BSS, AV) gebildete Funktionseinheit derart ausgebildet ist, dass Kontrollkommandos erzeugt und diese in dem HF-Signal über die Luftschnittstelle (LSS) ausgesendet werden, wobei mit den Kontrollkommandos die Ausgabe, Übergabe und Auslagerung der Text-, Audio-, Video- und/oder Steuerungsdaten (TAVS) zusätzlich steuerbar ist.

43. Telekommunikationshandapparat nach Anspruch 41 oder 42, **dadurch gekennzeichnet, dass**
die Luftschnittstelle (LSS) eine gemeinsame Schnittstelle für Telefonie und Breitbanddatenübertragung oder jeweils eine separate Schnittstelle für Telefonie und Breitbanddatenübertragung umfasst bzw. ist.

44. Telekommunikationshandapparat nach Anspruch 43, **dadurch gekennzeichnet, dass**
die Luftschnittstelle (LSS) eine eine DECT-, WDCT-, IEEE 802.11a-, IEEE 802.11b-, IEEE 802.11g-, Bluetooth-, DECT- und Bluetooth-, eine WDCT- und Bluetooth-, DECT- und IEEE 802.11a-, DECT- und IEEE 802.11b-, DECT- und IEEE 802.11g-, WDCT- und IEEE 802.11a-, WDCT- und IEEE 802.11b-, WDCT- und IEEE 802.11g-, GSM- und DECT-, GSM- und Bluetooth-, GSM- und IEEE 802.11a-, GSM- und IEEE 802.11b-, GSM- und IEEE 802.11g-, 3GPP- und Bluetooth-, 3GPP- und IEEE 802.11a-, 3GPP- und IEEE 802.11b- oder 3GPP- und IEEE 802.11g-basierte Schnittstelle ist.

45. Telekommunikationshandapparat nach Anspruch 41, **dadurch gekennzeichnet, dass**
die Textdaten Kurznachrichten gemäß dem "Short Message Service" oder Videotextinformationen, die Audiodaten Telefonsprachinformationen, Musikinformationen gemäß dem "Multimedia Message Service" oder Audio-Downloads aus dem Internet, insbesondere MP3-Dateien, die Videodaten Bildinformationen gemäß dem "Multimedia Message Service" oder Video-Downloads aus dem Internet und/oder die Steuerungsdaten Daten zum Steuern, Messen, Regeln, Kalibrieren, Diagnostizieren und/oder Warten von elektrischen Geräten, insbesondere im Heimbereich, umfassen.

46. Telekommunikationshandapparat nach Anspruch 41, 43, 44, **gekennzeichnet durch**
einen schnurlosen Komfort-Telefonhandapparat mit Tastatur (TA) oder Sprachsteuerung sowie Anzeigevorrichtung (AV) einschließlich Menüsteuerung, der einer Schnurlos-Basisstation als Basisstation (BS) zugeordnet ist.

47. Telekommunikationshandapparat nach Anspruch 41, 43, 44, **gekennzeichnet durch**
ein Mobiltelefon mit Schnurlos-Schnittstelle, insbesondere "Bluetooth"-Schnittstelle, Tastatur (TA) oder Sprachsteuerung sowie Anzeigevorrichtung (AV) einschließlich Menüsteuerung, das einer Schnurlos-Basisstation als Basisstation (BS) zugeordnet ist.

48. Telekommunikationshandapparat nach Anspruch 41, 46, 47, **dadurch gekennzeichnet, dass**
das erste Mobilteil (MT, MT1, STB, MB, MBK) als eine schnurlose I/O-Mobilbox (MB, MBK) mit einer "Ethernet"-Schnittstelle oder einer "USB"-Schnittstelle ausgebildet ist.

49. Telekommunikationshandapparat nach Anspruch 41, 46, 47 oder 48, **dadurch gekennzeichnet, dass**
das erste Mobilteil (MT, MT1, STB, MB, MBK) als eine schnurlose Settop-Box (STB) und/oder eine schnurlose I/O-Mobilbox (MB, MBK) mit jeweils einer "Analog/Digital"-Schnittstelle, einer "SCART/S-Video"-Schnittstelle, einer "CINCH/S-PIDF"-Schnittstelle und/oder "EIB/LON/LCN/KNX"-Schnittstelle ausgebildet ist.

50. Telekommunikationshandapparat nach Anspruch 41 oder 48, **dadurch gekennzeichnet, dass**
das erste Mobilteil (MT, MT1, STB, MB, MBK) mit einem Personal Computer (PC) als eine erste INTERN-Datenquelle/-senke (I-DQS1) verbunden ist.

51. Telekommunikationshandapparat nach Anspruch 41, **dadurch gekennzeichnet, dass**
das erste Mobilteil (MT, MT1, STB, MB, MBK) in einem Personal Computer (PC) als eine erste INTERN-Datenquelle/-senke (I-DQS1) integriert ist.

52. Telekommunikationshandapparat nach Anspruch 41 oder 49, **dadurch gekennzeichnet, dass**
das erste Mobilteil (MT, MT1, STB, MB, MBK) mit einem Fernsehapparat (FA), einer HIFI-Anlage (HA) oder einem elektrischen Gerät (ELG) als eine zweite INTERN-Datenquelle/-senke (I-DQS2) verbunden ist.

53. Telekommunikationshandapparat nach Anspruch 41, **dadurch gekennzeichnet, dass**
das erste Mobilteil (MT, MT1, STB, MB, MBK) in einem Fernsehapparat (FA), einer HIFI-Anlage (HA) oder einem elektrischen Gerät (ELG) als eine zweite INTERN-Datenquelle/-senke (I-DQS2) integriert ist.

54. Telekommunikationshandapparat nach Anspruch 41, **dadurch gekennzeichnet, dass**
die EXTERN-Datenquelle/-senke (E-DQS) als Multimedianachrichten-Dienstzentrum oder als Kurznachrichten-Dienstzentrum ausgebildet ist.

55. Telekommunikationshandapparat nach Anspruch 41, **dadurch gekennzeichnet, dass**
die Basisstation (BS) mit einem Personal Computer (PC) als eine erste INTERN-Datenquelle/-senke (I-DQS1) und/oder mit einem Fernsehapparat (FA), einer HIFI-Anlage (HA) oder einem elektrischen Gerät (ELG) als eine zweite INTERN-Datenquelle/- senke (I-DQS2) verbunden ist.

56. Telekommunikationshandapparat nach Anspruch 41, **dadurcch gekennzeichnet**, dass
die Basisstation (BS) als Netzschnittstellenmodul (NSSM) in einem Personal Computer (PC) als eine erste INTERN-Datenquelle/-senke (I-DQS1) und/oder in einem Fernsehapparat (FA), einer HIFI-Anlage (HA) oder einem elektrischen Gerät (ELG) als eine zweite INTERN-Datenquelle/-senke (I-DQS2) integriert ist.

57. Telekommunikationshandapparat nach Anspruch 41 und 50 oder 41 und 51, **dadurch gekennzeichnet, dass**
die Steuerungskommandos (STK) derart beschaffen sind, dass der Personal Computer (PC), der sich im "Stand-by"-Modus befindet, aufgeweckt und in Betrieb genommen wird.

58. Telekommunikationshandapparat nach Anspruch 41 und 52 oder 41 und 53, **dadurch gekennzeichnet, dass**
die Steuerungskommandos (STK) derart beschaffen sind, dass der Fernsehapparat (FA), die HIFI-Anlage (HA) oder das elektrische Gerät (ELG), die sich jeweils im "Stand-by"-Modus befinden, aufgeweckt und in Betrieb genommen wird.

59. Telekommunikationshandapparat nach Anspruch 41, 49 und 52 oder 41, 49 und 53, **dadurch gekennzeichnet, dass**
die Steuerungskommandos (STK) derart beschaffen sind, dass ein "Televoting" durchgeführt wird.

60. Telekommunikationshandapparat nach Anspruch 41, 49 und 52 oder 41, 49 und 53, **dadurch gekennzeichnet, dass**
die Steuerungskommandos (STK) derart beschaffen sind, dass der Beginn und die Fortsetzung einer Fernsehsendung auf dem Telekommunikationshandapparat (MT, MT2, TKHA) angezeigt werden.

## Claims

1. A method for wireless communication and telecommunication in a smart home environment, having the following features:
a) a base station (BS) is connected to a circuit-switched and/or packet-switched network (LVN, PVN) with an EXTERNAL data source/data sink (E-DQS) for text, audio, video and/or control data (TAVS) assigned thereto for making telephone calls and sending/receiving text, audio, video and/or control data (TAVS), and at least one mobile element (MT, MT1, MT2, MT3, STB, MB, MBK, TKHA) is assigned to the base station (BS) for making telephone calls and/or sending/receiving text, audio, video and/or control data (TAVS) via at least one air interface (LSS) or via at least one air interface (LSS) and a line interface (LTSS),
a1) at least one first mobile element (MT, MT1, STB, MB, MBK) sending/receiving text, audio, video and/or control data (TAVS), the first mobile element (MT, MT1, STB, MB, MBK) and/or the base station (BS) being assigned to an INTERNAL data source/data sink (I-DSQ1, I-DSQ2) to send the text, audio, video and/or control data (TAVS) transmitted thereby and to receive the text, audio, video and/or control data (TAVS) to be transmitted thereto,
a2) at least one second mobile element (MT, MT2, TKHA) making EXTERNAL telephone calls via the base station (BS) or sending to the outside/receiving from the outside the text, audio, video and/or control data (TAVS), and, if more than one second mobile element (MT, MT2, TKHA) is present, also INTERNAL telephone calls being made between the second mobile elements (MT, MT2, TKHA) or the text, audio, video and/or control data (TAVS) being sent/received internally;
b) the second mobile element (MT, MT2, TKHA) generates control commands (STK) and emits these via the air interface (LSS), these control commands (STK) being used to address text, audio, video and/or control data (TAVS) terminated in the base station (BS), in the first mobile element (MT, MT1, STB, MB, MBK), in the second mobile element (MT, MT2, TKHA) and/or in the INTERNAL data source/data sink (I-DQS1, I-DQS2), and this data being sent directly or indirectly from the device in which the data is terminated to the INTERNAL data source/data sink (I-DQS1, I-DQS2) or a further INTERNAL data source/sink (I-DQS1, I-DQS2), to the second mobile element (MT, MT2, TKHA) or a further second mobile element (MT, MT2, TKHA) and/or the EXTERNAL data source/data sink (E-DQS) to be output, transferred or externally stored.

2. The method according to claim 1, **characterized in that** check commands are generated and emitted in the RF signal via the air interface (LSS), the check commands also controlling the output, transfer and external storage of the text, audio, video and/or control data (TAVS).

3. The method according to claim 1 or 2, **characterized in that** a shared interface for telephony and broadband transmission or a separate interface for telephony and broadband transmission, respectively, is used as the air interface (LSS).

4. The method according to claim 3, **characterized in that** an interface based on DECT, WDCT, IEEE 802.11a, IEEE 802.11b, IEEE 802.11g, Bluetooth, DECT and Bluetooth, WDCT and Bluetooth, DECT and IEEE 802.11a, DECT and IEEE 802.11b, DECT and IEEE 802.11 g, WDCT and IEEE 802.11a, WDCT and IEEE 802.11b, WDCT and IEEE 802.11g, GSM and DECT, GSM and Bluetooth, GSM and IEEE 802.11a, GSM and IEEE 802.11b, GSM and IEEE 802.11g, 3GPP and Bluetooth, 3GPP and IEEE 802.11a, 3GPP and IEEE 802.1 1b, or 3GPP and IEEE 802.11g is used as the air interface (LSS).

5. The method according to claim 1, **characterized in that** short messages according to the Short Message Service or video text information is used as text data, telephone voice information, music information according to the Multimedia Message Service (MMS) or audio downloads from the Internet, in particular MP3 files, are used as audio data, image information according to the Multimedia Message Service or video downloads from the Internet are used as video data, and/or data for controlling, measuring, regulating, calibrating, diagnosing and/or maintaining electrical appliances, in particular in the domestic field, is used as control data.

6. The method according to claim 1, 3 or 4, **characterized in that** a cordless user-friendly telephone handset, comprising a keypad or voice control, and a display device including menu control is used as the second mobile element (MT, MT2, TKHA), and a cordless base station is used as the base station (BS).

7. The method according to claim 1, 3 or 4, **characterized in that** a mobile telephone comprising a cordless interface, in particular a Bluetooth interface, a keypad (TA) or voice control and a display device (AV) including menu control is used as the second mobile element (MT, MT2, TKHA) and a cordless base station is used as the base station (BS).

8. The method according to claim 1, 6 or 7, **characterized in that** a cordless I/O mobile box (MB, MBK) comprising an Ethernet interface or a USB interface is used as the first mobile element (MT, MT1, StB, MB, MBK).

9. The method according to claim 1, 6, 7 or 8, **characterized in that** a cordless set-top box (STB) and/or a cordless I/O mobile box (MB, MBK) comprising an analog/digital interface, a SCART/S-VIDEO interface, a CINCH/S-PIDF interface and/or an EIB/LON/LCN/KNX interface, respectively, is used as the first mobile element (MT, MT1, STB, MB, MBK).

10. The method according to claim 1 or 8, **characterized in that** the first mobile element (MT, MT1, STB, MB, MBK) is connected to a personal computer (PC) as a first INTERNAL data source/data sink (I-DQS1).

11. The method according to claim 1, **characterized in that** the first mobile element (MT, MT1, STB, MB, MBK) is integrated into a personal computer (PC) as a first INTERNAL data source/data sink (I-DQS1).

12. The method according to claim 1 or 9, **characterized in that** the first mobile element (MT, MT1, STB, MB, MBK) is connected to a television (FA), a HIFI unit (HA) or an electrical appliance (ELG) as a second INTERNAL data source/data sink (I-DQS2).

13. The method according to claim 1, **characterized in that** the first mobile element (MT, MT1, STB, MB, MBK) is integrated into a television (FA), a HIFI unit (HA) or an electrical appliance (ELG) as a second INTERNAL data source/data sink (I-DQS2).

14. The method according to claim 1, **characterized in that** the EXTERNAL data source/data sink (E-DQS) is used as a multimedia message service center or as a short message service center.

15. The method according to claim 1, **characterized in that** the base station (BS) is connected to a personal computer (PC) as a first INTERNAL data source/data sink (I-DQS1) and/or to a television (FA, a HIFI unit (HA) or an electrical appliance (ELG) as a second INTERNAL data source/data sink (I-DQS2).

16. The method according to claim 1, **characterized in that** the base station (BS), serving as a network interface module (NSSM), is integrated into a personal computer (PC) as a first INTERNAL data source/data sink (I-DQS1), and into a television (FA), a HIFI unit (HA) or an electrical appliance (ELG) as a second INTERNAL data source/data sink (I-DQS2).

17. The method according to claims 1 and 10 or 1 and 11, **characterized in that** the control commands (STK) are used to wake up and start up the personal computer (PC), which is in standby mode.

18. The method according to claims 1 and 12 or 1 and 13, **characterized in that** the control commands (STK) are used to wake up and start up the television (FA), the HIFI unit (HA) or the electrical appliance (ELG), each being in standby mode.

19. The method according to claims 1, 9 and 12 or 1, 9 and 13, **characterized in that** the control commands (STK) are used to implement televoting.

20. The method according to claims 1, 9 and 12 or 1, 9 and 13, **characterized in that** the control commands (STK) are used to display the start and continuation of a television program on the second mobile element (MT2, MT, TKHA).

21. A telecommunication system (TKS1, TKS2, TKS3) for wireless communication and telecommunication in a smart home environment, having the following features:
a) a base station (BS) for making telephone calls and sending/receiving text, audio, video and/or control data (TAVS), which can be connected to a circuit-switched and/or packet-switched network (LVN, PVN) with an EXTERNAL data source/data sink (E-DQS) for text, audio, video and/or control data (TAVS) assigned thereto, and at least one mobile element (MT, MT1, MT2, MT3, STB, MB, MBK, TKHA) are connected together for making telephone calls and/or sending/receiving text, audio, video and/or control data (TAVS) via at least one air interface (LSS) or via at least one air interface (LSS) and a line interface (LTSS),
a1) at least one first mobile element (MT, MT1, STB, MB, MBK) being configured to send/receive text, audio, video and/or control data (TAVS), the first mobile element (MT, MT1, STB, MB, MBK) and/or the base station (BS) being each assigned to the INTERNAL data source/data sink (I-DSQ1, I-DQS2) to receive the text, audio, video and/or control data (TAVS) intended for an INTERNAL data source/data sink (I-DSQ1, I-DQS2) and to send the text, audio, video and/or control data (TAVS) originating from the INTERNAL data source/data sink (I-DSQ1, I-DQS2),
a2) at least one second mobile element (MT, MT2, TKHA) being configured to make EXTERNAL telephone calls or to EXTERNALLY transmit/receive the text, audio, video and/or control data (TAVS) via the base station (BS) and, if more than one second mobile element (MT, MT2, TKHA) is present, also to make INTERNAL telephone calls or to INTERNALLY transmit/receive text, audio, video and/or control data (TAVS) between the second mobile elements (MT, MT2, TKHA);
b) the second mobile element (MT, MT2, TKHA) comprises a central control unit (MT-P) connected to the air interface (LSS) to control the operation and function processes in the second mobile element (MT, MT2, TKHA), a memory (MT-S) assigned to the central control unit (MT-P), and means (BSS, TA) connected to the central control unit (MT-P) for inputting text, audio, video and/or control data and means (BSS, AV) for outputting text, audio, video and/or control data, which form a functional unit, which is configured such that control commands (STK) are generated and emitted via the air interface (LSS), these control commands (STK) being used to address text, audio, video and/or control data (TAVS) terminated in the base station (BS), in the first mobile element (MT, MT1, STB, MB, MBK), in the second mobile element (MT, MT2, TKHA) and/or in the INTERNAL data source/data sink (I-DQS1, I-DQS2), and this data being sent directly or indirectly from the equipment in which the data is terminated to the INTERNAL data source/data sink (I-DQS1, I-DQS2) or a further INTERNAL data source/sink (I-DQS1, 1-DQS2), to the second mobile element (MT, MT2, TKHA) or a further second mobile element (MT, MT2, TKHA) and/or the EXTERNAL data source/data sink (E-DQS) to be output, transferred or externally stored.

22. The telecommunication system according to claim 21, **characterized in that**, in the second mobile element (MT, MT2, TKHA), the central control unit (MT-P) with the assigned memory (MT-S) connected to the air interface (LSS) and the input means (BSS, TA) and output means (BSS, AV) connected to the central control unit (MT-P) are configured such that check commands are generated and emitted in the RF signal via the air interface (LSS), the check commands also being usable to control the output, transfer and external storage of the text, audio, video and/or control data (TAVS).

23. The telecommunication system according to claim 21 or 22, **characterized in that** the air interface (LSS) comprises or is a shared interface for telephony and broadband transmission or a separate interface for telephony and broadband transmission, respectively.

24. The telecommunication system according to claim 23, **characterized in that** the air interface (LSS) is an interface based on DECT, WDCT, IEEE 802.11a, IEEE 802.11b, IEEE 802.11g, Bluetooth, DECT and Bluetooth, WDCT and Bluetooth, DECT and IEEE 802.11a, DECT and IEEE 802.11b, DECT and IEEE 802.11 g, WDCT and IEEE 802.11a, WDCT and IEEE 802.11b, WDCT and IEEE 802.11g, GSM and DECT, GSM and Bluetooth, GSM and IEEE 802.11a, GSM and IEEE 802.11b, GSM and IEEE 802.11g, 3GPP and Bluetooth, 3GPP and IEEE 802.11a, 3GPP and IEEE 802.11b, or 3GPP and IEEE 802.11g.

25. The telecommunication system according to claim 21, **characterized in that** the text data includes short messages according to the Short Message Service or video text information, the audio data includes telephone voice information, music information according to the Multimedia Message Service (MMS) or audio downloads from the Internet, in particular MP3 files, the video data includes image information according to the Multimedia Message Service or video downloads from the Internet and/or the control data includes data for controlling, measuring, regulating, calibrating, diagnosing and/or maintaining electrical appliances, in particular in the domestic field.

26. The telecommunication system according to claim 21, 23 or 24, **characterized in that** the second mobile element (MT, MT2, TKHA) is configured as a cordless user-friendly telephone handset comprising a keypad or voice control and a display device including menu control, and the base station (BS) is configured as a cordless base station.

27. The telecommunication system according to claim 21, 23 or 24, **characterized in that** the second mobile element (MT, MT2, TKHA) is configured as a mobile telephone comprising a cordless interface, in particular a Bluetooth interface, a keypad (TA) or voice control and a display device (AV) including menu control, and the base station (BS) is configured as a cordless base station.

28. The telecommunication system according to claim 21, 26 or 27, **characterized in that** the first mobile element (MT, MT1, STB, MB, MBK) is configured as a cordless I/O mobile box (MB, MBK) comprising an Ethernet interface or a USB interface.

29. The telecommunication system according to claim 21, 26, 27 or 28, **characterized in that** the first mobile element (MT, MT1, STB, MB, MBK) is configured as a cordless set-top box (STB) and/or a cordless I/O mobile box (MB, MBK) comprising an analog/digital interface, a SCART/S-VIDEO interface, a CINCH/S-PIDF interface and/or an EIB/LON/LCN/KNX interface, respectively.

30. The telecommunication system according to claim 21 or 28, **characterized in that** the first mobile element (MT, MT1, STB, MB, MBK) is connected to a personal computer (PC) as a first INTERNAL data source/data sink (I-DQS1).

31. The telecommunication system according to claim 21, **characterized in that** the first mobile element (MT, MT1, STB, MB, MBK) is integrated into a personal computer (PC) as a first INTERNAL data source/data sink (I-DQS1).

32. The telecommunication system according to claim 21 or 29, **characterized in that** the first mobile element (MT, MT1, STB, MB, MBK) is connected to a television (FA), a HIFI unit (HA) or an electrical appliance (ELG) as a second INTERNAL data source/data sink (I-DQS2).

33. The telecommunication system according to claim 21, **characterized in that** the first mobile element (MT, MT1, STB, MB, MBK) is integrated into a television (FA), a HIFI unit (HA) or into an electrical appliance (ELG) as a second INTERNAL data source/data sink (I-DQS2).

34. The telecommunication system according to claim 21, **characterized in that** the EXTERNAL data source/data sink (E-DQS) is used as a multimedia message service center or a short message service center.

35. The telecommunication system according to claim 21, **characterized in that** the base station (BS) is connected to a personal computer (PC) as a first INTERNAL data source/data sink (I-DQS1) and/or to a television (FA), a HIFI unit (HA) or an electrical appliance (ELG) as a second INTERNAL data source/data sink (I-DQS2).

36. The telecommunication system according to claim 21, **characterized in that** the base station (BS), serving as a network interface module (NSSM), is integrated into a personal computer (PC) as a first INTERNAL data source/data sink (I-DQS1) and/or into a television (FA), a HIFI unit (HA) or an electrical appliance (ELG) as a second INTERNAL data source/data sink (I-DQS2).

37. The telecommunication system according to claims 21 and 30 or 21 and 31 **characterized in that** the control commands (STK) are designed such that the personal computer (PC), which is in standby mode, is woken up and started up.

38. The telecommunication system according to claims 21 and 32 or 21 and 33, **characterized in that** the control commands (STK) are designed such that the television (FA), the HIFI unit (HA) or the electrical appliance (ELG), each being standby mode, is woken up and started up.

39. The telecommunication system according to claims 21, 29 and 32 or 21, 29 and 33, **characterized in that** the control commands (STK) are designed such that televoting is carried out.

40. The telecommunication system according to claims 21, 29 and 32 or 21, 29 and 33, **characterized in that** the control commands (STK) are designed such that the start and continuation of a television program are displayed on the second mobile element (MT, MT2, TKHA).

41. A telecommunication handset (MT, MT2, TKHA) for wireless communication and telecommunication in a smart home environment, having the following features:
a) at least one air interface (LSS), a central control unit (MT-P) connected to the air interface (LSS) for controlling operation and function processes in the telecommunication handset (MT, MT2, TKHA), a memory (MT-S) assigned to the central control unit (MT-P), and means (BSS, TA) connected to the central control unit (MT-P) for inputting text, audio, video and/or control data (TAVS) and means (BSS, AV) for outputting text, audio, video and/or control data (TAVS) form a functional unit, which is configured such that
a1) the telecommunication handset (MT, MT2, TKHA) can be connected to a base station (BS) for making EXTERNAL telephone calls or for EXTERNALLY transmitting/receiving of text, audio, video and/or control data (TAVS), the base station (BS) being connectable to a circuit-switched and/or packet-switched network (LVN, PVN) with an EXTERNAL data source/data sink (E-DQS) assigned thereto for text, audio, video and/or control data (TAVS);
a2) if further telecommunication handsets (MT, MT2, TKHA) and/or at least one additional first mobile element (MT, MT1, STB, MB, MBK) are connected to the base station (BS) for sending/receiving text, audio, video and/or control data (TAVS), the telecommunication handset (MT, MT2, TKHA)
a21) can be connected to each of these telecommunication handsets (MT, MT2, TKHA) for making INTERNAL telephone calls or for INTERNALLY transmitting/receiving text, audio, video and/or control data (TAVS);
a22) can be connected to each of these mobile elements (MT, MT1, MT2, STB, MB, MBK) for INTERNALLY transmitting/receiving the text, audio, video and/or control data (TAVS), the first mobile element (MT, MT1, STB, MB, MBK) and/or the base station (BS) being assignable, respectively, to the INTERNAL data source/data sink (I-DSQ1, I-DQS2) to receive the text, audio, video and/or control data (TAVS) intended for an INTERNAL data source/data sink (I-DSQ1, I-DQS2) and to send the text, audio, video and/or control data (TAVS) originating from the INTERNAL data source/data sink (I-DSQ1, I-DQS2);
a3) control commands (STK) are generated and emitted via the air interface (LSS), these control commands (STK) being used to address text, audio, video and/or control data (TAVS) terminated in the base station (BS), in the first mobile element (MT, MT1, STB, MB, MBK), in the telecommunication handset (MT, MT2, TKHA) and/or in the INTERNAL data source/sink (I-DQS1, I-DQS2), and this data being sent directly or indirectly from the equipment in which the data is terminated to the INTERNAL data source/data sink (I-DQS1, I-DQS2) or a further INTERNAL data source/sink (I-DQS1, I-DQS2), to the telecommunication handset (MT, MT2, TKHA) or the further telecommunication handset (MT, MT2, TKHA) and/or the EXTERNAL data source/data sink (E-DQS) to be output, transferred or externally stored.

42. The telecommunication handset according to claim 41, **characterized in that** the functional unit formed by the air interface (LSS), the central control unit (MT-P) connected to the air interface (LSS), the memory (MT-S) assigned to the central control unit (MT-P), and the input means (BSS, TA) and output means (BSS, AV) connected to the central control unit (MT-P) is configured such that check commands are generated and emitted in the RF signal via the air interface (LSS), the check commands also being usable to control the output, transfer and external storage of the text, audio, video and/or control data (TAVS).

43. The telecommunication handset according to claim 41 or 42, **characterized in that** the air interface (LSS) comprises or is a shared interface for telephony and broadband transmission or a separate interface for telephony and broadband transmission, respectively.

44. The telecommunication handset according to claim 43, **characterized in that** the air interface (LSS) is an interface based on DECT, WDCT, IEEE 802.11a, IEEE 802.11b, IEEE 802.11g, Bluetooth, DECT and Bluetooth, WDCT and Bluetooth, DECT and IEEE 802.11a, DECT and IEEE 802.11b, DECT and IEEE 802.11 g, WDCT and IEEE 802.11a, WDCT and IEEE 802.11b, WDCT and IEEE 802.11g, GSM and DECT, GSM and Bluetooth, GSM and IEEE 802.11a, GSM and IEEE 802.11b, GSM and IEEE 802.11g, 3GPP and Bluetooth, 3GPP and IEEE 802.11a, 3GPP and IEEE 802.11b, or 3GPP and IEEE 802.11g.

45. The telecommunication handset according to claim 31, **characterized in that** the text data includes short messages according to the Short Message Service or video text information, the audio data includes telephone voice information, music information according to the Multimedia Message Service (MMS) or audio downloads from the Internet, in particular MP3 files, the video data includes image information according to the Multimedia Message Service or video downloads from the Internet and/or the control data includes data for controlling, measuring, regulating, calibrating, diagnosing and/or maintaining electrical appliances, in particular in the domestic field.

46. The telecommunication handset according to claims 41, 43, 44, **characterized by** a cordless user-friendly telephone handset comprising a keypad (TA) or voice control and a display device (AV) including menu control, which is assigned to a cordless base station as the base station (BS).

47. The telecommunication handset according to claims 41, 43, 44, **characterized by** a mobile telephone comprising a cordless interface, in particular a Bluetooth interface, a keypad (TA) or voice control and a display device (AV) including menu control, which is assigned to a cordless base station as the base station (BS).

48. The telecommunication handset according to claims 41, 46, 47, **characterized in that** the first mobile element (MT, MT1, STB, MB, MBK) is configured as a cordless I/O mobile box (MB, MBK) comprising an Ethernet interface or a USB interface.

49. The telecommunication handset according to claim 41, 46, 47 or 48, **characterized in that** the first mobile element (MT, MT1, STB, MB, MBK) is configured as a cordless set-top box (STB) and/or a cordless I/O mobile box (MB, MBK) comprising an analog/digital interface, a SCART/S-VIDEO interface, a CINCH/S-PIDF interface and/or an EIB/LON/LCN/KNX interface, respectively.

50. The telecommunication handset according to claim 41 or 48, **characterized in that** the first mobile element (MT, MT1, STB, MB, MBK) is connected to a personal computer (PC) as a first INTERNAL data source/data sink (I-DQS1).

51. The telecommunication handset according to claim 41, **characterized in that** the first mobile element (MT, MT1, STB, MB, MBK) is integrated into a personal computer (PC) as a first INTERNAL data source/data sink (I-DQS1).

52. The telecommunication handset according to claim 41 or 49, **characterized in that** the first mobile element (MT, MT1, STB, MB, MBK) is connected to a television (FA), a HIFI unit (HA) or an electrical appliance (ELG) as a second INTERNAL data source/data sink (I-DQS2).

53. The telecommunication handset according to claim 41, **characterized in that** the first mobile element (MT, MT1, STB, MB, MBK) is integrated into a television (FA), a HIFI unit (HA) or an electrical appliance (ELG) as a second INTERNAL data source/data sink (I-DQS2).

54. The telecommunication handset according to claim 41, **characterized in that** the EXTERNAL data source/data sink (E-DQS) is used as a multimedia message service center or a short message service center.

55. The telecommunication handset according to claim 41, **characterized in that** the base station (BS) is connected to a personal computer (PC) as a first INTERNAL data source/data sink (I-DQS1) and/or to a television (FA), a HIFI unit (HA) or an electrical appliance (ELG) as a second INTERNAL data source/data sink (I-DQS2).

56. The telecommunication handset according to claim 41, **characterized in that** the base station (BS), serving as a network interface module (NSSM), is integrated into a personal computer (PC) as a first INTERNAL data source/data sink (I-DQS1) and/or into a television (FA), a HIFI unit (HA) or an electrical appliance (ELG) as a second INTERNAL data source/data sink (I-DQS2).

57. The telecommunication handset according to claims 41 and 50 or 41 and 51 **characterized in that** the control commands (STK) are designed such that the personal computer (PC), which is in standby mode, is woken up and started up.

58. The telecommunication handset according to claims 41 and 52 or 41 and 53, **characterized in that** the control commands (STK) are designed such that the television (FA), the HIFI unit (HA) or the electrical appliance (ELG), each being in standby mode, is woken up and started up.

59. The telecommunication handset according to claims 41, 49 and 52 or 41, 49 and 53, **characterized in that** the control commands (STK) are designed such that televoting is carried out.

60. The telecommunication handset according to claims 41, 49 and 52 or 41, 49 and 53, **characterized in that** the control commands (STK) are designed such that the start and continuation of a television program are displayed on the telecommunication handset (MT, MT2, TKHA).

## Revendications

1. Procédé de communication sans fil et de télécommunication dans un environnement de « maison intelligente » doté des caractéristiques suivantes :
a) pour la réalisation de conversations téléphoniques et la transmission/réception de données de texte, audio, vidéo et/ou de commande (TAVS), une station de base (BS) est connectée à un réseau à commutation de circuits et/ou à commutation de paquets (LVN, PVN) avec une source/un puits de données EXTERNE (E-DQS) associé à celui-ci pour des données de texte, audio, vidéo et/ou de commande (TAVS), et au moins une partie mobile (MT, MT1, MT2, MT3, STB, MB, MBK, TKHA) est associée à la station de base (BS) pour l'exécution de conversations téléphoniques et la transmission/réception de données de texte, audio, vidéo et/ou de commande (TAVS), par le biais d'au moins une interface hertzienne (LSS) ou par le biais d'au moins une interface hertzienne (LSS) et d'une interface de ligne (LTSS), où
a1) au moins une première partie mobile (MT, MT1, STB, MB, MBK) transmet/reçoit des données de texte, audio, vidéo et/ou de commande (TAVS), où la première partie mobile (MT, MT1, STB, MB, MBK) et/ou la station de base (BS) sont associées à une source/un puits de données en INTERNE (I-DQS1, I-DSQ2) afin de transmettre les données de texte, audio, vidéo et/ou de commande (TAVS) transmises par ceux-ci et afin de recevoir les données de texte, audio, vidéo et/ou de commande (TAVS) à transmettre à ceux-ci,
a2) des conversations téléphoniques en EXTERNE sont menées avec au moins une deuxième partie mobile (MT, MT2, TKHA) par le biais de la station de base (BS), ou les données de texte, audio, vidéo et/ou de commande (TAVS) sont transmises vers l'extérieur/reçues de l'extérieur, ainsi que pour plus d'une deuxième partie mobile (MT, MT2, TKHA) parmi les deuxièmes parties mobiles (MT, MT2, TKHA), des conversations téléphoniques sont également menées en INTERNE ou les données de texte, audio, vidéo et/ou de commande (TAVS) sont renvoyées/reçues en interne,
b) la deuxième partie mobile (MT, MT2, TKHA) génère des ordres de commande (STK) et transmet ceux-ci par le biais de l'interface hertzienne (LSS), où, à l'aide de ces ordres de commande (STK), des données de texte, audio, vidéo et/ou de commande (TAVS) programmées sont invoquées dans la station de base (BS), dans la première partie mobile (MT, MT1, STB, MB, MBK), dans la deuxième partie mobile (MT, MT2, TKHA) et/ou dans la source/le puits de données INTERNE (I-DQS1, I-DQS2), et ces données sont envoyées par l'installation dans laquelle les données sont programmées directement ou indirectement à la source/au puits de données en INTERNE (I-DSQ1, I-DSQ2), respectivement à une autre source/un autre puits de données en INTERNE (I-DSQ1, I-DSQ2), vers la deuxième partie mobile (MT, MT2, TKHA), respectivement une autre deuxième partie mobile (MT, MT2, TKHA), et/ou à une source/un puits de données en EXTERNE (E-DSQ) pour leur diffusion, leur attribution ou leur sous-traitance.

2. Procédé selon la revendication 1, **caractérisé en ce que**
des ordres de commande sont générés et ceux-ci sont envoyés dans le signal HF par le biais de l'interface hertzienne (LSS), où la diffusion, l'attribution ou la sous-traitance des données de texte, audio, vidéo et/ou de commande (TAVS) est en outre commandée.

3. Procédé selon la revendication 1 ou 2, **caractérisé en ce**
**qu'**en tant qu'interface hertzienne (LSS), une interface commune pour la téléphonie et la transmission de données en bandes larges ou respectivement une interface séparée pour la téléphonie et la transmission de données en bandes larges sont employées.

4. Procédé selon la revendication 3, **caractérisé en ce**
**qu'**en tant qu'interface hertzienne (LSS) une interface basée sur les normes DECT, WDCT,IEEE 802.11a, IEEE 802.11b, IEEE 802.11g, Bluetooth, DECT et Bluetooth, WDCT et Bluetooth, DECT et IEEE 802.11a, DECT et IEEE 802.11b, DECT et IEEE 802.11g, WDCT et IEEE 802.11a, WDCT et IEEE 802.11b, WDCT et IEEE 802.11g, GSM et DECT, GSM et Bluetooth, GSM et IEEE 802.11a, GSM et IEEE 802.11b, GSM et IEEE 802.11g, 3GPP et Bluetooth, 3GPP et IEEE 802.11a, 3GPP et IEEE 802.11b, ou 3GPP et IEEE 802.11g est utilisée.

5. Procédé selon la revendication 1, **caractérisé en ce**
**qu'**en tant que données textuelles des messages courts d'informations selon le « service de messages courts » ou des informations de télétexte sont employés, qu'en tant que données audio, des informations par téléphone, des informations musicales sont employées selon le « service de messages multimédia » (MMS) ou des téléchargements audio à partir d'internet, notamment des données MP3, qu'en tant que données de vidéo des informations d'images sont employées selon le »service de messages multimédia » ou des téléchargement de vidéos à partir d'internet, et/ou en tant que données de commande, sont employées des données pour la commande, la mesure, le réglage, l'étalonnage, le diagnostic et/ou l'entretien d'appareils électriques, notamment dans la zone domestique.

6. Procédé selon les revendications 1, 3 ou 4, **caractérisé en ce**
**qu'**en tant que deuxième partie mobile (MT, MT2, TKHA), on emploie un appareil manuel téléphonique de confort sans fil avec un clavier ou une commande vocale ainsi qu'un dispositif d'affichage incluant une commande de menu et qu'en tant que station de base (BS) on emploie une station de base sans fil.

7. Procédé selon les revendications 1, 3 ou 4, **caractérisé en ce**
**qu'**en tant que deuxième partie mobile (MT, MT2, TKHA), on emploie un téléphone mobile avec une interface sans fil, notamment une interface « Bluetooth », un clavier (TA) ou une commande vocale ainsi qu'un dispositif d'affichage (AV) incluant une commande de menu et qu'en tant que station de base (BS), on emploie une station de base sans fil.

8. Procédé selon les revendications 1, 6 ou 7, **caractérisé en ce**
**qu'**en tant que première partie mobile (MT, MT1, STB, MB, MBK), on emploie une box mobile I/O sans fil (MB, MBK) avec une interface « Ethernet » ou une interface « USB ».

9. Procédé selon les revendications 1, 6, 7 ou 8, **caractérisé en ce**
**qu'**en tant que première partie mobile (MT, MT1, STB, MB, MBK), on emploie un boîtier décodeur Set-top box sans fil (STB) et/ou une box mobile I/O sans fil (MB, MBK) avec respectivement une interface « analogique/numérique », une interface « SCART/S-vidéo », une interface « CINCH/S-PIDF » et/ou une interface « EIB/LON/LCN/KNX ».

10. Procédé selon la revendication 1 ou 8, **caractérisé en ce que**
la première partie mobile (MT, MT1, STB, MB, MBK) est reliée avec dans un ordinateur personnel (PC) en tant que première source/puits de données en INTERNE (I-DSQ1).

11. Procédé selon la revendication 1, **caractérisé en ce que**
la première partie mobile (MT, MT1, STB, MB, MBK) est intégrée dans un ordinateur personnel (PC) en tant que première source/puits de données en INTERNE (I-DSQ1).

12. Procédé selon la revendication 1 ou 9, **caractérisé en ce que**
la première partie mobile (MT, MT1, STB, MB, MBK) est reliée avec un téléviseur (FA), une enceinte HIFI (HA) ou un appareil électrique (ELG) en tant que deuxième source/puits de données en INTERNE (I-DSQ2).

13. Procédé selon la revendication 1, **caractérisé en ce que**
la première partie mobile (MT, MT1, STB, MB, MBK) est intégrée dans un téléviseur (FA), une enceinte HIFI (HA) ou un appareil électrique (ELG) en tant que deuxième source/puits de données en INTERNE (I-DSQ2).

14. Procédé selon la revendication 1, **caractérisé en ce que**
la source/le puits de données en EXTERNE (E-DSQ) est employé en tant que centre de services d'informations multimédia ou en tant que centre de services de messages courts.

15. Procédé selon la revendication 1, **caractérisé en ce que**
la station de base (BS) est reliée avec un ordinateur personnel (PC) en tant que première source/puits de données INTERNE (I-DSQ1) et/ou avec un téléviseur (FA), une enceinte HIFI (HA) ou un appareil électrique (ELG) en tant que deuxième source/puits de données INTERNE (I-DSQ2).

16. Procédé selon la revendication 1, **caractérisé en ce que**
la station de base (BS) est intégrée en tant que module d'interface réseau (NSSM) dans un ordinateur personnel (PC) sous forme d'une première source/puits de données INTERNE (I-DSQ1), dans un téléviseur (FA), une enceinte HIFI (HA) ou un appareil électrique (ELG) sous forme de deuxième source/puits de données INTERNE (I-DSQ2).

17. Procédé selon les revendications 1 et 10 ou 1 et 11, **caractérisé en ce que**
l'ordinateur personnel (PC) qui se trouve en mode « veille » est activé et mis en fonctionnement avec l'ordre de commande (STK).

18. Procédé selon les revendications 1 et 12 ou 1 et 13, **caractérisé en ce que**
le téléviseur (FA), l'enceinte HIFI (HA) ou l'appareil électrique (ELG) qui se trouvent respectivement en mode « veille » sont activés et mis en fonctionnement avec l'ordre de commande (STK).

19. Procédé selon les revendications 1, 9 et 12 ou 1, 9 et 13, **caractérisé en ce**
**qu'**un « télévote » est effectué avec l'ordre de commande (STK).

20. Procédé selon les revendications 1, 9 et 12 ou 1, 9 et 13, **caractérisé en ce que**
le début et la poursuite d'une émission télévisée sont affichés avec l'ordre de commande (STK) sur la deuxième partie mobile (MT2, MT, TKHA).

21. Système de télécommunication (TKS1, TKS2, TKS3) pour la communication sans fil et la télécommunication dans un environnement de « maison intelligente » doté des caractéristiques suivantes :
a) une station de base (BS) pour la réalisation de conversations téléphoniques et la transmission/réception de données de texte, audio, vidéo et/ou de commande (TAVS), peut être connectée à un réseau à commutation de circuits et/ou à commutation de paquets (LVN, PVN) avec une source/un puits de données EXTERNE (E-DQS) associé à celui-ci pour des données de texte, audio, vidéo et/ou de commande (TAVS) et au moins une partie mobile (MT, MT1, MT2, MT3, STB, MB, MBK, TKHA) pour l'exécution de conversations téléphoniques et la transmission/réception de données de texte, audio, vidéo et/ou de commande (TAVS),sont reliés par le biais d'au moins une interface hertzienne (LSS) ou par le biais d'au moins une interface hertzienne (LSS) et d'une interface de ligne (LTSS), où
a1) au moins une première partie mobile (MT, MT1, STB, MB, MBK) est conçue pour la transmission/la réception de données de texte, audio, vidéo et/ou de commande (TAVS), où la première partie mobile (MT, MT1, STB, MB, MBK) et/ou la station de base (BS) sont associées à une source/un puits de données en INTERNE (I-DQS1, I-DSQ2) afin de réceptionner les données de texte, audio, vidéo et/ou de commande (TAVS) qui sont prévues pour une source/un puits de données INTERNE (I-DSQ1, I-DSQ2) et pour transmettre les données de texte, audio, vidéo et/ou de commande (TAVS) qui proviennent de la source/du puits de données INTERNE (I-DSQ1, I-DSQ2), sont associées respectivement à la source/au puits de données INTERNE (I-DSQ1, I-DSQ2),
a2) au moins une deuxième partie mobile (MT, MT2, TKHA) est conçue, par le biais de la station de base (BS), pour effectuer des conversations téléphoniques en EXTERNE ou pour envoyer/recevoir en EXTERNE les données de texte, audio, vidéo et/ou de commande (TAVS) ainsi que, pour plus d'une deuxième partie mobile (MT, MT2, TKHA) parmi les deuxièmes parties mobiles (MT, MT2, TKHA), pour mener des conversations téléphoniques en INTERNE ou pour l'envoi/la réception en INTERNE des données de texte, audio, vidéo et/ou de commande (TAVS),
b) la deuxième partie mobile (MT, MT2, TKHA) présente une unité de commande centrale (MT-P) reliée avec l'interface hertzienne (LSS) pour la commande des actions de service et de fonctions dans la deuxième partie mobile (MT, MT2, TKHA), une mémoire (MT-S) associée à l'unité de commande centrale (MT-P) ainsi des moyens (BSS, TA) reliés avec l'unité de commande centrale (MT-P) pour l'entrée de données de texte, audio, vidéo et/ou de commande et des moyens (BSS, AV) pour l'émission de données de teste, audio, vidéo et/ou de commande, qui forment une unité fonctionnelle, où celle-ci est conçue de telle manière que des ordres de commande (STK) sont générés et ceux-ci sont émis par le biais de l'interface hertzienne (LSS), où, à l'aide de ces ordres de commande (STK), des données de texte, audio, vidéo et/ou de commande (TAVS) programmées sont invoquées dans la station de base (BS), dans la première partie mobile (MT, MT1, STB, MB, MBK), dans la deuxième partie mobile (MT, MT2, TKHA) et/ou dans la source/le puits de données en INTERNE (I-DSQ1, I-DSQ2), et ces données sont envoyées par l'installation dans laquelle les données sont programmées, directement ou indirectement à la source/au puits de données en INTERNE (I-DSQ1, I-DSQ2), respectivement à une autre source/un autre puits de données en INTERNE (I-DSQ1, I-DSQ2), la deuxième partie mobile (MT, MT2, TKHA), respectivement une autre deuxième partie mobile (MT, MT2, TKHA), et/ou à une source/un puits de données en EXTERNE (E-DSQ) pour leur diffusion, leur attribution ou leur sous-traitance.

22. Système de télécommunication selon la revendication 21, **caractérisé en ce que**
dans la deuxième partie mobile (MT, MT2, TKHA), l'unité de commande centrale (MT-P) reliée avec l'interface hertzienne (LSS) ainsi que les moyens d'entrée (BSS, TA) et les moyens de sortie (BSS, AV) reliés avec l'unité de commande centrale (MT-P) sont conçus de telle manière que des ordres de commande sont générés et que ceux-ci sont envoyés dans le signal HF par le biais de l'interface hertzienne (LSS), où, avec l'ordre de commande, la diffusion, l'attribution et la sous-traitance des données de texte, audio, vidéo et/ou de commande (TAVS) peuvent également être commandées.

23. Système de télécommunication selon la revendication 21 ou 22, **caractérisé en ce que**
l'interface hertzienne (LSS) comprend, respectivement, est, une interface commune pour la téléphonie et la transmission de données en bandes larges ou respectivement une interface séparée pour la téléphonie et la transmission de données en bandes larges.

24. Système de télécommunication selon la revendication 23, **caractérisé en ce que**
l'interface hertzienne (LSS) est une interface basée sur des normes DECT, WDCT,IEEE 802.11a, IEEE 802.11b, IEEE 802.11g, Bluetooth, DECT et Bluetooth, WDCT et Bluetooth, DECT et IEEE 802.11a, DECT et IEEE 802.11b, DECT et IEEE 802.11g, WDCT et IEEE 802.11a, WDCT et IEEE 802.11b, WDCT et IEEE 802.11g, GSM et DECT, GSM et Bluetooth, GSM et IEEE 802.11a, GSM et IEEE 802.11b, GSM et IEEE 802.11g, 3GPP et Bluetooth, 3GPP et IEEE 802.11a, 3GPP et IEEE 802.11b, ou 3GPP et IEEE 802.11g.

25. Système de télécommunication selon la revendication 21, **caractérisé en ce que**
les données de texte comprennent des messages courts d'informations selon le « service de messages courts » ou des informations de télétexte, les données audio comprennent des informations par téléphone, des informations musicales selon le « service de messages multimédia » ou des téléchargements audio à partir d'internet, notamment des données MP3, les données de vidéo comprennent des informations d'images selon le « service de messages multimédia » ou des téléchargement de vidéos à partir d'internet, et/ou les données de commande comprennent des données pour la commande, la mesure, le réglage, l'étalonnage, le diagnostic et/ou l'entretien d'appareils électriques, notamment dans la zone domestique.

26. Système de télécommunication selon les revendications 21, 23 ou 24, **caractérisé en ce que**
la deuxième partie mobile (MT, MT2, TKHA) est conçue sous la forme d'un appareil manuel téléphonique de confort sans fil avec un clavier (TA) ou une commande vocale ainsi qu'un dispositif d'affichage (AV) incluant une commande de menu et que la station de base (BS) est conçue sous forme d'une station de base sans fil.

27. Système de télécommunication selon les revendications 21, 23 ou 24, **caractérisé en ce que**
la deuxième partie mobile (MT, MT2, TKHA) est conçue sous la forme d'un téléphone mobile avec une interface sans fil, notamment une interface « Bluetooth », un clavier (TA) ou une commande vocale ainsi qu'un dispositif d'affichage (AV) incluant une commande de menu et que la station de base (BS) est conçue sous forme d'une station de base sans fil.

28. Système de télécommunication selon les revendications 21, 26 ou 27, **caractérisé en ce que**
la première partie mobile (MT, MT1, STB, MB, MBK) est conçue sous forme d'une box mobile I/O sans fil (MB, MBK) avec une interface
« Ethernet » ou une interface « USB ».

29. Système de télécommunication selon les revendications 21, 26, 27 ou 28, **caractérisé en ce que**
la première partie mobile (MT, MT1, STB, MB, MBK) est conçue sous forme d'un boîtier décodeur Set-top box sans fil (STB) et/ou d'une box mobile I/O sans fil (MB, MBK) avec respectivement une interface « analogique/numérique », une interface « SCART/S-vidéo », une interface « CINCH/S-PIDF » et/ou une interface « EIB/LON/LCN/KNX ».

30. Système de télécommunication selon les revendications 21 ou 28, **caractérisé en ce que**
la première partie mobile (MT, MT1, STB, MB, MBK) est reliée avec un ordinateur personnel (PC) en tant que première source/puits de données INTERNE (I-DSQ1).

31. Système de télécommunication selon la revendication 21, **caractérisé en ce que**
la première partie mobile (MT, MT1, STB, MB, MBK) est intégrée dans un ordinateur personnel (PC) en tant que première source/puits de données INTERNE (I-DSQ1).

32. Système de télécommunication selon la revendication 21 ou 29, **caractérisé en ce que**
la première partie mobile (MT, MT1, STB, MB, MBK) est reliée avec un téléviseur (FA), une enceinte HIFI (HA) ou un appareil électrique (ELG) en tant que deuxième source/puits de données INTERNE (I-DSQ2).

33. Système de télécommunication selon la revendication 21, **caractérisé en ce que**
la première partie mobile (MT, MT1, STB, MB, MBK) est intégrée dans un téléviseur (FA), une enceinte HIFI (HA) ou un appareil électrique (ELG) en tant que deuxième source/puits de données INTERNE (I-DSQ2).

34. Système de télécommunication selon la revendication 21, **caractérisé en ce que**
la source/le puits de données EXTERNE est conçu sous forme d'un centre de services d'informations multimédia ou en tant que centre de services de messages courts.

35. Système de télécommunication selon la revendication 21, **caractérisé en ce que**
la station de base (BS) est reliée avec un ordinateur personnel (PC) en tant que première source/puits de données INTERNE (I-DSQ1) et/ou avec un téléviseur (FA), une enceinte HIFI (HA) ou un appareil électrique (ELG) en tant que deuxième source/puits de données INTERNE (I-DSQ2).

36. Système de télécommunication selon la revendication 21, **caractérisé en ce que**
la station de base (BS) est intégrée en tant que module d'interface réseau (NSSM) dans un ordinateur personnel (PC) sous forme d'une première source/puits de données INTERNE (I-DSQ1), et/ou dans un téléviseur (FA), une enceinte HIFI (HA) ou un appareil électrique (ELG) sous forme de deuxième source/puits de données INTERNE (I-DSQ2).

37. Système de télécommunication selon les revendications 21 et 30 ou 21 et 31, **caractérisé en ce que**
les ordres de commande (STK) sont construits de telle manière que l'ordinateur personnel (PC) qui se trouve dans le mode « veille » est activé et mis en fonctionnement.

38. Système de télécommunication selon les revendications 21 et 32 ou 21 et 33, **caractérisé en ce que**
les ordres de commande (STK) sont construits de telle manière que le téléviseur (FA), l'enceinte HIFI (HA) ou l'appareil électrique (ELG) qui se trouvent respectivement dans le mode « veille » sont activés et mis en fonctionnement.

39. Système de télécommunication selon les revendications 21, 29 et 32 ou 21, 29 et 33, **caractérisé en ce que**
les ordres de commande (STK) sont construits de telle manière qu'un « télévote » peut être effectué.

40. Système de télécommunication selon les revendications 21, 29 et 32 ou 21, 29 et 33, **caractérisé en ce que**
les ordres de commande (STK) sont construits de telle manière que le début et la poursuite d'une émission de télévision peuvent être affichés sur la deuxième partie mobile (MT, MT2, TKHA).

41. Appareil manuel de télécommunication (MT, MT2, TKHA) pour la communication sans fil et la télécommunication dans un environnement de « maison intelligente » doté des caractéristiques suivantes :
a) au moins une interface hertzienne (LSS), une unité de commande centrale (MT-P) reliée avec l'interface hertzienne (LSS) pour la commande des actions de services et de fonctions dans l'appareil manuel de télécommunication (MT, MT2, TKHA), une mémoire (MT-S) associée à l'unité de commande centrale (MT-P) ainsi des moyens (BSS, TA) reliés avec l'unité de commande centrale (MT-P) pour l'entrée de données de texte, audio, vidéo et/ou de commande et des moyens (BSS, AV) pour l'émission de données de teste, audio, vidéo et/ou de commande, qui forment une unité fonctionnelle, qui est conçue de telle manière que
a1) l'appareil manuel de télécommunication (MT, MT2, TKHA)peut être connecté pour mener des conversations téléphoniques EXTERNE ou pour l'envoi/la réception en EXTERNE de données de texte, audio, vidéo et/ou de commande (TAVS) peut être relié à une station de base (BS) qui peut être connectée à un réseau fourni par une ligne et/ou par paquets (LVN, PVN) avec une source/un puits de données EXTERNE associés (E-DQS) pour des données de texte, audio, vidéo et/ou de commande (TAVS),
a2) dans le cas où d'autres appareils manuels de télécommunication (MT, MT2, TKHA) et/ou au moins une première partie mobile (MT, MT1, STB, MB, MBK) supplémentaire respective pour l'envoi/la réception de données de texte, audio, vidéo et/ou de commande (TAVS) sont reliés avec la station de base (BS), l'appareil manuel de télécommunication (MT, MT2, TKHA) peut être relié
a21) pour mener des conversations téléphoniques en INTERNE ou pour l'envoi/la réception de données de texte, audio, vidéo et/ou de commande (TAVS), avec chacun de ces appareils manuels de télécommunication (MT, MT2, TKHA),
a22) pour ou pour l'envoi/la réception en INTERNE de données de texte, audio, vidéo et/ou de commande (TAVS), avec chacune de ces parties mobiles (MT, MT1, MT2, STB, MB, MBK), où la première partie mobile (MT, MT1, STB, MB, MBK) et/ou la station de base (BS) sont prévues pour la réception des données de texte, audio, vidéo et/ou de commande (TAVS), qui sont destinées à une source/un puits de données en INTERNE (I-DQS1, I-DSQ2), et pour la transmission de données de texte, audio, vidéo et/ou de commande (TAVS) qui proviennent de la source/du puits de données INTERNE (I-DSQ1 ; I-DSQ2) sont respectivement associées à celle-ci,
a3) crée des ordres de commande (STK) et ceux-ci sont émis par le biais de l'interface (LSS), où, dans la première partie mobile (MT, MT1, STB, MB, MBK) dans l'appareil manuel de télécommunication (MT, MT2, TKHA) et/ou dans la source/le puits de données INTERNE (I-DSQ1, I-DSQ2) des données de texte, audio, vidéo et/ou de commande (TAVS) programmées sont invoquées, et ces données programmées par l'installation sont envoyées directement ou indirectement à la source/au puits de données INTERNE (I-DSQ1, I-DSQ2), respectivement à une autre source/puits de données INTERNE (I-DSQ1, I-DSQ2), à l'appareil manuel de télécommunication (MT, MT2, TKHA) et/ou à la source/le puits de données EXTERNE (E-DQS) pour leur diffusion, leur attribution ou leur sous-traitance.

42. Appareil manuel de télécommunication selon la revendication 41,
**caractérisé en ce que**
l'unité de commande centrale (MT-P) reliée avec l'interface hertzienne (LSS) et par l'interface hertzienne (LSS), la mémoire (MT-S) associée à l'unité de commande centrale (MT-P) ainsi que l'unité fonctionnelle formée par les moyens d'entrée (BSS, TA) et les moyens de sortie (BSS, AV) reliés avec l'unité de commande centrale (MT-P) sont conçus de telle manière que des ordres de commande sont générés et que ceux-ci sont envoyés dans le signal HF par le biais de l'interface hertzienne (LSS), où, avec l'ordre de commande, la diffusion, l'attribution et la sous-traitance des données de texte, audio, vidéo et/ou de commande (TAVS) peuvent également être commandées.

43. Appareil manuel de télécommunication selon la revendication 41 ou 42, **caractérisé en ce que**
l'interface hertzienne (LSS) comprend, respectivement, est, une interface commune pour la téléphonie et la transmission de données en bandes larges ou comprend, respectivement est, une interface séparée pour la téléphonie et la transmission de données en bandes larges.

44. Appareil manuel de télécommunication selon la revendication 43,
**caractérisé en ce que**
l'interface hertzienne (LSS) est une interface basée sur des normes DECT, WDCT,IEEE 802.11a, IEEE 802.11b, IEEE 802.11g, Bluetooth, DECT et Bluetooth, WDCT et Bluetooth, DECT et IEEE 802.11a, DECT et IEEE 802.11b, DECT et IEEE 802.11g, WDCT et IEEE 802.11a, WDCT et IEEE 802.11b, WDCT et IEEE 802.11g, GSM et DECT, GSM et Bluetooth, GSM et IEEE 802.11a, GSM et IEEE 802.11b, GSM et IEEE 802.11g, 3GPP et Bluetooth, 3GPP et IEEE 802.11a, 3GPP et IEEE 802.11b, ou 3GPP et IEEE 802.11g.

45. Appareil manuel de télécommunication selon la revendication 41,
**caractérisé en ce que**
les données de texte comprennent des messages courts d'informations selon le « service de messages courts » ou des informations de télétexte, les données audio comprennent des informations par téléphone, des informations musicales selon le « service de messages multimédia » ou des téléchargements audio à partir d'internet, notamment des données MP3, les données de vidéo comprennent des informations d'images selon le « service de messages multimédia » ou des téléchargement de vidéos à partir d'internet, et/ou les données de commande comprennent des données pour la commande, la mesure, le réglage, l'étalonnage, le diagnostic et/ou l'entretien d'appareils électriques, notamment dans la zone domestique.

46. Appareil manuel de télécommunication selon les revendications 41, 43, 44,
**caractérisé par**
un appareil manuel téléphonique de confort sans fil avec un clavier (TA) ou une commande vocale ainsi qu'un dispositif d'affichage (AV) incluant une commande de menu qui est associé à une station de base (BS) conçue sous forme d'une station de base sans fil.

47. Appareil manuel de télécommunication selon les revendications 41, 43, 44,
**caractérisé par**
un téléphone mobile avec une interface sans fil, notamment une interface « Bluetooth », un clavier (TA) ou une commande vocale ainsi qu'un dispositif d'affichage (AV) incluant une commande de menu, qui est associé à une station de base (BS) conçue sous forme de station de base sans fil.

48. Appareil manuel de télécommunication selon les revendications 41, 46, 47,
**caractérisé en ce que**
la première partie mobile (MT, MT1, STB, MB, MBK) est conçue sous forme d'une box mobile I/O sans fil (MB, MBK) avec une interface
« Ethernet » ou une interface « USB ».

49. Appareil manuel de télécommunication selon les revendications 41, 46, 47 ou 48
**caractérisé en ce que**
la première partie mobile (MT, MT1, STB, MB, MBK) est conçue sous forme d'un boîtier décodeur Set-top box sans fil (STB) et/ou d'une box mobile I/O sans fil (MB, MBK) avec respectivement une interface « analogique/numérique », une interface « SCART/S-vidéo », une interface « CINCH/S-PIDF » et/ou une interface « EIB/LON/LCN/KNX ».

50. Appareil manuel de télécommunication selon les revendications 41 ou 48, **caractérisé en ce que**
la première partie mobile (MT, MT1, STB, MB, MBK) est reliée avec un ordinateur personnel (PC) en tant que première source/puits de données INTERNE (I-DSQ1).

51. Appareil manuel de télécommunication selon la revendication 41,
**caractérisé en ce que**
la première partie mobile (MT, MT1, STB, MB, MBK) est intégrée dans un ordinateur personnel (PC) en tant que première source/puits de données INTERNE (I-DSQ1).

52. Appareil manuel de télécommunication selon la revendication 41 ou 49, **caractérisé en ce que**
la première partie mobile (MT, MT1, STB, MB, MBK) est reliée avec un téléviseur (FA), une enceinte HIFI (HA) ou un appareil électrique (ELG) en tant que deuxième source/puits de données INTERNE (I-DSQ2).

53. Appareil manuel de télécommunication selon la revendication 41,
**caractérisé en ce que**
la première partie mobile (MT, MT1, STB, MB, MBK) est intégrée dans un téléviseur (FA), une enceinte HIFI (HA) ou un appareil électrique (ELG) en tant que deuxième source/puits de données INTERNE (I-DSQ2).

54. Appareil manuel de télécommunication selon la revendication 41,
**caractérisé en ce que**
la source/le puits de données EXTERNE est conçu sous forme d'un centre de services d'informations multimédia ou en tant que centre de services de messages courts.

55. Appareil manuel de télécommunication selon la revendication 41,
**caractérisé en ce que**
la station de base (BS) est reliée avec un ordinateur personnel (PC) en tant que première source/puits de données INTERNE (I-DSQ1) et/ou avec un téléviseur (FA), une enceinte HIFI (HA) ou un appareil électrique (ELG) en tant que deuxième source/puits de données INTERNE (I-DSQ2).

56. Appareil manuel de télécommunication selon la revendication 41,
**caractérisé en ce que**
la station de base (BS) est intégrée en tant que module d'interface réseau (NSSM) dans un ordinateur personnel (PC) sous forme d'une première source/puits de données INTERNE (I-DSQ1), et/ou dans un téléviseur (FA), une enceinte HIFI (HA) ou un appareil électrique (ELG) sous forme de deuxième source/puits de données INTERNE (I-DSQ2).

57. Appareil manuel de télécommunication selon les revendications 41 et 50 ou 41 et 51, **caractérisé en ce que**
les ordres de commande (STK) sont construits de telle manière que l'ordinateur personnel (PC) qui se trouve dans le mode « veille » est activé et mis en fonctionnement.

58. Appareil manuel de télécommunication selon les revendications 41 et 52 ou 41 et 53, **caractérisé en ce que**
les ordres de commande (STK) sont construits de telle manière que le téléviseur (FA), l'enceinte HIFI (HA) ou l'appareil électrique (ELG) qui se trouvent respectivement dans le mode « veille » sont activés et mis en fonctionnement.

59. Appareil manuel de télécommunication selon les revendications 41, 49 et 52 ou 41, 49 et 53, **caractérisé en ce que**
les ordres de commande (STK) sont construits de telle manière qu'un « télévote » peut être effectué.

60. Appareil manuel de télécommunication selon les revendications 41, 49 et 52 ou 41, 49 et 53, **caractérisé en ce que**
les ordres de commande (STK) sont construits de telle manière que le début et la poursuite d'une émission de télévision peuvent être affichés sur l'appareil manuel de télécommunication (MT, MT2, TKHA).
